(19) **Europäisches Patentamt / European Patent Office / Office européen des brevets**

(11) **EP 3 689 941 B1**

(12) **EUROPEAN PATENT SPECIFICATION**

(45) Date of publication and mention of the grant of the patent:
**06.04.2022 Bulletin 2022/14**

(21) Application number: **20157423.3**

(22) Date of filing: **19.06.2015**

(51) International Patent Classification (IPC):
**C08G 64/30** (2006.01)    **C08G 18/44** (2006.01)
**C08G 64/02** (2006.01)

(52) Cooperative Patent Classification (CPC):
(C-Sets available)
**C08G 18/44; C08G 18/246; C08G 18/3206;
C08G 18/664; C08G 18/758; C08G 18/7671;
C08G 64/0208; C08G 64/305; C09D 175/06;
C09J 175/06; D06N 3/0006; D06N 3/0009;
D06N 3/146;** C08G 2170/20; C08G 2410/00;

(Cont.)

(54) **POLYCARBONATEDIOL, METHOD FOR PRODUCING SAME, AND POLYURETHANE PRODUCED USING SAME**

POLYCARBONATDIOL, VERFAHREN ZUR HERSTELLUNG DAVON UND DAMIT HERGESTELLTES POLYURETHAN

POLYCARBONATEDIOL, SON PROCÉDÉ DE PRODUCTION ET POLYURÉTHANE PRODUIT À L'AIDE DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2014 JP 2014127555
23.06.2014 JP 2014128416
24.06.2014 JP 2014129544
24.06.2014 JP 2014129545
24.06.2014 JP 2014129546**

(43) Date of publication of application:
**05.08.2020 Bulletin 2020/32**

(62) Document number(s) of the earlier application(s) in accordance with Art. 76 EPC:
**15810173.3 / 3 159 366**

(73) Proprietor: **MITSUBISHI CHEMICAL CORPORATION**
**Tokyo 100-8251 (JP)**

(72) Inventors:
• **KUSANO, Kazunao**
  **Chiyoda-ku, Tokyo 100-8251 (JP)**
• **WAKABAYASHI, Kazuki**
  **Chiyoda-ku, Tokyo 100-8251 (JP)**
• **NAKAGAWA, Yoko**
  **Chiyoda-ku, Tokyo 100-8251 (JP)**
• **KANAMORI, Yoshikazu**
  **Chiyoda-ku, Toyko 100-8251 (JP)**

(74) Representative: **Vossius & Partner Patentanwälte Rechtsanwälte mbB**
  **Siebertstrasse 3**
  **81675 München (DE)**

(56) References cited:
**WO-A1-2014/104134**

• **DATABASE WPI Week 201359 Thomson Scientific, London, GB; AN 2013-M79517 XP002799083, & JP 2013 166852 A (ASAHI KASEI KK) 29 August 2013 (2013-08-29)**
• **SHIMIZU A ET AL: "Prepn. of polycarbonate diol for e.g. plasticiser - by ester exchange of alkylene carbonate and diol under pressurised carbon di:oxide atmos", WPI / 2017 CLARIVATE ANALYTICS,, vol. 1990, no. 41, 3 September 1990 (1990-09-03), XP002769363,**

(52) Cooperative Patent Classification (CPC): (Cont.)
D06N 2209/14; D06N 2209/1692; D06N 2211/28

C-Sets
**C08G 18/10**

**EP 3 689 941 B1**

**Description**

Technical Field

The present invention relates to polycarbonate diol which is useful as a raw material of polycarbonate-based polyurethane, a method for producing the polycarbonate diol, and polyurethane using the polycarbonate diol.

Background Art

In the related art, a major raw material of a soft segment moiety of polyurethane produced in an industrial scale is classified into an ether type represented by polytetramethylene glycol, a polyesterpolyol type represented by adipate-based ester, and a polylactone type represented by polycaprolactone or a polycarbonate type represented by polycarbonate diol (Non-Patent Literature 1).

Although polyurethane using the ether type among these has excellent hydrolysis resistance, flexibility, and elasticity, heat resistance and weather resistance are unfavorable. Meanwhile, although polyurethane using the polyesterpolyol type has improved heat resistance and weather resistance, it cannot be used depending on the purpose since hydrolysis resistance of an ester group is low.

Meanwhile, although polyurethane using the polylactone type has an excellent grade in hydrolysis resistance compared to polyurethane using the polyesterpolyol type, it is not possible to completely suppress hydrolysis since the polyurethane using the polylactone type has an ester group in the same manner. In addition, although it has been suggested that the polyesterpolyol type, an ether type, and polylactone type are mixed to be used as a raw material of polyurethane, it is not possible to compensate respective defects completely.

In contrast, polyurethane using the polycarbonate type represented by polycarbonate diol has the most satisfactory durability grade in heat resistance and hydrolysis resistance, and is widely used as a film with durability or artificial leather for automobiles, an (aqueous) coating material, or an adhesive.

However, at present, polycarbonate diol which is commercially available in a wide range is polycarbonate diol mainly synthesized from 1,6-hexanediol. However, since this polycarbonate diol has high crystallinity, when the polycarbonate diol is formed into polyurethane, aggregating properties of the soft segment are high, and accordingly there is a problem in that flexibility, elongation, and bending are unfavorable particularly at low temperature, which limits the use thereof. Further, durability such as chemical resistance is not satisfactory as well.

Therefore, in order to solve the aforementioned problem, polycarbonate diol having various structures has been suggested.

For example, there are polycarbonate diol which has improved durability such as chemical resistance by using a cyclic dihydroxy compound such as isosorbide (Patent Literature 1), and polycarbonate diol which has improved flexibility by using a branched dihydroxy compound (Patent Literature 2).

In addition, copolymerized polycarbonate diol using two or more types of dihydroxy compound as a raw material has been known. Specifically, polycarbonate diol obtained by copolymerizing 1,6-hexanediol and 1,4-butanediol as a raw material (Patent Literature 3), polycarbonate diol obtained by copolymerizing 1,6-hexanediol and 1,5-pentanediol as a raw material (Patent Literature 4), polycarbonate diol obtained by copolymerizing 1,3-propanediol and other dihydroxy compounds as a raw material (Patent Literature 5) have been suggested.

Further, it has been known that in transesterification of a dihydroxy compound and a carbonate compound, if an ether bonding amount in polycarbonate diol is decreased by setting a predetermined reaction temperature and polycarbonate diol obtained in this way is used as a raw material of urethane, heat resistance and weather resistance of urethane are improved (Patent Literatures 6 to 8), and the ether bonding amount in polycarbonate diol is correlated with flexibility of urethane at low temperature and oleic acid resistance (Patent Literature 9). Also a polycarbonate diol prepared by reacting 1,4-butanediol, 1,5-pentanediol and 1,6-hexanediol with ethylene carbonate is known (Patent Literature 10).

Citation List

Patent Literature

[Patent Literature 1] JP-A-2014-80590
[Patent Literature 2] JP-A-2012-77280
[Patent Literature 3] JP-A-5-51428
[Patent Literature 4] JP-A-2-289616

[Patent Literature 5] International Publication No. 2002/070584
[Patent Literature 6] International Publication No. 95/027749
[Patent Literature 7] JP-A-2013-249455
[Patent Literature 8] JP-A-2012-184382
[Patent Literature 9] JP-A-2002-179758
[Patent Literature 10] JP-A-2013-166852

Non Patent Literature

[Non-Patent Literature 1] Pages 96 to 106 of "Fundamentals and Applications in Polyurethanes", supervised by MATSUNAGA Katsuji, CMC Publishing CO., LTD., published on November 2006

Summary of Invention

Technical Problem

The polycarbonate diol disclosed in Patent Literature 1 uses a cyclic dihydroxy compound, and accordingly the polyurethane obtained by using the polycarbonate diol tends to have improved chemical resistance. However, since the polycarbonate diol has the cyclic structure, polyurethane obtained using the polycarbonate diol becomes rigid and an effect of improved flexibility is not exhibited.

The polycarbonate diol disclosed in Patent Literature 2 uses a branched dihydroxy compound, and accordingly polyurethane obtained by using the polycarbonate diol tends to have improved flexibility. However, since the polycarbonate diol has the branched structure, there is a tendency that polyurethane obtained using the polycarbonate diol exhibits an effect of improved chemical resistance with difficulty.

The polycarbonate diol disclosed in Patent Literatures 3 to 5 uses a linear dihydroxy compound, and accordingly polyurethane obtained by using the polycarbonate diol maintains chemical resistance, heat resistance, and weather resistance. However, since the polycarbonate diol is copolymerized polycarbonate diol, an effect of improved flexibility can be expected.

However, when the polycarbonate diol is produced by using the linear dihydroxy compound, it has been known that an ether bond in the polycarbonate diol is likely to occur.

The polycarbonate diol disclosed in Patent Literatures 6 to 9 controls an ether boding amount in the polycarbonate diol, and accordingly, it is possible for polyurethane obtained by using this polycarbonate diol to have improved properties such as chemical resistance, heat resistance, weather resistance, and flexibility to a certain degree.

However, in polycarbonate diol disclosed in Patent Literatures 6 to 9, when polyurethane is industrially produced from polycarbonate, in a case where polyurethane is produced by using polycarbonate diol obtained therefrom, polyurethane having desirably and sufficiently satisfactory chemical resistance, heat resistance, and weather resistance cannot be obtained.

An object of the present invention is to provide polycarbonate diol which is useful as a raw material of polyurethane having an excellent balance in physical properties such as chemical resistance, flexibility, heat resistance, and weather resistance, a method for producing polycarbonate diol, and polyurethane using the polycarbonate diol.

Solution to Problem

As a result of thorough studies in order to solve the aforementioned problem, the present inventors have found that polycarbonate diol having a reduced ether bonding amount can improve respective properties such as flexibility, chemical resistance, weather resistance, and heat resistance with a good balance, in comparison with the polycarbonate diol having a conventional ether bonding amount.

The inventors have found that polycarbonate diol having a hydroxyl value of 20 mg-KOH/g to 450 mg-KOH/g, in which a ratio of an ether group to a carbonate group of the polycarbonate diol is 0.1 mol% to 0.7 mol%; the amount of a linear dihydroxy compound having no substituent among dihydroxy compounds obtained by hydrolyzing the polycarbonate diol is 95 mol% or more of the entire dihydroxy compounds; and the average carbon number of the dihydroxy compounds is 3.5 to 5.5, is useful as a raw material of polyurethane having an excellent balance in chemical resistance, flexibility, heat resistance, and weather resistance, thereby completing the present invention.

Namely, gist of the present invention is described in the claims.

Effects of Invention

Polyurethane produced by using the polycarbonate diol of the present invention has properties having an excellent balance in chemical resistance, flexibility, heat resistance, and weather resistance; is suitable for applications for such as an elastic fiber, synthetic or artificial leather, a coating material, or a high performance elastomer; and is extremely useful for industrial purposes.

Mode for Carrying out Invention

Hereinafter, although an embodiment of the present invention will be described in detail, the present invention is not limited to the following embodiment, and can be carried out by various modifications without departing from the gist thereof.

Here, in the specification, "% by mass" and "% by weight", "mass ppm" and "wt ppm", and "parts by mass" and "parts by weight" respectively refer to the same meaning as each other. In addition, a case of describing simply "ppm" indicates "wt ppm".

[1. Polycarbonate diol]

Polycarbonate diol of the present invention has a hydroxyl value of 20 mg-KOH/g to 450 mg-KOH/g, in which a ratio of an ether group to a carbonate group of the polycarbonate diol is 0.1 mol% to 0.7 mol%; the amount of a linear dihydroxy compound having no substituent among dihydroxy compounds obtained by hydrolyzing the polycarbonate diol is 95 mol% or more of the entire dihydroxy compounds; and the average carbon number of the dihydroxy compounds is 3.5 to 5.5.

<1-1. Features of Structure>

The dihydroxy compound which is a raw material of the polycarbonate diol of the present invention is configured such that the amount of a linear dihydroxy compound having no substituent among dihydroxy compounds obtained by hydrolyzing the polycarbonate diol is 95 mol% or more of the entire dihydroxy compounds. Polyurethane obtained by using the polycarbonate diol having this feature has excellent chemical resistance, flexibility, heat resistance, and weather resistance.

The linear dihydroxy compound having no substituent is 95 mol% or more of the entire dihydroxy compounds obtained by hydrolyzing the polycarbonate; 97 mol% or more is preferable; 98% or more is more preferable; and 99% or more is still more preferable. In a case where the linear dihydroxy compound having no substituent is less than 95 mol% in the entire dihydroxy compounds, a balance of physical properties such as chemical resistance, flexibility, heat resistance, and weather resistance physical properties is deteriorated, which is not preferable.

In addition, although the dihydroxy compound may be one type or a plurality of types, a plurality of types is preferable from a viewpoint of improving flexibility of the obtained polyurethane. In a case where the dihydroxy compound is a plurality of types, although polycarbonate diol may be a polycarbonate diol copolymer of the plurality of dihydroxy compounds or a mixture of different types of polycarbonate diol, the polycarbonate diol copolymer is preferable from a viewpoint of improving chemical resistance, flexibility, and heat resistance of the obtained polyurethane. In a case of the polycarbonate diol copolymer, the copolymer may be a block copolymer or a random copolymer. However, a polycarbonate diol copolymer of the random copolymer is more preferable from a viewpoint of improving chemical resistance, flexibility, and heat resistance.

The polycarbonate diol of the present invention is characterized in that a ratio of an ether group to a carbonate group of the polycarbonate diol is 0.1 mol% to 0.7 mol%. In a case where the polycarbonate diol of the present invention is used as polycarbonate diol of a raw material of polyurethane, respective features such as flexibility, chemical resistance, weather resistance, and heat resistance are improved with a good balance in polyurethane obtained by using the polycarbonate diol of the present invention, than the conventional polyurethane. The reason for the above is assumed as follows. An acid content is included in chemicals represented by oleic acid, ethanol, or ethyl acetate. Although the amount thereof is small, in an ether bonding moiety in the polycarbonate diol, the bond tends to be separated by this acid content. Thus, with regard to the chemical resistance in a case of using these chemicals, an effect of chemical resistance of polyurethane is easily exhibited, by reducing the ratio of an ether group in the polycarbonate diol of the present invention. In addition, radical decomposition of the ether bond in the polycarbonate diol caused by heat or formation of a crosslinking structure caused by re-bonding of the decomposed moiety easily causes a change in strength of polyurethane over time. Thus, by reducing the ratio of an ether group in the polycarbonate diol of the present invention, an effect of flexibility or heat resistance in case of the polycarbonate diol is used as a raw material of polyurethane is easily exhibited.

In the polycarbonate diol of the present invention, the ratio of an ether group to a carbonate group in the polycarbonate diol is 0.1 mol% to 0.7 mol%; 0.1 mol% to 0.6 mol% is preferable; 0.1 mol% to 0.5 mol% is more preferable; 0.1 mol% to 0.4 mol% is still more preferable; 0.10 mol% to 0.3 mol% is particularly preferable; and 0.15 mol% to 0.2 mol% is most preferable.

In a case where the ratio of an ether group is less than 0.1 mol%, in production of the polycarbonate diol, the transesterification temperature needs to be lowered, and accordingly, time taken for transesterification is lengthened and productivity is deteriorated, which is not preferable. In a case where the ratio of an ether group exceeds 0.7 mol%, respective features such as chemical resistance, heat resistance, and weather resistance tend to be deteriorated.

In the polycarbonate diol of the present invention, as a method for controlling the ratio of an ether group to a carbonate group in the polycarbonate diol from 0.1 mol% to 0.7 mol%, by using a specific type and a specific amount of respective carbonate compounds used at the time of producing the polycarbonate diol, it is possible to control the ratio of an ether group to a carbonate group in the obtained polycarbonate diol. In addition, a method is exemplified, which adjusts reaction temperature or reaction time at the time of obtaining polycarbonate diol by reacting dihydroxy compounds and carbonate compounds as a raw material, in addition to the type or amount of the carbonate compounds.

It is possible to easily control the ratio of an ether group to a carbonate group in the polycarbonate diol by using these methods alone or combining thereof depending on the target polycarbonate diol.

In the polycarbonate diol of the present invention, since the average carbon number of dihydroxy compounds obtained by hydrolyzing the polycarbonate diol is 3.5 to 5.5, it is possible to obtain satisfactory chemical resistance, flexibility, and heat resistance when the polycarbonate diol is formed into polyurethane. The average carbon number of the dihydroxy compounds is preferably 3.8 to 5.4; 4.0 to 5.3 is more preferable; and 4.5 to 5.2 is still more preferable. In a case where the average carbon number is less than 3.5, flexibility is insufficient, which is not preferable. In addition, in a case where the average carbon number exceeds 5.5, chemical resistance and heat resistance are deteriorated, which is not preferable.

The ratio of an ether group to a carbonate group in the polycarbonate diol of the present invention, a ratio of the linear dihydroxy compound having no substituent among dihydroxy compounds obtained by hydrolysis, and the average carbon number of the dihydroxy compounds can be respectively determined from the result obtained by analyzing dihydroxy compounds obtained by hydrolyzing the polycarbonate diol by heating in the presence of alkali using gas chromatography (hereinafter, referred to as GC).

Specifically, the ratio of an ether group to a carbonate group is calculated from % by weight obtained by analyzing the structure of dihydroxy compounds obtained by hydrolyzing the polycarbonate diol using GC-MS analysis and performing GC analysis of a dihydroxy compound including an ether group and the entire dihydroxy compounds; and a molecular weight of the dihydroxy compounds.

The ratio of the linear dihydroxy compound having no substituent among dihydroxy compounds obtained by hydrolysis to the entire dihydroxy compounds is obtained by calculating a molar ratio from % by weight obtained by analyzing the structure of dihydroxy compounds obtained by hydrolyzing the polycarbonate diol by using GC-MS analysis and performing GC analysis of the linear dihydroxy compound having no substituent and the entire dihydroxy compounds; and a molecular weight of the dihydroxy compounds.

The average carbon number of the dihydroxy compounds is obtained by calculating a molar ratio of a dihydroxy compound to entire dihydroxy compounds, from % by weight obtained by analyzing the structure of dihydroxy compounds obtained by hydrolyzing the polycarbonate diol using GC-MS analysis and performing GC analysis of the respective dihydroxy compounds; and a molecular weight of the dihydroxy compounds. Then, a carbon number and molar ratio of the dihydroxy compounds are calculated.

<1-2. Dihydroxy Compounds>

Among dihydroxy compounds which are raw material of the polycarbonate diol of the present invention, although the linear dihydroxy compound having no substituent may be one type or a plurality of types, two or more types are preferably used in combination. Specific examples thereof include 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, and 1,20-eicosanediol. Among these, from a viewpoint of improving chemical resistance and heat resistance when the polycarbonate diol is formed into polyurethane, the dihydroxy compounds as a raw material of the polycarbonate diol of the present invention preferably include at least one selected from the group consisting of 1,3-propanediol, 1,4-butanediol, and 1,5-pentanediol; more preferably include 1,4-butanediol and/or 1,5-pentanediol; and still more preferably include 1,4-butanediol. In addition, from a viewpoint of improving flexibility when the polycarbonate diol is formed into polyurethane, the dihydroxy compounds as a raw material of the polycarbonate diol of the present invention preferably include at least one selected from the group consisting of 1,9-nonanediol, 1,10-decanediol, 1,11-undecanediol, and 1,12-dodecane diol; more preferably include 1,10-decanediol and/or 1,12-dodecane diol; and still more preferably include 1,10-decanediol.

From a viewpoint of improving flexibility, chemical resistance, and heat resistance when the polycarbonate diol of the present invention is formed into polyurethane, especially, polyurethane for synthetic leather, the dihydroxy compounds as a raw material of the polycarbonate diol of the present invention include at least one dihydroxy compound selected from the group consisting of 1,3-propanediol or 1,4 butanediol (hereinafter, may be abbreviated to as a dihydroxy compound (A)), and polycarbonate diol including at least one dihydroxy compound selected from the group consisting of 1,9-nonane diol, 1,10-decane diol, 1,11-undecane diol, and 1,12-dodecane diol (hereinafter, may be abbreviated to as a dihydroxy compound (B)) is preferable. In addition, the dihydroxy compounds as a raw material of the polycarbonate diol of the present invention most preferably include 1,4-butanediol and 1,10-decanediol.

In a case where the polycarbonate diol of the present invention includes a structural unit derived from the dihydroxy compound (A) and a structural unit derived from the dihydroxy compound (B), it is preferable that a ratio of the structural unit derived from the dihydroxy compound (A) to the structural unit derived from the dihydroxy compound (B) in the entire structural units of the polycarbonate diol of the present invention (hereinafter, may be referred to as "(A):(B)") is (A):(B) = 50:50 to 99:1; 60:40 to 97:3 is more preferable; 70:30 to 95:5 is still more preferable; and 80:20 to 90:10 is most preferable, by a molar ratio. If the ratio of containing the structural unit derived from the dihydroxy compound (A) is too high, flexibility and low temperature feature may be insufficient when the polycarbonate diol is formed into polyurethane. If the ratio of containing the structural unit derived from the dihydroxy compound (A) is too low, chemical resistance may be insufficient when the polycarbonate diol is formed into polyurethane.

It is preferable that the total ratio of the structural unit derived from the dihydroxy compound (A) and the structural unit derived from the dihydroxy compound (B) with respect to the entire structural units of the polycarbonate diol of the present invention is 50 mol% or more; 70 mol% or more is more preferable; 80 mol% or more is still more preferable; 90 mol% or more is particularly preferable; and 95 mol% or more is most preferable, from a viewpoint of obtaining a balance in physical properties such as chemical resistance and low temperature feature of the obtained polyurethane.

In production of the polycarbonate diol of the present invention, dihydroxy compounds (may be referred to as other dihydroxy compounds) other than the linear dihydroxy compound having no substituent may be used as long as the effect of the present invention is not impaired. Specific examples thereof include dihydroxy compounds having a branched chain and dihydroxy compounds having a cyclic group. However, in a case where other dihydroxy compounds are used, a ratio of the other dihydroxy compounds is less than 5 mol%; 3 mol% or less is preferable; 2 mol% or less is more preferable; and 1 mol% or less is still more preferable, in order to effectively obtain an effect of the present invention. If the ratio of a structural unit derived from the other dihydroxy compounds is high, a balance in chemical resistance, flexibility, heat resistance, and weather resistance of polyurethane obtained by using the polycarbonate diol of the present invention may be impaired.

The linear dihydroxy compound having no substituent is preferably derived from plants from a viewpoint of reducing load to an environment. Examples of the applicable dihydroxy compound derived from plants include 1,3-propanediol, 1,4-butanediol, 1,5-pentanediol, 1,9-nonanediol, 1,10-decanediol, 1,11-undecanediol, 1,12-dodecanediol, 1,13-tridecanediol, and 1,20-eicosanediol.

For example, in a case where 1,4-butanediol is used as the dihydroxy compound derived from plants, 1,4-butanediol may be produced by chemical synthesis from succinic acid obtained by a fermentation process, succinic anhydride, succinate, maleic acid, maleic anhydride, maleate, tetrahydrofuran, and γ-butyrolactone, 1,4-butanediol may be directly produced from a fermentation process, or 1,4-butanediol may be produced from 1,3-butadiene obtained by a fermentation process. Among these, a method for directly producing 1,4-butanediol by a fermentation process and a method for obtaining 1,4-butanediol by hydrogenating succinic acid with using a reducing catalyst are effective and preferable.

In addition, in a case of 1,3-propanediol, 1,3-propanediol is obtained by producing 3-hydroxypropionaldehyde from glycerol, glucose, or other saccharides by a fermentation process and then converting 3-hydroxypropionaldehyde into 1,3-propanediol, or directly producing 1,3-propanediol from glucose or other saccharides by a fermentation process.

In addition, 1,10-decanediol can be synthesized by synthesizing sebacic acid from castor oil by alkali fusion and directly hydrogenating sebacic acid or after esterification.

<1-3. Carbonate Compounds>

A carbonate compound which can be used for production of the polycarbonate diol of the present invention (may be referred to as "carbonic acid diester") is not particularly limited as long as the effect of the present invention is not impaired, and examples thereof include dialkyl carbonate, diaryl carbonate, and alkylene carbonate. Among these, from a viewpoint of reactivity and easy control of the ratio of an ether group to a carbonate group in the polycarbonate diol of the present invention, the carbonate compound used for production of the polycarbonate diol of the present invention preferably includes diaryl carbonate.

Specific examples of the carbonate compound include dialkyl carbonate such as dimethyl carbonate, diethyl carbonate, and dibutyl carbonate, diaryl carbonate such as diphenyl carbonate, and alkylene carbonate such as ethylene carbonate, and diphenyl carbonate is preferable.

In a case where dialkyl carbonate or alkylene carbonate is used as the carbonate compound, reactivity tends to be deteriorated compared to diaryl carbonate. In this case, reaction temperature may be increased in order to increase reactivity. However, in this case, the linear dihydroxy compound having no substituent is treated at high temperature, the linear dihydroxy compound easily causes a dehydration reaction from a stereoscopic factor, and an ether group is easily produced by an intermolecular dehydration reaction in a polycarbonate diol skeleton. From the above reason, as a method for controlling the ratio of an ether group to a carbonate group in the polycarbonate diol of the present invention, diaryl carbonate such as diphenyl carbonate as a carbonate compound is preferably included. In addition, as the type of the carbonate compound, one type may be used or two more types may be appropriately used in combination. The ratio to be used in a case of combining two or more types can be appropriately set depending on reactivity.

<1-4. Transesterification Catalyst>

The polycarbonate diol of the present invention can be produced by polycondensation of the dihydroxy compounds and the carbonate compound using transesterification.

In a case where the polycarbonate diol of the present invention is produced, a transesterification catalyst (hereinafter, may be referred to as a catalyst) can be used if necessary to promote polymerization. In this case, if an excessively large amount of catalyst remains in the obtained polycarbonate diol, the catalyst may inhibit the reaction when polyurethane is produced by using the polycarbonate diol or may promote the reaction excessively.

Thus, the catalyst amount remaining in the polycarbonate diol is not particularly limited, and preferably 100 ppm or less, more preferably 50 ppm or less, still more preferably 10 ppm or less, as the content in terms of catalyst metals.

As the transesterification catalyst, a compound which is generally considered to have transesterification ability can be used without any limitation.

Examples of the transesterification catalyst group 1 metal compounds in the long form periodic table (hereinafter, simply referred to as "periodic table") such as lithium, sodium, potassium, rubidium, and caesium; group 2 metal compounds in the periodic table such as magnesium, calcium, strontium, and barium; group 4 metal compounds in the periodic table such as titanium and zirconium; group 5 metal compounds in the periodic table such as hafnium; group 9 metal compounds in the periodic table such as cobalt; group 12 metal compounds in the periodic table such as zinc; group 13 metal compounds in the periodic table such as aluminum; group 14 metal compounds in the periodic table such as germanium, tin, and lead; group 15 metal compounds in the periodic table such as antimony and bismuth; and lanthanide-based metal compounds such as lanthanum, cerium, europium, and ytterbium. Among these, from a viewpoint of increasing transesterification velocity, group 1 metal compounds in the periodic table, group 2 metal compounds in the periodic table, group 4 metal compounds in the periodic table, group 5 metal compounds in the periodic table, group 9 metal compounds in the periodic table, group 12 metal compounds in the periodic table, group 13 metal compounds in the periodic table, and group 14 metal compounds in the periodic table are preferable, and group 1 metal compounds in the periodic table and group 2 metal compounds in the periodic table are more preferable, and group 2 metal compounds in the periodic table are still more preferable. Among the group 1 metal compounds in the periodic table, lithium, potassium, and sodium compounds are preferable, lithium and sodium compounds are more preferable, and a sodium compound is still more preferable. Among the group 2 metal compounds in the periodic table, magnesium, calcium, and barium compounds are preferable, calcium and magnesium compounds are more preferable, and a magnesium compound is still more preferable. These metal compounds are mainly used as hydroxides or salts. Examples of the salts in a case where the metal compounds are used as the salts include halide salts such as chloride, bromide, and iodide; carboxylate such as acetate, formate, and benzoate; sulfonate such as methanesulfonate, toluenesulfonate, and trifluoromethanesulfonate; phosphorus-containing salts such as phosphate, hydrogenphosphate, and dihydrogenphosphate; and acetyl acetate salts. The catalyst metals can be used as alkoxide such as methoxide or ethoxide.

Among these, acetate, nitrate, sulfate, carbonate, phosphate, hydroxide, halide, or alkoxide of at least one metal selected from the group 2 metals in the periodic table can be preferably used, and acetate, carbonate, or hydroxide of the group 2 metals in the periodic table can be more preferably used; acetate, carbonate, or hydroxide of magnesium and calcium can be still more preferably used; acetate of magnesium and calcium can be particularly preferably used; and magnesium acetate can be most preferably used.

<1-5. Molecular Chain Terminal>

A molecular chain terminal of the polycarbonate diol of the present invention is mainly a hydroxyl group. However, in a case of polycarbonate diol obtained by the reaction of the dihydroxy compounds and the carbonate compound, as impurities, partially, the molecular chain terminal may not be a hydroxyl group. As the specific example thereof, the molecular chain terminal is an alkyloxy group or an aryloxy group, which is mostly a structure derived from the carbonate compound.

For example, in a case where diphenyl carbonate is used as the carbonate compound, a phenoxy group (PhO-) may remain as an aryloxy group, in a case where dimethyl carbonate is used, a methoxy group (MeO-) may remain as an alkyloxy group, in a case where diethyl carbonate is used, an ethoxy group (EtO-) may remain, in a case where ethylene carbonate is used, a hydroxyethoxy group ($HOCH_2CH_2O-$) may remain as a molecular chain terminal (Here, Ph represents a phenyl group, Me represents a methyl group, and Et represents an ethyl group).

In the molecular chain terminal of the polycarbonate diol of the present invention, it is preferable that the ratio of the number of terminal groups derived from the carbonate compound is 10 mol% or less; 5 mol% or less is more preferable; 3 mol% or less is still more preferable; and 1 mol% or less is particularly preferable, with respect to the total number of terminal groups.

<1-6. Hydroxyl Value>

The lower limit of the hydroxyl value of the polycarbonate diol of the present invention is 20 mg-KOH/g; 25 mg-KOH/g is preferable; 30 mg-KOH/g is more preferable; and 35 mg-KOH/g is still more preferable. In addition, the upper limit of the hydroxyl value of the polycarbonate diol is 450 mg-KOH/g; 230 mg-KOH/g is preferable; 150 mg-KOH/g is more preferable; 120 mg-KOH/g is still more preferable; 75 mg-KOH/g is still more preferable; 60 mg-KOH/g is particularly preferable; and 45mg-KOH/g is most preferable. If the hydroxyl value is less than the aforementioned lower limit, viscosity may be excessively increased and handling may be difficult when the polycarbonate diol is formed into polyurethane, and if the hydroxyl value exceeds the aforementioned upper limit, physical properties such as flexibility may be insufficient when the polycarbonate diol is formed into polyurethane.

<1-7. Molecular Weight and Molecular Weight Distribution>

It is preferable that the lower limit of the number average molecular weight (Mn) obtained from the hydroxyl value of the polycarbonate diol of the present invention is 250; 300 is more preferable; and 400 is still more preferable. Meanwhile, it is preferable that the upper limit of the number average molecular weight (Mn) of the polycarbonate diol is 5,000; 4,000 is more preferable; and 3,000 is still more preferable. If the Mn of the polycarbonate diol is less than the aforementioned lower limit, flexibility may not be sufficiently obtained when the polycarbonate diol is formed into polyurethane, and if the Mn of the polycarbonate diol exceeds the aforementioned upper limit, viscosity may be increased and handling may be impaired when the polycarbonate diol is formed into polyurethane.

Although the weight average molecular weight/number average molecular weight (Mw/Mn), which is a molecular weight distribution of the polycarbonate diol of the present invention is not particularly limited, it is preferable that the lower limit is 1.5 and 1.8 is more preferable. It is preferable that the upper limit of the weight average molecular weight/number average molecular weight (Mw/Mn) is 3.5 and 3.0 is more preferable. In a case where the molecular weight distribution exceeds the aforementioned range, as the physical properties of polyurethane produced by using the polycarbonate diol, polyurethane tends to be hardened at low temperature and elongation tends to be degraded. If the polycarbonate diol of which the molecular weight distribution is less than the aforementioned range is produced, a highly accurate purification operation may be necessary such as eliminating an oligomer.

The weight average molecular weight is a weight average molecular weight in terms of polystyrene, and the number average molecular weight is a number average molecular weight in terms of polystyrene, and normally, the above can be determined by measurement by Gel Permeation Chromatography (may be simply referred to as GPC).

<1-8. Moisture Amount>

It is preferable that the lower limit of the moisture amount contained in the polycarbonate diol of the present invention is 5 ppm; 10 ppm is more preferable; 20 ppm is still more preferable; and 30 ppm is particularly preferable. Meanwhile, it is preferable that the upper limit of the moisture amount contained in the polycarbonate diol of the present invention is 600 ppm; 500 ppm is more preferable; 300 ppm is still more preferable; and 200 ppm is particularly preferable.

If the moisture amount contained in the polycarbonate diol is less than the aforementioned lower limit, a dehydration step is separately necessary in the production process of the polycarbonate diol, and the cost is increased because of a great load, which is not preferable. Meanwhile, if the moisture amount contained in the polycarbonate diol exceeds the aforementioned upper limit, the moisture reacts with diisocyanate at the time when the polycarbonate diol is formed into polyurethane to produce a byproduct, which results in deterioration in tone of polyurethane or white turbidness and degradation in physical properties, which is not preferable.

The moisture amount of the polycarbonate diol of the present invention increases depending on a leak of air into a reaction system at the time of polymerization of the dihydroxy compounds and the carbonate compound, which are raw materials, or moisture contained in each raw material or catalyst. In addition, the moisture amount is increased by a leak of air into a purification system at the time of the polycarbonate diol obtained by the polymerization reaction is purified by distillation. Furthermore, in a case where the obtained polycarbonate diol is stored, the moisture amount is increased by incorporation of air into a container which is being stored.

Accordingly, in order to control the moisture amount in the polycarbonate diol to the aforementioned range, it is preferable to substitute the inside of the reaction system at the time of polymerization with an inert gas such as nitrogen or the like, or reduce the moisture in various compounds to be supplied to the reaction system such as raw materials and a catalyst to a certain degree. In addition, it is preferable to substitute the inside of the purification system with an inert gas such as nitrogen or the like sufficiently, in order to control the incorporation of air within the purification system. In addition, it is preferable to store polycarbonate diol in a container having nitrogen substituted therewith in advance when the polycarbonate diol obtained after purification is stored, and prevent the leak-in of air.

When the moisture amount of the polycarbonate diol of the present invention is measured, the inside of the polymerization reaction system or purification system is sufficiently substituted with nitrogen, and the air content within the reaction system or purification system is set to 500 ppm or less; preferably set to be 100 ppm or less; more preferably set to be 10 ppm or less; and particularly preferably set to be 1 ppm or less. In addition, the air content within the system can be obtained, for example, by analyzing an oxygen amount in a gas phase within the system and calculating the analyzed value and an oxygen concentration in the air. In addition, in a case where the polycarbonate diol obtained in this way is stored, nitrogen is caused to be flown into the container in advance in order to prevent incorporation of moisture in the air. The moisture amount is measured by coulometric titration or volumetric titration.

<1 -9. Ratio of Used Raw Materials>

When the polycarbonate diol of the present invention is produced, although the use amount of the carbonate compound is not particularly limited, as a molar ratio with respect to the total 1 mole of the entire dihydroxy compounds normally used as a raw material, it is preferable that the lower limit is 0.35; 0.50 is more preferable; and 0.60 is still more preferable, while it is preferable that the upper limit is 1.00; 0.98 is more preferable; and 0.97 is still more preferable. If the use amount of the carbonate compound exceeds the aforementioned upper limit, the ratio of the carbonate compound in which an terminal group of the obtained polycarbonate diol is not a hydroxyl group may be increased or the molecular weight may not be within a predetermined range, and if the use amount of the carbonate compound is less than the aforementioned lower limit, polymerization does not proceed until the polycarbonate diol has a predetermined molecular weight.

<1-10. Every Condition at the time of Polymerization of Polycarbonate Diol>

The polycarbonate diol of the present invention can be obtained by polycondensation of the dihydroxy compounds and the carbonate compound using transesterification. It is preferable that the temperature within the reaction system at the time of polymerization is 120°C to 200°C; 140°C to 190°C is more preferable; and 150°C to 180°C is still more preferable. As the reaction temperature is increased, an ether group tends to be easily produced by an intermolecular dehydration reaction in the polycarbonate diol skeleton, and as the reaction temperature decreases, there is a tendency that polymerization does not proceed until the polycarbonate diol does not have a predetermined molecular weight.

In addition, it is preferable that polymerization time is 1 to 24 hours; 2 to 18 hours is more preferable; and 3 to 12 hours is still more preferable. As the polymerization time increases, an ether group tends to be easily produced by an intermolecular dehydration reaction due to a thermal history, and as the polymerization time decreases, a residual amount of a byproduct derived from carbonate such as phenol and methanol or polycarbonate diol of which the molecular chain terminal is an alkyloxy group or an aryloxy group tends to be increased.

<1-11. Catalyst Inactivator>

As described above, in a case where a catalyst is used at the time of the polymerization reaction, the catalyst normally remains in the obtained polycarbonate diol. When polycarbonate diol is heated by the remaining catalyst, an increase in the molecular weight, change in the composition, or deterioration in the tone may occur, or the reaction of forming polyurethane may not be controlled. In order to control the influence of this remaining catalyst, it is preferable to add, for example, a phosphorous compound having a substantially equimolar amount as that of the used transesterification catalyst to inactivate the transesterification catalyst. Furthermore, after addition, the transesterification catalyst can be effectively inactivated by a heating treatment as described below. As the phosphorous compound, phosphoric acid and phosphorous acid are preferable from a viewpoint of exhibiting a great effect with a small amount, and phosphoric acid is more preferable.

Examples of the phosphorous compound used for inactivation of the transesterification catalyst include inorganic phosphoric acid such as phosphoric acid and phosphorous acid; and organic phosphate ester such as dibutyl phosphate, tributyl phosphate, trioctyl phosphate, triphenyl phosphate, and triphenyl phosphorous acid. These may be used alone or two or more thereof may be used in combination.

The use amount of the phosphorous compound is not particularly limited, and as mentioned above, may be a substantially equimolar amount as that of the used transesterification catalyst. Specifically, it is preferable that the upper limit is 5 moles and 2 moles is more preferable, while it is preferable that the lower limit is 0.6 moles; 0.8 moles is more preferable; and 1.0 mole is still more preferable, with respect to 1 mole of the used transesterification catalyst. In a case where the phosphorous compound is used in the smaller amount than the above, if the polycarbonate diol is heated, an increase in the molecular weight of the polycarbonate diol, change in the composition, or deterioration in the tone may occur, or since inactivation of the transesterification catalyst is not sufficient, for example, when the obtained polycarbonate diol is used as a raw material for producing polyurethane, reactivity of the polycarbonate diol to an isocyanate group may not be sufficiently decreased. In addition, if the phosphorous compound is used in the amount exceeding the aforementioned range, the obtained polycarbonate diol may be colored, or when the polycarbonate diol is used as a raw material for making polyurethane, the polyurethane may be easily hydrolyzed, and further the phosphorous compound may be bled out.

The inactivation of the transesterification catalyst by means of adding the phosphorous compound can be performed at room temperature, and is more effective by a heating treatment. Although the temperature of this heating treatment is not particularly limited, it is preferable that the upper limit is preferably 180°C; 150°C is more preferable; 120°C is still more preferable, and 100°C is particularly preferable, while it is preferable that the lower limit is 50°C; 60°C is more preferable, and 70°C is still more preferable. In a case where the temperature of the heating treatment is lower than the lower limit, it takes time to inactivate the transesterification catalyst, which is not effective, and the degree of inactivation may not be sufficient. Meanwhile, if the temperature of the heating treatment exceeds 180°C, the obtained polycarbonate diol may be colored.

Although the reaction time of the phosphorous compound is not particularly limited, it is normally 0.1 to 5 hours.

<1-12. Residual Monomers and the like>

In a case where aromatic carbonic acid diester, for example, diphenyl carbonate is used as a raw material, phenols are produced as a byproduct during production of the polycarbonate diol. Since phenols are monofunctional compounds, the phenols may be an inhibiting factor at the time of producing polyurethane. Since a urethane bond formed by the phenols has a weak bonding power, the urethane bond may be dissociated by heating in the steps thereafter, and isocyanates or phenols are reproduced, which may cause a failure. Also, since the phenols are stimulating substances, the residual amount of the phenols in the polycarbonate diol is preferably small.

Specifically, it is preferable that the residual amount of the phenols in the polycarbonate diol is 1000 ppm or less; 500 ppm or less is more preferable; 300 ppm or less is still more preferable; and 100 ppm or less is particularly preferable, with respect to the weight ratio of the polycarbonate diol.

In order to reduce the phenols in the polycarbonate diol, it is effective to set pressure of the polymerization reaction of the polycarbonate diol to highly vacuum as an absolute pressure, which is of 1 kPa or less, or perform thin film distillation after polymerization of the polycarbonate diol.

In addition, carbonic acid diester used as a raw material at the time of production may remain in the polycarbonate diol. The residual amount of the carbonic acid diester in the polycarbonate diol is not particularly limited, and a small amount is preferable. It is preferable that the upper limit as the weight ratio with respect to the polycarbonate diol is 5% by weight; 3% by weight is more preferable; and 1% by weight is still more preferable. If the content of the carbonic acid diester of the polycarbonate diol is too large, the reaction at the time of forming polyurethane may be inhibited. Meanwhile, although the lower limit thereof is not particularly limited, and 0.1% by weight is preferable; 0.01% by weight is more preferable; and 0% by weight is still more preferable.

In addition, the dihydroxy compounds used at the time of production may remain in the polycarbonate diol. The residual amount of the dihydroxy compounds in the polycarbonate diol is not particularly limited, and a small amount is preferable. As the weight ratio with respect to the polycarbonate diol, 1% by weight or less is preferable; 0.1% by weight or less is more preferable; and 0.05% by weight is still more preferable. If the residual amount of the dihydroxy compounds of the polycarbonate diol is too large, a molecular length of the soft segment moiety at the time of making polyurethane may be insufficient, and desired physical properties may not be obtained.

In addition, cyclic carbonate (cyclic oligomer) which is produced as a byproduct at the time of production may be contained in the polycarbonate diol. For example in a case where 1,3-propanediol is used, 1,3-dioxane-2-one or cyclic carbonate formed by two or more molecules of the above is produced and may be contained in the polycarbonate diol. These compounds may cause a side reaction in the reaction of forming polyurethane and result in turbidness. Thus, it is preferable to eliminate these compounds as much as possible by setting pressure of the polymerization reaction of the polycarbonate diol to highly vacuum as an absolute pressure, which is of 1 kPa or less, or performing thin film distillation after synthesis of the polycarbonate diol. Although the content of these cyclic carbonate contained in the polycarbonate diol is not particularly limited, 3% by weight or less is preferable; 1% by weight or less is more preferable; and 0.5% by weight or less is still more preferable, as the weight ratio with respect to the polycarbonate diol.

<1-13. Purification of Polycarbonate Diol>

After polymerization of the polycarbonate diol of the present invention, it is preferable to perform purification if necessary in order to eliminate the aforementioned impurities such as a residual monomer. As a purification method, a thin film distillation is preferable because a byproduct of the ether bond is suppressed by shortening purification time. In addition, as a condition of the thin film distillation, it is preferable that distillation time (residence time) is 30 minutes or less; 20 minutes or less is more preferable; 10 minutes or less is still more preferable; and 5 minutes or less is particularly preferable.

Also, at the time of the thin film distillation, it is preferable to perform thin film distillation in the nitrogen atmosphere, and it is preferable to perform thin film distillation while the atmosphere is substituted with nitrogen. The nitrogen substitution is performed such that the air amount into the purification system at that time is 500 ppm or less; 100 ppm or less is preferable; 10 ppm or less is more preferable; and 1 ppm or less is particularly preferable.

In the polycarbonate diol of the present invention, in a case where the dihydroxy compounds including 1,4-butanediol as the raw material are used, in the polycarbonate diol, tetrahydrofuran (hereinafter, may be referred to as THF) produced as a byproduct by cyclodehydration of 1,4-butanediol or decarboxylation and cyclization of an terminal unit of the obtained polycarbonate diol may remain in the polycarbonate diol. If THF remains in the polycarbonate diol, there are problems in that the THF volatilizes at the time of production of polyurethane and has a bad influence on an environment or health, and accordingly it is preferable to eliminate the THF as much as possible.

In the content of the THF contained in the polycarbonate diol of the present invention, it is preferable that the upper limit as the weight ratio with respect to the polycarbonate diol is 200 wt ppm; 150 wt ppm is more preferable; and 120 wt ppm is particularly preferable. In addition, it is preferable that the lower limit is 10 wt ppm; 12 wt ppm is more preferable; and 15 wt ppm is particularly preferable.

[2. Polyurethane]

Polyurethane can be produced by using the aforementioned polycarbonate diol of the present invention.

As a method for producing polyurethane of the present invention using the polycarbonate diol of the present invention, a well-known reaction condition of forming polyurethane for producing polyurethane is normally used.

For example, the polyurethane of the present invention can be produced by reacting the polycarbonate diol of the present invention, polyisocyanate, with a chain extender in the range from room temperature to 200°C.

Also, firstly, the polycarbonate diol of the present invention and excessive polyisocyanate are reacted to each other to produce a prepolymer having an isocyanate group at the terminal, and further a polymerization degree is increased by a chain extender to produce the polyurethane of the present invention.

<2-1. Polyisocyanate>

Examples of the polyisocyanate used when producing the polyurethane by using the polycarbonate diol of the present invention include various well-known aliphatic, alicyclic, and aromatic polyisocyanate compounds.

Examples thereof include aliphatic diisocyanate such as tetramethylene diisocyanate, hexamethylene diisocyanate, 2,2,4-trimethylhexamethylene diisocyanate, 2,4,4-trimethylhexamethylene diisocyanate, lysine diisocyanate, and a dimer diisocyanate in which a carboxyl group of dimer acid is converted into an isocyanate group; alicyclic diisocyanate such as 1,4-cyclohexane diisocyanate, isophorone diisocyanate, 1-methyl-2,4-cyclohexane diisocyanate, 1-methyl-2,6-cyclohexane diisocyanate, 4,4'-dicyclohexyl methane diisocyanate, and 1,3-bis(isocyanate methyl)cyclohexane; and aromatic diisocyanate such as xylylene diisocyanate, 4,4'-diphenyl diisocyanate, 2,4-tolylene diisocyanate, 2,6-tolylene diisocyanate, m-phenylene diisocyanate, p-phenylene diisocyanate, 4,4'-diphenyl methane diisocyanate, 4,4'-diphenyl dimethyl methane diisocyanate, 4,4'-dibenzyl diisocyanate, dialkyl diphenyl methane diisocyanate, tetraalkyl diphenyl methane diisocyanate, 1,5-naphthylene diisocyanate, 3,3'-dimethyl-4,4'-biphenylene diisocyanate, polymethylene polyphenyl isocyanate, phenylene diisocyanate, and m-tetramethyl xylylene diisocyanate. These may be used alone or two or more types thereof may be used in combination.

Among these, 4,4'-diphenyl methane diisocyanate (hereinafter, may be referred to as MDI), hexamethylene diisocyanate, 4,4'-dicyclohexyl methane diisocyanate, and isophorone diisocyanate are preferable from a viewpoint of a preferable balance of physical properties of the obtained polyurethane and from a viewpoint of industrial and commercial availability in a large amount at a low price.

<2-2. Chain Extender>

In addition, a chain extender used in producing the polyurethane of the present invention is a low molecular weight compound having at least two active hydrogen which reacts with an isocyanate group in a case where a prepolymer having an isocyanate group described below is produced, and normally examples thereof include polyol and polyamine.

Specific examples thereof include linear diols such as ethylene glycol, 1,3-propanediol, 1,4-butanediol, 1,5-pentanediol, 1,6-hexanediol, 1,8-octanediol, 1,9-nonanediol, 1,10-decanediol, and 1,12-dodecanediol; diols having a branched chain such as 2-methyl-1,3-propanediol, 2,2-dimethyl-1,3-propanediol, 2,2-diethyl-1,3-propanediol, 2-methyl-2-propyl-1,3-propanediol, 2,4-heptanediol, 1,4-dimethylolhexane, 2-ethyl-1,3-hexanediol, 2,2,4-trimethyl-1,3-pentanediol, 2-methyl-1,8-octanediol, 2-butyl-2-ethyl-1,3-propanediol, and a dimer diol; diols having an ether group such as diethylene glycol and propylene glycol; diols having an alicyclic structure such as 1,4-cyclohexanediol, 1,4-cyclohexane dimethanol, 1,4-dihydroxyethyl cyclohexane; diols having an aromatic group such as xylylene glycol, 1,4-dihydroxyethyl benzene, 4,4'-methylenebis(hydroxyethyl benzene); polyols such as glycerin, trimethylolpropane, and pentaerythritol; hydroxyamines such as N-methylethanolamine and N-ethylethanolamine; polyamines such as ethylene diamine, 1,3-diaminopropane, hexamethylene diamine, triethylene tetramine, diethylene triamine, isophorone diamine, 4,4'-diaminodicyclohexyl methane, 2-hydroxyethyl propylene diamine, di-2-hydroxyethyl ethylene diamine, di-2-hydroxyethyl propylene diamine, 2-hydroxypropyl ethylene diamine, di-2-hydroxypropyl ethylene diamine, 4,4'-diphenylmethane diamine, methylene bis(o-chloroaniline), xylylene diamine, diphenyl diamine, tolylene diamine, hydrazine, piperazine, and N,N'-diaminopiperazine; and water.

These chain extenders may be used alone or two or more thereof may be used in combination.

Among these, from a viewpoint of a preferable balance of physical properties of the obtained polyurethane and from a viewpoint of industrial and commercial availability in a large amount at a low price, 1,4-butanediol, 1,5-pentanediol, 1,6-hexanediol, 1,8-octanediol, 1,9-nonanediol, 1,10-decanediol, 1,4-cyclohexane dimethanol, 1,4-dihydroxyethyl cyclohexane, ethylene diamine, 1,3-diaminopropane, isophorone diamine, and 4,4'-diaminodicyclohexyl methane are preferable.

In addition, a chain extender used when producing a prepolymer having a hydroxyl group described below is a low molecular weight compound having at least two isocyanate groups, and specific examples thereof include the compounds mentioned in <2-1.

Polyisocyanate>.

<2-3. Chain Terminator>

When the polyurethane of the present invention is produced, a chain terminator having one active hydrogen group can be used if necessary, for the purpose of controlling the molecular weight of the obtained polyurethane.

Examples of the chain terminator include aliphatic monools such as methanol having one hydroxyl group, ethanol, propanol, butanol, and hexanol, and aliphatic monoamines such as diethylamine having one amino group, dibutyl amine, n-butylamine, mono ethanol amine, di ethanol amine, and morpholine.

These may be used alone or two or more types thereof may be used in combination.

<2-4. Catalyst>

In the polyurethane formation reaction when the polyurethane of the present invention is produced, an amine-based catalyst such as triethylamine, N-ethyl morpholine, and triethylene diamine, or an acidic catalyst such as acetic acid, phosphoric acid, sulfuric acid, hydrochloric acid, and sulfonic acid, a tin-based compound such as trimethyltin laurate, dibutyltin dilaurate, dioctylthin dilaurate, and dioctyltin dineodecanate, and a well-known urethane polymerized catalyst represented by organic metal salts such as a titanium-based compound, can be used. One type of the urethane polymerized catalyst may be used alone or two or more types thereof may be used in combination.

<2-5. Polyol other than Polycarbonate Diol of the Present Invention>

In the polyurethane formation reaction when the polyurethane of the present invention is produced, the polycarbonate diol of the present invention and polyol other than the polycarbonate diol of the present invention may be used in combination if necessary. Here, polyol other than the polycarbonate diol of the present invention is not particularly limited as long as the polyol is normally used when producing polyurethane, and examples thereof include polyether polyol, polyester polyol, polycaprolactone polyol, polycarbonate polyol other than the one used in the present invention. For example, if the polycarbonate diol of the present invention and polyether polyol are used in combination, it is possible to obtain polyurethane having improved flexibility, which is a feature of the polycarbonate diol of the present invention. Here, it is preferable that the weight ratio of the polycarbonate diol of the present invention with respect to the weight in which the polycarbonate diol of the present invention and polyol other than the polycarbonate diol of the present invention are combined is 70% or more; and 90% or more is more preferable. If the weight ratio of the polycarbonate diol of the present invention is low, a balance in chemical resistance, flexibility, heat resistance, and weather resistance, which are features of the present invention, may be lost.

In the present invention, for production of the polyurethane, the aforementioned polycarbonate diol of the present invention can be modified to be used. Examples of the modification method of the polycarbonate diol include a method of adding an epoxy compound such as ethylene oxide, propylene oxide, and butylene oxide to the polycarbonate diol to introduce an ether group, and a method of reacting the polycarbonate diol with cyclic lactone such as ε-caprolactone or a dicarboxylic acid compound such as adipic acid, succinic acid, sebacic acid, and terephthalic acid, and an ester compound thereof to introduce an ester group.

In the ether modification, viscosity of the polycarbonate diol is decreased due to modification by ethylene oxide, propylene oxide, or the like, which is preferable because of handleability.

In particular, if the polycarbonate diol of the present invention is modified by ethylene oxide, propylene oxide, or the like, crystallinity of the polycarbonate diol is degraded and flexibility at low temperature is improved. In a case of the ethylene oxide modification, since moisture absorbing properties or moisture permeability of the polyurethane produced by using the ethylene oxide-modified polycarbonate diol is increased, performance as artificial leather and synthetic leather may be improved. However, if the addition amount of ethylene oxide or propylene oxide is too large, since all of the physical properties such as mechanical strength, heat resistance, and chemical resistance of the polyurethane produced by the modified polycarbonate diol are degraded, it is suitable that the addition amount with respect to the polycarbonate diol is 5 to 50% by weight; 5 to 40% by weight is preferable; and 5 to 30% by weight is still more preferable.

In addition, in the method of introducing an ester group, viscosity of the polycarbonate diol is decreased due to modification by ε-caprolactone, which is preferable because of handleability. It is suitable that the addition amount of ε-caprolactone with respect to the polycarbonate diol is suitably 5 to 50% by weight; 5 to 40% by weight is preferable; and 5 to 30% by weight is still more preferable. If addition amount of ε-caprolactone exceeds 50% by weight, hydrolysis resistance and chemical resistance of the polyurethane produced by using the modified polycarbonate diol are degraded.

<2-6. Solvent>

For the polyurethane formation reaction when the polyurethane of the present invention is produced, a solvent may be used.

Preferred examples of the solvent include an amide-based solvent such as dimethyl formamide, diethyl formamide, dimethyl acetamide, and N-methyl pyrrolidone; a sulfoxide-based solvent such as dimethyl sulfoxide; a ketone-based solvent such as methyl ethyl ketone, cyclohexanone, methyl isobutyl ketone; an ether-based solvent such as tetrahydrofuran and dioxane; an ester-based solvent such as methyl acetate, ethyl acetate, and butyl acetate; and an aromatic hydrocarbon-based solvent such as toluene and xylene. These solvents may be used alone or two or more types thereof may be used as a mixed solvent.

Among these, preferred organic solvents are methyl ethyl ketone, ethyl acetate, toluene, dimethyl formamide, dimethyl acetamide, N-methyl pyrrolidone, and dimethyl sulfoxide.

In addition, aqueous dispersion polyurethane can be produced from the polycarbonate diol of the present invention, polydiisocyanate, and a polyurethane composition having the chain extender blended therein.

<2-7. Method for Producing Polyurethane>

As a method for producing the polyurethane of the present invention using the aforementioned reagent, in general, an experimentally or industrially used production method can be used.

Examples thereof include a method in which the polycarbonate diol of the present invention, polyol other than the polycarbonate diol, polyisocyanate, and a chain extender are collectively mixed to react to each other (hereinafter, may be referred to as "one step method") and a method in which the polycarbonate diol of the present invention, polyol other than the polycarbonate diol, and polyisocyanate are reacted to each other first to prepare a prepolymer having an isocyanate group at both ends, and then the prepolymer and a chain extender are reacted to each other (hereinafter, may be referred to as "two step method").

The two step method includes a step of reacting the polycarbonate diol of the present invention and polyol other than the polycarbonate diol with 1 equivalent or more of polyisocyanate in advance so as to prepare an isocyanate intermediate at both ends of the moiety corresponding to a soft segment of polyurethane. As such, if the prepolymer is prepared first and then reacted with a chain extender, the molecular weight of the soft segment moiety may be easily adjusted, and in a case where it is necessary to definitely perform a phase separation between the soft segment and a hard segment, the two step method is useful.

<2-8. One Step Method>

The one step method is referred to as a one shot method, and is a method in which the polycarbonate diol of the present invention, polyol other than the polycarbonate diol, polyisocyanate, and a chain extender are collectively put to react to each other.

Although the use amount of the polyisocyanate in the one step method is not particularly limited, in a case where the sum of the total number of hydroxyl groups in the polycarbonate diol of the present invention and polyol other than the polycarbonate diol, and the sum of the total number of hydroxyl groups and amino groups in the chain extender is set to 1 equivalent, it is preferable that the lower limit is 0.7 equivalents; 0.8 equivalents is more preferable; 0.9 equivalents is still more preferable; and 0.95 equivalents is particularly preferable, while the upper limit is 3.0 equivalents; 2.0 equivalents is more preferable; 1.5 equivalents is still more preferable; and 1.1 equivalents is particularly preferable.

If the use amount of polyisocyanate is too large, the unreacted isocyanate group causes a side reaction, and viscosity of the obtained polyurethane is increased too much, and accordingly, handleability tends to become difficult and flexibility tends to be impaired. If the use amount of polyisocyanate is too small, the molecular weight of polyurethane is not increased sufficiently, and there is a tendency that a sufficient strength of polyurethane cannot be obtained.

In addition, although the use amount of the chain extender is not particularly limited, and in a case where the number obtained by abstracting the number of isocyanate groups of polyisocyanate from the total number of hydroxyl groups in the polycarbonate diol of the present invention and polyol other than the polycarbonate diol is set to 1 equivalent, it is preferable that the lower limit is 0.7 equivalents; 0.8 equivalents is more preferable; 0.9 equivalents is still more preferable; and 0.95 equivalents is particularly preferable, while the upper limit is 3.0 equivalents; 2.0 equivalents is more preferable; 1.5 equivalents is still more preferable; and 1.1 equivalents is particularly preferable. If the use amount of the chain extender is too large, the obtained polyurethane tends to be less likely to be dissolved in a solvent and a processing tends to become difficult. If the use amount of the chain extender is too small, the obtained polyurethane is too soft, and a sufficient strength or hardness and elastic recovery performance or elastic maintenance performance may not be obtained, or heat resistance may be deteriorated.

<2-9. Two Step Method>

The two step method is referred to as a prepolymer method, and mainly includes the following methods.

(a) The polycarbonate diol of the present invention, polyol other than the polycarbonate diol, and excessive polyisocyanate are reacted to each other in advance such that the reaction equivalent ratio of the polyisocyanate/(the polycarbonate diol of the present invention and polyol other than the polycarbonate diol) is more than 1 to 10.0 or less to produce a prepolymer whose molecular chain terminal is an isocyanate group, and then a chain extender is added thereto to produce polyurethane.

(b) The polyisocyanate, excessive polycarbonate diol, and polyol other than the polycarbonate diol are reacted to each other in advance such that the reaction equivalent ratio of the polyisocyanate/(the polycarbonate diol of the present invention and polyol other than the polycarbonate diol) is 0.1 or more to less than 1.0 to produce a prepolymer whose molecular chain terminal is a hydroxyl group, and then polyisocyanate having an isocyanate group at the terminal as a chain extender is reacted thereto to produce polyurethane.

The two step method can be carried out without a solvent or in the presence of a solvent.

Production of the polyurethane by the two step method can be performed by any one of methods (1) to (3) described below.

(1) First, polyisocyanate, polycarbonate diol, and polyol other than the polycarbonate diol are directly reacted to each other without using a solvent to synthesize a prepolymer and the prepolymer is used as it is for a chain extension reaction.

(2) A prepolymer is synthesized by the method (1) and then dissolved in a solvent to be used for a chain extension reaction thereafter.

(3) A solvent is used from the first, polyisocyanate, polycarbonate diol, and polyol other than the polycarbonate diol are reacted to each other to perform a chain extension reaction thereafter.

In a case of the method (1), at the time of a chain extension reaction, it is important to obtain polyurethane in the coexistence of a solvent, by dissolving a chain extender in a solvent or dissolving a prepolymer and a chain extender in a solvent at the same time.

The use amount of polyisocyanate in the two step method (a) is not particularly limited, and as the number of isocyanate groups in a case where the total number of hydroxyl groups in the polycarbonate diol and polyol other than the polycarbonate diol is set to 1 equivalent, it is preferable that the lower limit is more than 1.0 equivalent; 1.2 equivalents is more preferable; and 1.5 equivalents is still more preferable, while it is preferable that the upper limit is 10.0 equivalents; 5.0 equivalents is more preferable; and 3.0 equivalents is still more preferable, in the range.

If the use amount of this isocyanate is too large, excessive isocyanate groups cause a side reaction and desired physical properties of polyurethane tend to be less likely to be obtained. If the use amount of this isocyanate is too small, the molecular weight of the obtained polyurethane is not sufficiently increased, and strength or thermal stability may be decreased.

It is preferable that the use amount of the chain extender is not particularly limited, and the lower limit with respect to the 1 equivalent of the number of isocyanate groups contained in the prepolymer is 0.1 equivalents; 0.5 equivalents is more preferable; and 0.8 equivalents is still more preferable, while it is preferable that the upper limit is preferably 5.0 equivalents; 3.0 equivalents is more preferable; and 2.0 equivalents is still more preferable, in the range.

When the aforementioned chain extension reaction is performed, monofunctional organic amines or alcohols may be coexisted for the purpose of adjusting the molecular weight.

In addition, although the use amount of polyisocyanate when a prepolymer whose terminal is a hydroxyl group is produced by the two step method (b) is not particularly limited, and as the number of isocyanate groups in a case where the total number of hydroxyl groups in the polycarbonate diol and polyol other than the polycarbonate diol is set to 1 equivalent, it is preferable that the lower limit is 0.1 equivalents; 0.5 equivalents is more preferable; and 0.7 equivalents is still more preferable, while it is preferable that the upper limit is 0.99 equivalents; 0.98 equivalents is more preferable; and 0.97 equivalents is still more preferable.

If the use amount of this isocyanate is too small, a step until a desired molecular weight is obtained tends to become longer in the following chain extension reaction and production efficiency tends to be decreased. If the use amount of this isocyanate is too large, viscosity is increased too much and flexibility of the obtained polyurethane may be decreased or handleability and productivity may be deteriorated.

Although the use amount of the chain extender is not particularly limited, and in a case where the total number of hydroxyl groups in the polycarbonate diol and polyol other than the polycarbonate diol used for the prepolymer is set to 1 equivalent, as the total equivalents added with the equivalent of isocyanate groups used for the prepolymer, it is preferable that the lower limit is 0.7 equivalents; 0.8 equivalents is more preferable; and 0.9 equivalents is still more preferable, while the upper limit is in the range of preferably less than 1.0 equivalent; 0.99 equivalents is more preferable; and 0.98 equivalents is still more preferable.

When the aforementioned chain extension reaction is performed, monofunctional organic amines or alcohols may be coexisted for the purpose of adjusting the molecular weight.

The chain extension reaction is normally performed at a temperature of 0°C to 250°C and this temperature differs depending on the amount of a solvent, reactivity of the used raw material, and reaction facilities, but is not particularly limited. If the temperature is too low, the reaction may proceed slowly or production time becomes longer because solubility of the raw material or the polymer is low. Also, if the temperature is too high, a side reaction or decomposition of the obtained polyurethane may occur. The chain extension reaction may be performed while performing defoamation under reduced pressure.

In addition, a catalyst or stabilizer can be added if necessary for the chain extension reaction.

Examples of the catalyst include compounds such as triethylamine, tributylamine, dibutyltin dilaurate, stannous octylate, acetic acid, phosphoric acid, sulfuric acid, hydrochloric acid, and sulfonic acid, and one type of the catalyst may be used alone or two or more types thereof may be used in combination. Examples of the stabilizer include 2,6-dibutyl-4-methyl phenol, distearyl thiodipropionate, N,N'-di-2-naphthyl-1,4-phenylene diamine, and tris(dinonyl phenyl)phosphite, and one type of the stabilizer may be used alone or two or more types thereof may be used in combination. In addition, in a case where the chain extender is a compound having high reactivity such as a short chain aliphatic amine, the chain extension reaction may be carried out without adding the catalyst.

<2-10. Aqueous Polyurethane Emulsion>

An aqueous polyurethane emulsion can be produced by using the polycarbonate diol of the present invention.

In this case, when the prepolymer is produced by reacting polyol including the polycarbonate diol and excessive polyisocyanate, a compound having at least one hydrophilic functional group and at least two isocyanate reactive group is mixed therein to form a prepolymer, and the prepolymer is subjected to a neutralization and chlorination step of the hydrophilic functional group, an emulsification step by a moisture addition, and a chain extension reaction step to be an aqueous polyurethane emulsion.

The hydrophilic functional group of the compound having at least one hydrophilic functional group and at least two isocyanate reactive group, which is used herein, is for example, a carboxyl group or a sulfonic acid group, and is a group which can be neutralized by an alkali group. In addition, the isocyanate reactive group is a group which generally forms a urethane bond or urea bond by reacting with isocyanate such as a hydroxyl group, a primary amino group, and a secondary amino group, and these may be mixed within the same molecule.

Specific examples of the compound having at least one hydrophilic functional group and at least two isocyanate reactive group include 2,2'-dimethylolpropionic acid, 2,2-methylolbutyric acid, and 2,2'-dimethylolvaleric acid. In addition, diaminocarboxylic acids, for example, lysine, cystine, and 3,5-diaminocarboxylic acid can be exemplified. These may be used alone or two or more may be used in combination. In a case where these compounds are used in actual, the compounds can be used by neutralizing amines such as trimethylamine, triethylamine, tri-n-propylamine, tributylamine, and tri ethanol amine, or alkali compounds such as sodium hydroxide, potassium hydroxide, and ammonia.

In a case where the aqueous polyurethane emulsion is produced, as the use amount of the compound having at least one hydrophilic functional group and at least two isocyanate reactive group, in order to increase a dispersion capability with respect to water, it is preferable that the lower limit thereof with respect to the total weight of the polycarbonate diol the polyol other than the polycarbonate diol of the present invention is 1% by weight; 5% by weight is more preferable; and 10% by weight is still more preferable. Meanwhile, if this compound is added too much, properties of the polycarbonate diol of the present invention may not be maintained, and accordingly it is preferable that the upper limit is 50% by weight; 40% by weight is more preferable; and 30% by weight is still more preferable.

When the aqueous polyurethane emulsion is produced, in the prepolymer step, the reaction may be performed in the coexistence of a solvent such as methyl ethyl ketone, acetone, or N-methyl-2-pyrrolidone, or without a solvent. In addition, in a case where the solvent is used, it is preferable to remove the solvent by distillation after an aqueous emulsion is produced.

When the aqueous polyurethane emulsion is produced without a solvent using the polycarbonate diol of the present invention as a raw material, it is preferable that the upper limit of the number average molecular weight obtained from the hydroxyl value of the polycarbonate diol is 5,000; 4,500 is more preferable; and 4,000 is still more preferable. In addition, it is preferable that the lower limit of the number average molecular weight is 300; 500 is more preferable; and 800 is still more preferable. If the number average molecular weight obtained from the hydroxyl value exceeds 5,000 or is less than 300, emulsification may become difficult.

In addition, when synthesizing or maintaining the aqueous polyurethane emulsion, emulsification stability may be maintained by using an anionic surfactant represented by higher fatty acid, resin acid, acidic fat alcohol, sulfate, higher alkyl sulfonate, alkylaryl sulfonate, sulfonated castor oil, and sulfosuccinate, a cationic surfactant represented by primary amine salts, secondary amine salts, tertiary amine salts, quaternary amine salts, and pyridinium salts, or a nonionic surfactant represented by a well-known reaction product of ethylene oxide and a long chain aliphatic alcohol or phenols in combination.

In addition, when the aqueous polyurethane emulsion is formed, it is possible to produce an emulsion by mixing water in an organic solvent solution of the prepolymer with mechanical shearing in the presence of an emulsifier without going through the neutralization and chlorination step, if necessary.

The aqueous polyurethane emulsion produced in this way can be used for various purposes. In particular, in recent years, the aqueous polyurethane emulsion is demanded as a raw material of chemical products having a less load to an environment is demanded, and can replace the conventional product for the purpose of not using the organic solvent.

As a specific purpose of the aqueous polyurethane emulsion, for example, use for a coating agent, an aqueous coating material, an adhesive, synthetic leather, or artificial leather is appropriate. In particular, the aqueous polyurethane emulsion produced by using the polycarbonate diol of the present invention has chemical resistance and flexibility, since the emulsion has a structural unit derived from the linear dihydroxy compound having no substituent in the polycarbonate diol, and can be used more effectively as a coating agent or the like, compared to the aqueous polyurethane emulsion using the conventional polycarbonate diol.

<2-11. Additives>

In the polyurethane of the present invention produced by using the polycarbonate diol of the present invention, various additives such as a thermal stabilizer, a photostabilizer, a coloring agent, a filler, a stabilizer, an ultraviolet absorbing agent, an antioxidant, an antitack agent, a flame retardant, an age resister, and an inorganic filler can be added or mixed within the range not impairing the properties of the polyurethane of the present invention.

As a compound which can be used as a thermal stabilizer, phosphorus compounds such as aliphatic, aromatic, or alkyl group-substituted aromatic esters of phosphoric acid and phosphorous acid or hypophosphorous acid derivatives, phenyl phosphonic acid, phenyl phosphinic acid, diphenyl phosphonic acid, polyphosphonate, dialkyl pentaerythritol diphosphite, and dialkyl bisphenol A diphosphate; phenol-based derivatives, in particular, hindered phenol compounds; compounds including sulfur such as thioether-based, dithioate-based, mercaptobenzimidazole-based, thiocarbanilide-based, and thiodipropionate-based compounds; and tin-based compounds such as tin malate and dibutyl tin monoxide can be used.

Specific examples of the hindered phenol compounds include "Irganox 1010" (trade name: manufactured by BASF Japan Ltd.), "Irganox 1520" (trade name: manufactured by BASF Japan Ltd.), and "Irganox 245" (trade name: manufactured by BASF Japan Ltd.).

Examples of the phosphorus compounds include "PEP-36", "PEP-24G", "HP-10" (all of the above are trade names: manufactured by ADEKA Corporation) "Irgafos 168" (trade name: manufactured by BASF Japan Ltd.).

Specific examples of the compounds including sulfur include thioether compounds such as dilauryl thiopropionate (DLTP) and distearyl thiopropionate (DSTP).

Examples of the photostabilizer include benzotriazole-based compounds and benzophenone-based compounds, and specifically, "TINUVIN 622LD" and "TINUVIN 765" (the above are manufactured by Ciba Specialty Chemicals Corporation) and "SANOL LS-2626" and "SANOL LS-765" (the above are manufactured by SANKYO CO., LTD.) can be used.

Examples of the ultraviolet absorbing agent include "TINUVIN 328" and "TINUVIN 234" (the above are manufactured by Ciba Specialty Chemicals Corporation).

Examples of the coloring agent include dyes such as a direct dye, an acidic dye, a basic dye, and a metallic complex salt dye; inorganic pigments such as carbon black, titanium oxide, zinc oxide, iron oxide, and mica; and organic pigments such as coupling azo-based, condensed-azo-based, anthraquinone-based, thioindigo-based, dioxazone-based and phthalocyanine-based pigments.

Examples of the inorganic filler include a short glass fiber, a carbon fiber, alumina, talc, graphite, melamine, and white clay.

Examples of the flame retardant include addition of phosphorus and halogen-containing organic compounds, bromine or chloride-containing organic compounds, ammonium polyphosphate, aluminium hydroxide, or antimony oxide, and a reactive flame retardant.

These additives may be used alone or two or more types may be used in an arbitrary combination and ratio.

As the addition amount of these additives with respect to the weight ratio of the polyurethane, it is preferable that the lower limit is 0.01% by weight; 0.05% by weight is more preferable; and 0.1% by weight is still more preferable, while it is preferable that the upper limit is 10% by weight; 5% by weight is more preferable; and 1% by weight is still more preferable. If the addition amount of the additives is too small, the effect of adding the additives cannot be obtained sufficiently, and if the addition amount of the additives is too large, the additives may be precipitated in the polyurethane or turbidness may occur.

<2-12. Polyurethane Film and Polyurethane Plate>

In a case where a film is produced by using the polyurethane of the present invention, as the thickness of the film, it is preferable that the lower limit is 10 $\mu$m; 20 $\mu$m is more preferable; and 30 $\mu$m is still more preferable, while it is preferable that the upper limit is 1,000 $\mu$m; 500 $\mu$m is more preferable; and 100 $\mu$m is still more preferable.

If the thickness of the film is too large, moisture permeability tends to be not obtained sufficiently, and if the thickness of the film is too small, a pinhole tends to be generated or handling tends to become difficult because the film is easily blocked.

<2-13. Molecular Weight>

The molecular weight of the polyurethane of the present invention is appropriately adjusted depending on its purpose and is not particularly limited. However, it is preferable that the weight average molecular weight (Mw) in terms of polystyrene measured by GPC is 50,000 to 500,000; and 100,000 to 300,000 is more preferable. If the Mw is smaller than the aforementioned lower limit, sufficient strength or hardness may not be obtained and if the Mw is larger than the upper limit, handleability such as workability tends to be impaired.

<2-14. Chemical Resistance>

In the polyurethane of the present invention, for example, in an evaluation according to the method described in Examples described below, it is preferable that the change ratio (%) of the weight of the polyurethane specimen after immersing into chemicals with respect to the weight of the polyurethane specimen before immersing into chemicals is 40% or less; 30% or less is more preferable; and 20% or less is still more preferable.

If this weight change ratio exceeds the aforementioned upper limit, desired chemical resistance may not be obtained.

<2-15. Oleic Acid Resistance>

In the polyurethane of the present invention, for example, in an evaluation according to the method described in Examples described below, it is preferable that the change ratio (%) of the weight of the polyurethane specimen after immersing into oleic acid with respect to the weight of the polyurethane specimen before immersing into oleic acid is 80% or less; 60% or less is more preferable; 50% or less is still more preferable; 45% or less is particularly preferable, and 40% or less is most preferable.

If this weight change ratio exceeds the aforementioned upper limit, sufficient oleic acid resistance may not be obtained.

<2-16. Ethanol Resistance>

In the polyurethane of the present invention, for example, in an evaluation according to the method described in Examples described below, it is preferable that the change ratio (%) of the weight of the polyurethane specimen after immersing into ethanol with respect to the weight of the polyurethane specimen before immersing into ethanol is 25% or less; 23% or less is more preferable; 21% or less is still more preferable; 20% or less is particularly preferable, and 19% or less is most preferable.

If this weight change ratio exceeds the aforementioned upper limit, sufficient ethanol resistance may not be obtained.

<2-17. Ethyl Acetate Resistance>

In the polyurethane of the present invention, for example, in an evaluation according to the method described in Examples described below, it is preferable that the change ratio (%) of the weight of the polyurethane specimen after immersing into ethyl acetate with respect to the weight of the polyurethane specimen before immersing into ethyl acetate is 150% or less; 130% or less is more preferable; and 110% or less is still more preferable, and 100% or less is particularly preferable.

If this weight change ratio exceeds the aforementioned upper limit, sufficient ethyl acetate resistance may not be obtained.

<2-18. Tensile Elongation at Break>

In the polyurethane of the present invention, it is preferable that the lower limit of the tensile elongation at break, which is measured at a temperature of 23°C and relative humidity of 50%, at a chuck-to-chuck distance of 50 mm and a tensile speed of 500 mm/mins, with respect to a strip-shaped sample having a width of 10 mm, a length of 100 mm, and a thickness of about 50 to 100 $\mu$m, is 50%; 100% is more preferable; and 150% is still more preferable, while it is preferable that the upper limit is 900%; 850% is more preferable; and 800% is still more preferable. If the tensile elongation at break is less than the aforementioned lower limit, handleability such as workability tends to be impaired, and if the tensile elongation at break exceeds the aforementioned upper limit, sufficient chemical resistance may not be obtained.

<2-19. 100% Modulus>

In the polyurethane of the present invention, in a case where polyurethane is obtained by reacting 2 equivalents of 4,4'-dicyclohexylmethane diisocyanate with the polycarbonate diol of the present invention and further performing a chain extension reaction using isophorone diamine according to the two step method, it is preferable that the lower limit of 100% modulus, which is measured at a temperature of 23°C and relative humidity of 50%, at a chuck-to-chuck distance of 50 mm and a tensile speed of 500 mm/mins, with respect to a strip-shaped sample having a width of 10 mm, a length of 100 mm, and a thickness of about 50 to 100 $\mu$m, is 0.1 MPa; 0.5 MPa is more preferable; and 1 MPa is still more preferable, while it is preferable that the upper limit is 20 MPa; 10 MPa is more preferable, and 6 MPa is still more preferable. If the 100% modulus is less than the aforementioned lower limit, chemical resistance may not be sufficient, and if the 100% modulus exceeds the aforementioned upper limit, flexibility tends to be insufficient or handleability such as workability tends to be impaired.

Furthermore, it is preferable that the 100% modulus at a temperature of -10°C of the polyurethane of the present invention is 0.5 or more; 1.0 or more is more preferable; 1.5 or more is still more preferable; and 2.0 or more is particularly preferable. In addition, it is preferable that the 100% modulus at a temperature of -10°C is 13.0 or less; 12.5 or less is more preferable; 12.0 or less is still more preferable, 11.5 or less is particularly preferable; and 10.0 or less is most preferable. If the 100% modulus at a temperature of -10°C is less than the aforementioned lower limit, chemical resistance may not be sufficient, and if the 100% modulus at a temperature of -10°C exceeds the aforementioned upper limit, flexibility at low temperature may be insufficient or handleability such as workability may be impaired.

<2-20. Flexibility>

The polyurethane of the present invention has satisfactory flexibility. In the present invention, flexibility of polyurethane can be evaluated according to tensile elongation at break in the tensile test at a temperature of 23°C, 100% modulus, and tensile elongation at break in the tensile test at a temperature of -10°C, 100% modulus.

<2-21. Heat Resistance>

In the polyurethane of the present invention, it is preferable that the lower limit of the weight average molecular weight (Mw) of a heated sample, in which a urethane film having a width of 100 mm, a length of 100 mm, and a thickness of about 50 to 100 μm is heated in a geer oven at a temperature of 120°C for 400 hours, with respect to the weight average molecular weight (Mw) of the sample before heating, is 15%; 20% is more preferable; 30% is still preferable; and 45% is particularly preferable, while it is preferable that the upper limit is 120%; 110% is more preferable; and 105% is still more preferable.

In addition, the change ratio of the stress at the time when the heated sample is 100% elongated at a temperature of 23°C with respect to the stress at the time when the sample before heating is 100% elongated at a temperature of 23°C is preferably within 20%, more preferably within 15%, still more preferably within 10%, and particularly preferably within 5%.

If the heat resistance of the polyurethane is low, the molecular weight is decreased by thermal decomposition or oxidation decomposition or the molecular weight is increased by a crosslinking reaction. The degree of increase or decrease in the molecular weight is preferably small.

<2-22. Glass Transition Temperature>

In the polyurethane of the present invention, in a case where polyurethane is obtained by reacting 2 equivalents of 4,4'-dicyclohexylmethane diisocyanate with the polycarbonate diol of the present invention and further performing a chain extension reaction using isophorone diamine according to the two step method, it is preferable that the lower limit of the glass transition temperature (Tg) of the specific polyurethane whose weight average molecular weight (Mw) is 130,000 to 210,000 in terms of polystyrene measured by GPC is -50°C; -45°C is more preferable; and -40°C is still more preferable, while it is preferable that the upper limit is -20°C; -25°C is more preferable; and -30°C is still more preferable. If the Tg is less than the aforementioned lower limit, chemical resistance may not be sufficient, and if the Tg exceeds the aforementioned upper limit, flexibility may not be sufficient.

<2-23. Polyurethane Solution>

A solution obtained by dissolving the polyurethane of the present invention in an aprotonic solvent (hereinafter, may be referred to as "polyurethane solution") is less likely to be gelated, as the change in viscosity over time is smaller, storage stability is satisfactory, and in addition, since thixotropic properties is small as well, it is convenient to work the solution as a film or the like.

The aprotonic solvent preferably used for the polyurethane solution of the present invention is not particularly limited, and examples thereof include methyl ethyl ketone, methyl isobutyl ketone, ethyl acetate, N,N-dimethyl acetamide, N,N-dimethyl formamide, N-methyl-2-pyrrolidone, and dimethyl sulfoxide, and more preferably, N,N-dimethyl formamide and N,N-dimethyl acetamide are exemplified.

Although the content of the polyurethane in the polyurethane solution is not particularly limited, 1 to 99% by weight is preferable; 5 to 90% by weight is more preferable; 10 to 70% by weight is still more preferable; and 15 to 50% by weight is particularly preferable, with respect to the total weight of the polyurethane solution. By setting the content of the polyurethane in the polyurethane solution to 1% by weight or more, it is not necessary to eliminate a large amount of the solvent, and productivity can be improved. In addition, by setting the content to 99% by weight or less, viscosity of the solution can be controlled and operability or workability can be improved.

It is preferable that the viscosity of the polyurethane solution of the present invention, as a solution viscosity measured according to the method described in Examples described below, is 10 Pa·s or more; 30 Pa·s or more is more preferable; and 50 Pa·s or more is particularly preferable. Meanwhile, it is preferable that the viscosity is 200 Pa·s or less; 190 Pa·s or less is more preferable; 160 Pa·s or less is still more preferable; 150 Pa·s or less is particularly preferable; and 130 Pa·s or less is most preferable. If the viscosity of the polyurethane solution is equal to or more than the aforementioned lower limit, workability of the polyurethane solution at the time of production tends to become easy and sufficient mechanical physical properties tend to be exhibited, and if the viscosity of the polyurethane solution is equal to or less than the upper limit, handleability of the polyurethane solution is improved and productivity is improved, which is preferable.

The polyurethane solution is not particularly limited, and in a case where the polyurethane solution is stored for a long period of time, it is preferable to store the polyurethane solution under an inert gas atmosphere such as nitrogen, argon, or the like.

<2-24. Usage>

Since the polyurethane of the present invention has excellent chemical resistance, and satisfactory flexibility, heat resistance, and weather resistance, the polyurethane of the present invention can be widely used for a foam, an elastomer, an elastic fiber, a coating material, a fiber, a pressure sensitive adhesive, an adhesive, a floor material, a sealant, a medical material, artificial leather, synthetic leather, a coating agent, an aqueous polyurethane coating material, an active energy ray curable resin composition, or the like.

In particular, if the polyurethane of the present invention is used for artificial leather, synthetic leather, aqueous polyurethane, an adhesive, an elastic fiber, a medical material, a floor material, a coating material, a coating agent, or the like, since the polyurethane of the present invention has a good balance in chemical resistance, flexibility, heat resistance, and weather resistance, satisfactory properties such as high durability, sufficient flexibility, and strong resistance to a physical impact can be imparted to a part where a human skin contacts or an agent for cosmetics or rubbing alcohol is used. In addition, the polyurethane of the present invention can be appropriately used for automobiles where heat resistance is required or outdoor purposes where weather resistance is required.

The polyurethane of the present invention can be used for a casting polyurethane elastomer. Specific examples of the use include rolls such as rolling roll, papermaking roll, office equipment and pretension roll; solid tires and casters for a forklift, an automotive vehicle new tram, a carriage, and a carrier; and industrial products such as conveyor belt idler, guide roll, pulley, steel pipe lining, rubber screen for ore, gears, connection ring, liner, impeller for pump, cyclone cone and cyclone liner. In addition, the polyurethane of the present invention can be used for belts for OA equipment, paper feed rolls, cleaning blades for copying, snowplows, toothed belts, and surf rollers.

In addition, the polyurethane of the present invention can be applied to the use as a thermoplastic elastomer. For example, the polyurethane of the present invention can be used for tubes or hoses in a pneumatic component used in the food and medical fields, a coating apparatus, an analytical instrument, a physicochemical apparatus, a metering pump, a water treatment apparatus, an industrial robot, spiral tubes, and fire hoses. In addition, the polyurethane of the present invention can be used for belts such as round belt, V-belt, and flat belt, in various transmission mechanisms, spinning machines, packaging devices, and printing machines. In addition, the polyurethane of the present invention can be used for heel tops and shoe soles of footwear, device parts such as cup ring, packing, ball joint, bushing, gear and roll, sports goods, leisure goods, and a wristwatch belt. Examples of automotive parts include oil stoppers, gear boxes, spacers, chassis parts, interior trims, and tire chain substitutes. In addition, the polyurethane of the present invention can be used for films such as key board film and automotive film, curl cords, cable sheaths, bellows, conveying belts, flexible containers, binders, synthetic leathers, dipping products, and adhesives.

The polyurethane of the present invention can be applied to the use as a solvent-based two-pack coating material, and can be applied to wood products such as musical instrument, family Buddhist altar, furniture, decorative plywood, and sports goods. In addition, the polyurethane of the present invention can be used as a tar-epoxy-urethane, for automotive repair.

The polyurethane of the present invention can be used as components of a moisture-curable one-pack coating material, a block isocyanate-based solvent coating material, an alkyd resin coating material, a urethane-modified synthetic resin coating material, an ultraviolet-curable coating material, and an aqueous urethane coating material, and for example, can be applied to coating materials for plastic bumper, strippable paints, coating agents for magnetic tape, overprint varnishes for floor tile, floor material, paper, and wood grain printed film, varnishes for wood, coil coats for high processing, optical fiber protective coatings, solder resists, topcoats for metal printing, base coats for vapor deposition, and white coats for food can.

The polyurethane of the present invention, as a pressure sensitive adhesive or an adhesive, can be used as components food packaging, shoes, footwear, magnetic tape binders, decorative paper, wood, and structural members. In addition, the polyurethane of the present invention can be used as components of low-temperature adhesives or hot-melt adhesives.

The polyurethane of the present invention can be used for, as a binder, magnetic recording mediums, inks, castings, burned bricks, grafting materials, microcapsules, granular fertilizers, granular agrochemicals, polymer cement mortars, resin mortars, rubber chip binders, reclaimed foams, and glass fiber sizings.

The polyurethane of the present invention can be used for, as a component of a fiber processing agent, shrink proofing, crease proofing, and water repellent finishing.

The fibrillization method in a case where the polyurethane of the present invention is used as an elastic fiber can be carried out without a particular limitation, as long as spinning is possible. For example, a melt spinning method can be adopted, in which the polyurethane is formed to be a pellet first, and then melted and spun through a direct spinneret. In a case where the elastic fiber is obtained from the polyurethane of the present invention by melt spinning, it is preferable that the spinning temperature is 250°C or less; and 200°C to 235°C is more preferable.

The polyurethane elastic fiber of the present invention can be used as a bare yarn or can be used as a coated yarn by being coated with other fibers. As the other fibers, well-known fibers such as polyamide fibers, wool, cotton, and polyester fibers can be exemplified, and among these, polyester fibers are preferably used in the present invention. In addition, the polyurethane elastic fiber of the present invention may contain a dyeing type dispersion dye.

The polyurethane of the present invention can be used for, as a sealant or caulking material, concrete walls, induced joints, peripheries of sash, wall-type precast concrete (PC) joints, autoclaved light-weight concrete (ALC) joints, board joints, sealants for composite glass, heat-insulating sash sealants, and automotive sealants.

The polyurethane of the present invention can be used as medical materials, and can be used for, as blood-compatible materials such as tubes, catheters, artificial hearts, artificial blood vessels and artificial valve and as disposable elements such as catheters, tubes, bags, surgical gloves and artificial kidney potting material.

The polyurethane of the present invention can be used as raw materials of UV curable-type coating materials, electron beam curable-type coating materials, photosensitive resin compositions for flexographic plates, and photocurable-type optical fiber coating material compositions by modifying the terminal.

<2-25. Polyurethane for Synthetic Leather and Synthetic Leather using Polyurethane>

The polyurethane obtained by reacting a compound containing two or more isocyanate groups in one molecule and a chain extender using the polycarbonate diol of the present invention can be appropriately used as polyurethane for synthetic leather.

In addition, as a method for producing synthetic leather using the polyurethane for synthetic leather of the present invention, a well-known method can be used, for example, synthetic leather is produced by a method disclosed in "Artificial leather and Synthetic leather, The Japan Research Association for Textile End-Uses (2010)".

In general, synthetic leather indicates a woven fabric or knitted fabric as a base material, and may be distinguished as another structure from artificial leather using a non-woven fabric as a base material. However, in recent years, synthetic leather and artificial leather are not distinguished strictly because a woven fabric or knitted fabric is attached to a non-woven fabric in order to impart strength. The polyurethane for synthetic leather of the present invention can be applied to polyurethane for artificial leather in the same manner and includes compositions which are distinguished for synthetic leather and artificial leather, and an effect of the present invention is exhibited from both compositions.

Specifically, the synthetic leather using the polyurethane for synthetic leather of the present invention is produced by a method in which a micro porous layer containing a polyurethane resin is formed on a ground fabric which is a base material and laminating a polyurethane resin for a skin layer via an adhesive layer, or in which a polyurethane resin is contained on a base material having a resin such as polyurethane filled therein and further laminating a micro porous layer thereon. The polyurethane of the present invention may be applied or immersed into the aforementioned base material, may be contained in the adhesive layer, may be used as a skin layer, or may be used for other layers.

As the base material, a ground fabric can be used, and specifically, a knitted fabric, a woven fabric, and a non-woven fabric which is composed of single fiber or mixed spun fiber including synthetic fiber such as polyester, polyamide, polyacrylonitrile, polyolefin, and polyvinyl alcohol, natural fiber such as cotton and hemp, regenerated fiber such as rayon, staple fiber, and acetate, thereof; or multicomponent fiber modified to ultra-fine fiber by dissolving at least one component or dividing two-component fiber.

The ground fabric may be napped. Napping may be conducted on a single side or both sides. In addition, the ground fabric may have not only a single layer but also a multilayer structure composed of a plurality of fibers. In addition, knitwear with the napped surface may be used as the base material.

The aforementioned base material may have a micro porous layer. A wet micro porous layer is generally produced by a ground fabric immersion method. For example, the ground fabric is immersed into a dimethyl formamide solution containing the polyurethane of the present invention, or applying the solution to the ground fabric, coagulating the fabric in water to remove a solvent and water, and then drying the fabric with hot air having a temperature of about 120°C, so as to form the wet micro porous layer having excellent surface smoothness.

It is preferable that the thickness of the wet micro porous layer is 50 to 400 $\mu$m; and 100 to 300 $\mu$m is more preferable. The optimal flexibility and voluminousness as synthetic leather are achieved in this thickness range.

The polyurethane of the present invention can be used for an adhesive layer. A crosslinking agent, and if necessary, a crosslinking promoter may be added to the adhesive used for the adhesive layer.

The polyurethane of the present invention may be used for a skin layer.

In this case, the polyurethane of the present invention may be used as it is for the skin layer, or the skin layer may be formed by using a skin layer blending solution, which is obtained by mixing other resins, an antioxidant, and an ultraviolet absorbing agent with the polyurethane of the present invention to produce a polyurethane solution, and mixing a coloring agent and an organic solvent with the polyurethane solution. In the polyurethane solution, in addition to the above, a hydrolysis preventing agent, a pigment, a dye, a flame retardant, a filling material, or a crosslinking agent can be added, if necessary.

Examples of other resins include polyurethane other than the polyurethane of the present invention, a poly(meth)acryl resin, a vinyl chloride-vinyl acetate-based copolymer, a vinyl chloride-vinyl propionate copolymer, a polyvinyl butyral-based resin, a cellulose-based resin, a polyester resin, an epoxy resin, a phenoxy resin, and a polyamide resin.

Examples of the crosslinking agent include polyisocyanate compounds such as organic polyisocyanate, crude MDI, toluene diisocyanate (TDI) adduct of trimethylolpropane, triphenyl methane triisocyanate.

The skin layer blending solution including the polyurethane of the present invention is applied to a release material, heated, and dried to form the skin layer having a desired thickness. Thereafter, an adhesive is applied thereto to form an adhesive layer, a ground fabric such as a napped fabric is attached thereto to be dried, and then aged for several days at room temperature. After that, a release material is peeled off to obtain synthetic leather.

Properties of the synthetic leather using the polyurethane for synthetic leather of the present invention can be evaluated by detecting a dynamic friction coefficient (MIU) and standard deviation (MMD) of the dynamic friction coefficient of a KES test which is shown in Examples described below and digitizing wetness or sliminess from the MIU value and the MIU/MMD value obtained by dividing the MMD value by the MIU value. If the MIU value is large and the MIU/MMD is large, the dynamic friction coefficient is large, the synthetic leather has wetness and less roughness, which imparts a smooth feeling and indicates that wetness or sliminess is satisfactory. It is preferable that the MIU value is 1.7 or more; 1.9 or more is more preferable; 2.0 or more is still more preferable; and 2.1 or more is particularly preferable. In addition, it is preferable that the MIU/MMD value is 67 or more; 69 or more is more preferable; 70 or more is still more preferable; 73 or more is particularly preferable; and 75 or more is most preferable.

In a touch feeling test according to the method shown in Examples, the synthetic leather using the polyurethane for synthetic leather of the present invention has preferably 2 points or more, more preferably 3 points or more, and still more preferably 4 points or more.

A mechanism which causes the synthetic leather obtained by using the polyurethane for synthetic leather of the present invention to have a satisfactory touch feeling such as wetness and sliminess is not clear but the mechanism is assumed as follows. The polyurethane for synthetic leather of the present invention has high flexibility and easily follows the shape of the target with which the polyurethane is in contact, such as unevenness, and the portion which is in contact with the polyurethane may be sunk. Thus, the dynamic friction coefficient when the target to be in contact with the polyurethane is smoothened on the polyurethane surface, that is, resistance becomes large. In addition, since an intermolecular force with respect to a contact object having relatively high polarity such as fingers of a human is small and low affinity, the synthetic leather comes to have a smooth feeling having less unevenness or entanglement. Accordingly, when the synthetic leather is in contact with finger of a human, the leather is smooth although having a large resistance, and it is assumed that that is why the touch feeling such as wetness or sliminess is satisfactory.

In an oleic acid resistance test according to the method shown in Examples, the synthetic leather using the polyurethane for synthetic leather of the present invention has preferably 3 points or more, more preferably 4 points or more, and most preferably 5 points.

In the synthetic leather using the polyurethane for synthetic leather of the present invention, a rubbing resistance according to the method shown in Examples is preferably 2 points or more, more preferably 3 points or more, and still more preferably 4 points or more.

The synthetic leather obtained by using the polyurethane for synthetic leather of the present invention can be used for automobile interior materials, furniture, garment, shoes, and bags.

<2-26. Urethane(meth)acrylate-based Oligomer>

A urethane(meth)acrylate-based oligomer can be produced by addition-reacting polyisocyanate with hydroxyalkyl(meth)acrylate using the polycarbonate diol of the present invention. In a case where polyol and a chain extender, which are other raw material compounds, are used in combination, the urethane(meth)acrylate-based oligomer can be produced by further addition-reacting these other raw material compounds with polyisocyanate.

In addition, in the present invention, in a case where "(meth)acryl" such as (meth)acrylate and (meth)acrylic acid is described, (meth)acryl means acryl and/or methacryl.

In addition, the content ratio of the respective raw material compounds at the time of producing the oligomer is substantially the equal to or the same as that in the composition of the target urethane(meth)acrylate-based oligomer.

Normally, the amount of all isocyanate groups in the urethane(meth)acrylate-based oligomer and the amount of all functional groups which react with an isocyanate group such as a hydroxyl group and an amino group are theoretically the equimolar amount.

When the urethane(meth)acrylate-based oligomer is produced, it is usual that the use amount of hydroxyalkyl(meth)acrylate is 10 mol% or more; 15 mol% or more is preferable; 25 mol% or more is still more preferable, while 70 mol% or less is usual; and 50 mol% or less is preferable, with respect to the total use amount of hydroxyalkyl(meth)acrylate, polycarbonate diol, and the compounds including a functional group which reacts with isocyanate, which are the other raw material compounds used if necessary, for example, polyol and a chain extender. According to this ratio, it is possible to control the molecular weight of the obtained urethane(meth)acrylate-based oligomer. If the ratio of hydroxyalkyl(meth)acrylate is too large, the molecular weight of the urethane(meth)acrylate-based oligomer tends to become smaller, and if the ratio is small, the molecular weight tends to become large.

The use amount of polycarbonate diol with respect to the total use amount of polycarbonate diol and polyol is preferably set to 25 mol% or more; 50 mol% or more is more preferable; and 70 mol% or more is still more preferable. If the use amount of polycarbonate diol is equal to or more than the aforementioned lower limit, hardness and contamination resistance of the obtained cured product tend to become satisfactory, which is preferable.

In addition, the use amount of polycarbonate diol with respect to the total amount of polycarbonate diol and polyol is preferably set to 10% by mass or more; 30% by mass or more is more preferable; 50% by mass or more is still more preferable; and 70% by mass or more is particularly preferable. If the use amount of polycarbonate diol is equal to or more than the aforementioned lower limit, viscosity of the obtained composition tends to be decreased, workability tends to be improved, and mechanical strength and hardness, or abrasion resistance of the obtained cured product tends to be improved, which is preferable.

Furthermore, the use amount of polycarbonate diol with respect to the total amount of polycarbonate diol and polyol is preferably set to 25 mol% or more; 50 mol% or more is more preferable; and 70 mol% or more is still more preferable. If the use amount of polycarbonate diol is equal to or more than the aforementioned lower limit, elongation and weather resistance of the obtained cured product tend to be improved, which is preferable.

Furthermore, in a case where the chain extender is used, the use amount of polyol with respect to the total use amount of the compounds in which polycarbonate diol, polyol, and the chain extender are combined is preferably set to 70 mol% or more; 80 mol% or more is more preferable; 90 mol% or more is still more preferable; and 95 mol% or more is particularly preferable. If the polyol amount is equal to or more than the aforementioned lower limit, liquid stability tends to be improved, which is preferable.

At the time of production of the urethane(meth)acrylate-based oligomer, a solvent can be used for the purpose of adjusting viscosity. One type of the solvent may be used alone or two or more types may be used in mixture. Any well-known solvent can be used as the solvent. Preferred examples of the solvent include toluene, xylene, ethyl acetate, acetic acid butyl, cyclohexanone, methyl ethyl ketone, and methyl isobutyl ketone. Normally, the solvent can be used in the amount of less than 300 parts by mass with respect to 100 parts by mass of a solid content within a reaction system.

At the time of production of the urethane(meth)acrylate-based oligomer, the total content of the produced urethane(meth)acrylate-based oligomer and the raw material compounds thereof with respect to the total amount of the reaction system is preferably set to 20% by mass or more; and 40% by mass or more is more preferable. In addition, the upper limit of the total content is 100% by mass. If the total content of the produced urethane(meth)acrylate-based oligomer and the raw material compounds thereof is 20% by mass or more, a reaction velocity tends to become high and production efficiency is improved, which is preferable.

At the time of production of the urethane(meth)acrylate-based oligomer, an addition reaction catalyst can be used. Examples of this addition reaction catalyst include dibutyl tin laurate, dibutyl tin dioctoate, dioctyl tin dilaurate, and dioctyl tin dioctoate. One type of the addition reaction catalyst may be used alone or two or more types may be used in mixture. Among these, the addition reaction catalyst is preferably dioctyl tin dilaurate from a viewpoint of environment adaptability, catalytic activity, and storage stability.

It is usual that the upper limit of the addition reaction catalyst with respect to the total amount of the produced urethane(meth)acrylate-based oligomer and raw material compounds thereof is 1,000 ppm; and 500 ppm is preferable, while it is usual that the lower limit is 10 ppm; and 30 ppm is preferable.

In addition, at the time of production of the urethane(meth)acrylate-based oligomer, in a case where a (meth)acryloyl group is included in the reaction system, a polymerization inhibitor can be used in combination. Examples of the polymerization inhibitor include phenols such as hydroquinone, methyl hydroquinone, hydroquinone monoethyl ether, and dibutyl hydroxytoluene, amines such as phenothiazine and diphenylamine, copper salts such as copper dibutyl dithiocarbamate, manganese salts such as manganese acetate, nitro compounds, and nitroso compounds. One type of the polymerization inhibitor may be used alone or two or more types may be used in mixture. Among these, the polymerization inhibitor is preferably phenols.

It is usual that the upper limit of the polymerization inhibitor with respect to the total amount of the produced urethane(meth)acrylate-based oligomer and raw material compounds thereof is 3,000 ppm; 1,000 ppm is preferable; and 500 ppm is particularly preferable, while it is usual that the lower limit is 50 ppm; and 100 ppm is preferable.

At the time of production of the urethane(meth)acrylate-based oligomer, it is usual that the reaction temperature is 20°C or more; 40°C or more is preferable; and 60°C or more is more preferable. If the reaction temperature is equal to or more than 20°C or more, a reaction velocity tends to become high and production efficiency is improved, which is preferable. In addition, the reaction temperature is normally 120°C or less; and 100°C or less is preferable. If the reaction temperature is 120°C or less, a side reaction such as an allophanation reaction is less likely to occur, which is preferable. In addition, in a case where the solvent is included in the reaction system, the reaction temperature is preferably equal to or less than the boiling point of the solvent, in a case where (meth)acrylate is included, from the viewpoint of preventing reaction of a (meth)acryloyl group, it is preferable that the reaction temperature is 70°C or less. The reaction time is normally about 5 to 20 hours.

It is preferable that the number average molecular weight of the obtained urethane (meth)acrylate-based oligomer is 500 or more; 1,000 or more is more preferable, while 10,000 or less is preferable; 5,000 or less is more preferable; and 3,000 or less is still more preferable. When the number average molecular weight of the urethane (meth)acrylate-based oligomer is equal to or more than the aforementioned lower limit, the obtained cured film has good three-dimensional processing suitability, and the balance between the three-dimensional processing suitability and the contamination resistance tends to become excellent, which is preferable. When the number average molecular weight of the urethane (meth)acrylate-based oligomer is equal to or less than the aforementioned upper limit, the contamination resistance of the cured film obtained from the composition tends to become satisfactory, and the balance between the three-dimensional processing suitability and the contamination resistance tends to become excellent, which is preferable. It is presumed that this is because the three-dimensional processing suitability and the contamination resistance are dependent on the distance between crosslinking points in a network structure, when the distance is long, the structure is a soft and easily elongated to afford excellent three-dimensional processing suitability, and when the distance is short, the network structure is a rigid structure to afford excellent contamination resistance.

<2-27. Polyester-based Elastomer>

Furthermore, the polycarbonate diol of the present invention can be used as a polyester-based elastomer. The polyester-based elastomer is a copolymer configured of a hard segment mainly composed of aromatic polyester and a soft segment mainly composed of an aliphatic polyether, aliphatic polyester, or an aliphatic polycarbonate. If the polycarbonate diol of the present invention is used as a constituent component of the soft segment, physical properties such as heat resistance and water resistance are excellent, compared with the case of using an aliphatic polyether or aliphatic polyester. In addition, even compared with a conventional polycarbonate diol, the polycarbonate ester elastomer has fluidity during melting, that is, a melt flow rate suitable for blow molding and extrusion molding, and is excellent in the balance with the mechanical strength and other physical properties, and this elastomer can be suitably used as a various molding materials including a fibber, a film and a sheet, for example, as a molding material for an elastic fiber, a boot, a gear, a tube, and a packing. Specifically, the elastomer can be effectively applied to usage requiring heat resistance and durability, such as joint boot of automobiles and home electric appliance parts, and wire coating materials.

<2-28. Active Energy Ray Curable-Polymer Composition>

The active energy ray-curable polymer composition of the present invention containing the aforementioned urethane (meth)acrylate-based oligomer will be described below.

In the active energy ray-curable polymer composition of the present invention, the calculated network molecular weight between crosslinking points of the composition is preferably from 500 to 10,000.

In the present specification, the calculated network molecular weight between crosslinking points of the composition indicates an average value of the molecular weight between active energy ray reactive groups (hereinafter, may be referred to as "crosslinking point") forming a network structure in the entire composition. The calculated network molecular weight between crosslinking points is correlated with the network area at the formation of a network structure and as the calculated network molecular weight between crosslinking points is larger, the crosslinking density decreases. In the reaction by active energy ray curing, a linear polymer is formed in a case where a compound having only one active energy ray reactive group (hereinafter, may be referred to as "monofunctional compound") is reacted, and on the other hand, a network structure is formed when a compound having two or more active energy ray reactive groups (hereinafter, may be referred to as "polyfunctional compound") is reacted.

Therefore, an active energy ray reactive group contained in a polyfunctional compound is a crosslinking point, calculation of the calculated network molecular weight between crosslinking points is centered on a polyfunctional compound having a crosslinking point, and the calculated network molecular weight between crosslinking points is calculated by dealing with a monofunctional compound as effective in extending the molecular weight between crosslinking points contained in a polyfunctional compound. In addition, calculation of the calculated network molecular weight between crosslinking points is performed on the assumption that all active energy ray reactive groups have the same reactivity and all active energy ray reactive groups undergo a reaction by the irradiation with an active energy ray.

In a polyfunctional compound composition of a single system where only one polyfunctional compound undergoes a reaction, the calculated network molecular weight between crosslinking points is two times the average molecular weight per one active energy ray reactive group contained in a polyfunctional compound. For example, the calculated network molecular weight between crosslinking points is $(1,000 / 2) \times 2 = 1,000$ in the case of a bifunctional compound having a molecular weight of 1,000 and is $(300 / 3) \times 2 = 200$ in the case of a trifunctional compound having a molecular weight of 300.

In a polyfunctional compound composition of a mixed system where a plurality of polyfunctional compounds undergo a reaction, the calculated network molecular weight between crosslinking points of the composition is an average value of calculated network molecular weights between crosslinking points, of respective single systems with respect to the number of all active energy ray reactive groups contained in the composition. For example, in a composition composed of a mixture containing 4 moles of a bifunctional compound having a molecular weight of 1,000 and 4 moles of a trifunctional compound having a molecular weight of 300, the number of all active energy ray reactive groups in the composition is $2 \times 4 + 3 \times 4 = 20$, and the calculated network molecular weight between crosslinking points of the composition is $\{(1,000 / 2) \times 8 + (300 / 3) \times 12\} \times 2 / 20 = 520$.

In the case of containing a monofunctional compound in the composition, assuming that the reaction is performed to add an equimolar amount of a polyfunctional compound to each active energy ray reactive group (that is, crosslinking point) and position a monofunctional compound at the center of a molecular chain formed by linking the monofunctional compound to a crosslinking point, computationally, the extended length of molecular chain by a monofunctional compound at one crosslinking point is half of a value obtained by dividing the total molecular weight of monofunctional compounds by the number of all active energy ray reactive groups of polyfunctional compounds in the composition. Here, since the calculated network molecular weight between crosslinking points is considered to be two times the average molecular weight per one crosslinking point, the extended length by a monofunctional compound, with respect to the calculated network molecular weight between crosslinking points calculated in a polyfunctional compound, is a value obtained by dividing the total molecular weight of monofunctional compounds by the number of all active energy ray reactive groups of polyfunctional compounds in the composition.

For example, in a composition composed of a mixture containing 40 moles of a monofunctional compound having a molecular weight 100 and 4 moles of a bifunctional compound having a molecular weight 1,000, the number of active energy ray reactive groups of the polyfunctional compound is $2 \times 4 = 8$, and in the calculated network molecular weight between crosslinking points, the extended length by the monofunctional compound is $100 \times 40 / 8 = 500$. That is, the calculated network molecular weight between crosslinking points of the composition is $1,000 + 500 = 1,500$.

Based on the above, in a mixture containing $M_A$ mole of a monofunctional compound having a molecular weight of $W_A$, $M_B$ mole of an $f_B$-functional compound having a molecular weight of $W_B$, and $M_C$ mole of an $f_C$-functional compound having a molecular weight of $W_C$, the calculated network molecular weight between crosslinking points of the composition can be represented by the following formula.

$$\frac{\left(\dfrac{W_A M_A}{f_B M_B + f_C M_C} + \dfrac{2W_B}{f_B}\right) \times f_B M_B + \left(\dfrac{W_A M_A}{f_B M_B + f_C M_C} + \dfrac{2W_C}{f_C}\right) \times f_C M_C}{f_B M_B + f_C M_C}$$

$$= \frac{W_A M_A + 2W_B M_B + 2W_C M_C}{f_B M_B + f_C M_C}$$

It is preferable that the calculated network molecular weight between crosslinking points of the active energy ray-curable polymer composition of the present invention, which is calculated as above, is 500 or more; 800 or more is more preferable; 1,000 or more is still more preferable, while 10,000 or less is preferable; 8,000 or less is more preferable; 6,000 or less is still more preferable; 4,000 or less is yet still more preferable; and 3,000 or less is particularly preferable.

When the calculated network molecular weight between crosslinking points is 10,000 or less, the contamination resistance of the cured film obtained from the composition tends to be improved, and a balance between three-dimensional processing suitability and contamination resistance tend to become excellent, which is preferable. When the calculated network molecular weight between crosslinking points is 500 or more, the three-dimensional processing suitability of the cured film obtained tends to be improved, and a balance between three-dimensional processing suitability and contamination resistance tends to be excellent, which is preferable. It is presumed that this is because the three-dimensional processing suitability and the contamination resistance are dependent on the distance between crosslinking points in a network structure, when the distance is long, the structure is a soft and easily elongated to afford excellent three-dimensional processing suitability, and when the distance is short, the network structure is a rigid structure to afford excellent contamination resistance.

The active energy ray-curable polymer composition of the present invention may contain components other than the urethane (meth)acrylate-based oligomer. Examples of the other components include an active energy ray reactive monomer, an active energy ray-curable oligomer, a polymerization initiator, a photosensitizer, an additive, and a solvent.

In the active energy ray-curable polymer composition of the present invention, it is preferable that the content of the urethane (meth)acrylate-based oligomer is 40% by mass or more; and 60% by mass or more is more preferable, with respect to the total amount of the active energy ray reactive components including the urethane (meth)acrylate-based oligomer. The upper limit of this content is 100% by mass. When the content of the urethane (meth)acrylate oligomer is 40% by mass or more, curability becomes satisfactory and when formed into a cured product, the three-dimensional processing suitability tends to be improved without an excessive increase in the mechanical strength, which is preferable.

In the active energy ray-curable polymer composition of the present invention, the content of the urethane (meth)acrylate-based oligomer is preferably larger from a viewpoint of elongation and film forming properties and, on the other hand, is preferably smaller from a viewpoint of reducing the viscosity. From these viewpoints, it is preferable that the content of the urethane (meth)acrylate-based oligomer is 50% by mass or more; and 70% by mass or more is more preferable, with respect to the total amount of all components including other components, in addition to the aforementioned active energy ray reactive components. The upper limit of the content of the urethane (meth)acrylate-based oligomer is 100% by mass, and the content is preferably not more than that.

In the active energy ray-curable polymer composition of the present invention, it is preferable that the total content of the active energy ray reactive components including the urethane (meth)acrylate-based oligomer is 60% by mass or more; 80% by mass or more is more preferable; 90% by mass or more is still more preferable; and 95% by mass or more is particularly preferable, with respect to the total amount of the composition, because, for example, the curing rate and surface curability as a composition is excellent and tack does not remain. The upper limit of the content is 100% by mass.

As the active energy ray reactive monomer, any well-known active energy ray reactive monomer can also be used. Such an active energy ray reactive monomer is used with an aim to, for example, adjust the hydrophilicity/hydrophobicity of the urethane (meth)acrylate-based oligomer and the physical properties such as hardness and elongation of a cured product when the obtained composition is formed into a cured product. As the active energy ray reactive monomer, one type may be used alone, or two or more types may be used in mixture.

Examples of the active energy ray reactive monomer include vinyl ethers, (meth)acrylamides, and (meth)acrylates, and specifically include aromatic vinyl-based monomers such as styrene, α-methylstyrene, α-chlorostyrene, vinyltoluene and divinylbenzene; vinyl ester monomers such as vinyl acetate, vinyl butyrate, N-vinylformamide, N-vinylacetamide, N-vinyl-2-pyrrolidone, N-vinylcaprolactam and divinyl adipate; vinyl ethers such as ethyl vinyl ether and phenyl vinyl ether; allyl compounds such as diallyl phthalate, trimethylolpropane diallyl ether and allyl glycidyl ether; (meth)acrylamides such as (meth)acrylamide, N,N-dimethylacrylamide, N,N-dimethylmethacrylamide, N-methylol(meth)acrylamide, N-methoxymethyl(meth)acrylamide, N-butoxymethyl(meth)acrylamide, N-t-butyl(meth)acrylamide, (meth)acryloylmorpholine and methylenebis(meth)acrylamide; a monofunctional (meth)acrylate such as (meth)acrylic acid, methyl (meth)acrylate, ethyl (meth)acrylate, propyl (meth)acrylate, n-butyl (meth)acrylate, i-butyl (meth)acrylate, t-butyl (meth)acrylate, hexyl (meth)acrylate, 2-ethylhexyl (meth)acrylate, lauryl (meth)acrylate, stearyl (meth)acrylate, tetrahydrofurfuryl (meth)acrylate, morpholyl (meth)acrylate, 2-hydroxyethyl (meth)acrylate, 2-hydroxypropyl (meth)acrylate, 4-hydroxybutyl (meth)acrylate, glycidyl (meth)acrylate, dimethylaminoethyl (meth)acrylate, diethylaminoethyl (meth)acrylate, benzyl (meth)acrylate, cyclohexyl (meth)acrylate, phenoxyethyl (meth)acrylate, tricyclodecane (meth)acrylate, dicyclopentenyl (meth)acrylate, dicyclopentenyloxyethyl (meth)acrylate, dicyclopentanyl (meth)acrylate, allyl (meth)acrylate, 2-ethoxyethyl (meth)acrylate, isobornyl (meth)acrylate and phenyl (meth)acrylate; and a polyfunctional (meth)acrylate such as ethylene glycol di(meth)acrylate, diethylene glycol di(meth)acrylate, triethylene glycol di(meth)acrylate, tetraethylene glycol di(meth)acrylate, polyethylene glycol di(meth)acrylate (n=from 5 to 14), propylene glycol di(meth)acrylate, dipropylene glycol di(meth)acrylate, tripropylene glycol di(meth)acrylate, tetrapropylene glycol di(meth)acrylate, polypropylene glycol di(meth)acrylate (n=from 5 to 14), 1,3-butylene glycol di(meth)acrylate, 1,4-butanediol di(meth)acrylate, polybutylene glycol di(meth)acrylate (n=from 3 to 16), poly(1-methyl butylene glycol) di(meth)acrylate (n=from 5 to 20), 1,6-hexanediol di(meth)acrylate, 1,9-nonanediol di(meth)acrylate, neopentyl glycol di(meth)acrylate, neopentyl glycol hydroxypivalate di(meth)acrylic acid ester, dicyclopentanediol di(meth)acrylate, tricyclodecane di(meth)acrylate, trimethylolpropane tri(meth)acrylate, pentaerythritol tri(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, trimethylolpropane trioxyethyl (meth)acrylate, trimethylolpropane trioxypropyl (meth)acrylate, trimethylolpropane polyoxyethyl (meth)acrylate, trimethylolpropane polyoxypropyl (meth)acrylate, tris(2-hydroxyethyl) isocyanurate tri(meth)acrylate, tris(2-hydroxyethyl) isocyanurate di(meth)acrylate, ethylene oxide-added bisphenol A di(meth)acrylate, ethylene oxide-added bisphenol F di(meth)acrylate, propylene oxide-added bisphenol A di(meth)acrylate, propylene oxide-added bisphenol F di(meth)acrylate, tricyclodecanedimethanol di(meth)acrylate, bisphenol A epoxy di(meth)acrylate, and bisphenol F epoxy di(meth)acrylate.

Among these, a monofunctional (meth)acrylate having a ring structure in the molecule, such as (meth)acryloylmorpholine, tetrahydrofurfuryl (meth)acrylate, benzyl (meth)acrylate, cyclohexyl (meth)acrylate, trimethylcyclohexyl (meth)acrylate, phenoxyethyl (meth)acrylate, tricyclodecane (meth)acrylate, dicyclopentenyl (meth)acrylate, isobornyl (meth)acrylate and (meth)acrylamide, is preferred in the use which requires coatability, and a polyfunctional (meth)acrylate, such as 1,4-butanediol di(meth)acrylate, 1,6-hexanediol di(meth)acrylate, 1,9-nonanediol di(meth)acrylate, neopentyl glycol di(meth)acrylate, tricyclodecane di(meth)acrylate, trimethylolpropane tri(meth)acrylate, pentaerythritol

27

tri(meth)acrylate, pentaerythritol tetra(meth)acrylate, dipentaerythritol tetra(meth)acrylate, dipentaerythritol penta(meth)acrylate and dipentaerythritol hexa(meth)acrylate, is preferred in the use which requires mechanical strength of the cured product obtained.

In the active energy ray-curable polymer composition of the present invention, from the viewpoint of adjusting the viscosity of the composition and adjusting the physical properties such as hardness and elongation of the obtained cured product, the content of the active energy ray reactive monomer is preferably 50% by mass or less, more preferably 30% by mass or less, still more preferably 20% by mass or less, and particularly preferably 10% by mass or less, with respect to the total amount of the composition.

As for the active energy-ray curable oligomer, one type may be used alone, or two or more types may be used in mixture. The examples of the active energy ray curable oligomer include an epoxy (meth)acrylate-based oligomer and an acrylic (meth)acrylate oligomer.

In the active energy raycurable polymer composition of the present invention, from the viewpoint of adjusting the physical properties such as hardness and elongation of the obtained cured product, it is preferable that the content of the active energy ray reactive oligomer is 50% by mass or less; 30% by mass or less is more preferable; 20% by mass or less is still more preferable; and 10% by mass or less is particularly preferable, with respect to the total amount of the composition.

The aforementioned polymerization initiator is used mainly for the purpose of improving the initiation efficiency of polymerization reaction that proceeds by the irradiation with an active energy ray such as ultraviolet ray and electron beam. The polymerization initiator is generally a radical photopolymerization initiator that is a compound having a property of generating a radical by light, and any well-known radical photopolymerization initiator can be used. One type of the polymerization initiator may be used alone, or two or more types may be used in mixture. In addition, a radical photopolymerization initiator and a photosensitizer may be used in combination.

The examples of the radical photopolymerization initiator include benzophenone, 2,4,6-trimethylbenzophenone, 4,4-bis(diethylamino)benzophenone, 4-phenylbenzophenone, methylorthobenzoyl benzoate, thioxanthone, diethylthioxanthone, isopropylthioxanthone, chlorothioxanthone, 2-ethylanthraquinone, t-butylanthraquinone, diethoxyacetophenone, 2-hydroxy-2-methyl-1-phenylpropan-1-one, benzyl dimethyl ketal, 1-hydroxycyclohexyl phenyl ketone, benzoin methyl ether, benzoin ethyl ether, benzoin isopropyl ether, benzoin isobutyl ether, methylbenzoyl formate, 2-methyl-1-{4-(methylthio)phenyl}-2-morpholinopropan-1-one, 2,6-dimethylbenzoyldiphenylphosphine oxide, 2,4,6-trimethylbenzoyldiphenylphosphine oxide, bis(2,6-dimethoxybenzoyl)-2,4,4-trimethylpentylphosphine oxide, bis(2,4,6-trimethylbenzoyl)phenylphosphine oxide, and 2-hydroxy-1-{4-[4-(2-hydroxy-2-methylpropionyl)-benzyl]-phenyl}-2-methyl-propan-1-one.

Among these, from the viewpoint that the curing rate is high and the crosslinking density can be sufficiently increased, benzophenone, 2-hydroxy-2-methyl-1-phenylpropan-1-one, 1-hydroxycyclohexyl phenyl ketone, 2,4,6-trimethylbenzoyldiphenylphosphine oxide and 2-hydroxy-1-{4-[4-(2-hydroxy-2-methyl-propiony))-benzyl]-phenyl}-2-methyl]-propan-1-one are preferred, and 1-hydroxycyclohexyl phenyl ketone, 2,4,6-trimethylbenzoyldiphenylphosphine oxide and 2-hydroxy-1-{4-[4-(2-hydroxy-2-methylpropionyl)-benzyl]-phenyl}-2-methyl-propan-1-one are more preferable.

In the case where the active energy ray-curable polymer composition contains a compound having a cationic polymerizable group such as epoxy group together with a radical polymerizable group, as the polymerization initiator, a cationic photopolymerization initiator may be contained together with the aforementioned radical photopolymerization initiator. Also for this initiator, any well-known cationic photopolymerization initiator may be used.

In the active energy ray-curable polymer composition of the present invention, it is preferable that the content of the polymerization initiator is 10 parts by mass or less; and 5 parts by mass or less is more preferable, with respect to 100 parts by mass of the total of the active energy ray reactive components. If the content of the photopolymerization initiator is 10 parts by mass or less, reduction in the mechanical strength due to decomposed initiator is less likely to occur, which is preferable.

The photosensitizer may be used for the same purpose as the polymerization initiator. One type of the photosensitizer may be used alone, or two or more types may be used in mixture. As the photosensitizer, any of well-known photosensitizers can be used as long as the effects of the present invention are obtained. Examples of the photosensitizer include ethanolamine, diethanolamine, triethanolamine, N-methyldiethanolamine, methyl 4-dimethylaminobenzoate, ethyl 4-dimethylaminobenzoate, amyl 4-dimethylaminobenzoate, and 4-dimethylaminoacetophenone.

In the active energy ray-curable polymer composition of the present invention, it is preferable that the content of the photosensitizer is preferably 10 parts by mass or less; and 5 parts by mass or less is more preferable, with respect to 100 parts by mass of the total of the active energy ray reactive components. If the content of the photosensitizer is 10 parts by mass or less, reduction in the mechanical strength due to decreased crosslinking density is less likely to occur, which is preferable.

The additive is arbitrary, and various materials added to a composition used for the same purpose can be used as the additive. One type of the additive may be used alone, or two or more types may be used in mixture. Examples of the additive include fillers such as glass fiber, glass bead, silica, alumina, calcium carbonate, isinglass, zinc oxide, titanium oxide, mica, talc, kaolin, metal oxide, metal fiber, iron, lead and metal powder; carbon materials such as carbon fiber, carbon black, graphite, carbon nanotube and fullerenes, for example, C60 (fillers and carbon materials may be collectively referred to as "inorganic component"); modifying agents such as an antioxidant, a thermal stabilizer, an ultraviolet absorbing agent, a hindered amine light stabilizer (HALS), a fingerprint-resisting agent, a surface hydrophilizing agent, an antistatic agent, a slippage imparting agent, a plasticizer, a release agent, an antifoaming agent, a leveling agent, an antisettling agent, a surfactant, a thixotropy imparting agent, a lubricant, a flame retardant, a flame retardant aid, a polymerization inhibitor, a bulking agent and a silane coupling agent; coloring agents such as a pigment, a dye and a hue adjuster; and monomers and/or oligomers thereof, or curing agents, catalysts and curing accelerators which are necessary for the synthesis of an inorganic component.

In the active energy ray-curable polymer composition of the present invention, it is preferable that the content of the additive above is preferably 10 parts by mass or less; and 5 parts by mass or less is more preferable, with respect to 100 parts by mass of the total of the active energy ray reactive components. If the content of the additive is 10 parts by mass or less, reduction in the mechanical strength due to decreased crosslinking density is less likely to occur, which is preferable.

The solvent can be used, for example, according to the coating method for forming a coating film of an active energy ray-curable polymer composition of the present invention, so as to adjust the viscosity of the active energy ray-curable polymer composition of the present invention. One type of the solvent may be used alone, or two or more types may be used in mixture. As the solvent, any well-known solvent can be used as long as the effects of the present invention are obtained. Preferred examples of the solvent include toluene, xylene, ethyl acetate, butyl acetate, isopropanol, isobutanol, cyclohexanone, methyl ethyl ketone, and methyl isobutyl ketone. The solvent can be used usually in an amount of less than 200 parts by mass with respect to 100 parts by mass of the solid content of the active energy ray-curable polymer composition.

The method for incorporating an optional component, such as the aforementioned additive, into the active energy ray-curable polymer composition of the present invention is not particularly limited and includes conventionally known mixing and dispersion methods. In order to more unfailingly disperse the optional component, a dispersion treatment is preferably performed using a disperser. Specifically, examples of the method include a method using, for example, a twin roll, a triple roll, a bead mill, a ball mill, a sand mill, a pebble mill, a trommel mill, a sand grinder, a szegvari attritor, a planetary agitator, a high-speed impeller disperser, a high-speed stone mill, a high-speed impact mill, a kneader, a homogenizer, and an ultrasonic disperser.

The viscosity of the active energy ray-curable polymer composition of the present invention can be appropriately adjusted according to usage or a use mode of the composition. From a viewpoint of handleability, coatability, moldability, and three-dimensional formability, it is preferable that the viscosity with an E-type viscometer (rotor 1°34' $\times$ R24) at 25°C is 10 mPa·s or more; and 100 mPa·s or more is more preferable, while 100,000 mPa·s or less is preferable, and 50,000 mPa·s or less is more preferable. The viscosity of the active energy ray-curable polymer composition can be adjusted, for example, by the content of the urethane (meth)acrylate-based oligomer of the present invention or the type or blending ratio of the optional component.

As the method for coating the active energy ray-curable polymer composition of the present invention, a well-known method such as a bar coater method, an applicator method, a curtain flow coater method, a roll coater method, a spray method, a gravure coater method, a comma coater method, a reverse roll coater method, a lip coater method, a die coater method, a slot die coater method, an air knife coater method and a dip coater method may be applied, and among these, a bar coater method and a gravure coater method are preferable.

<2-29. Cured Film and Laminate>

The active energy ray-curable polymer composition of the present invention can be formed into a cured film by irradiating the composition with an active energy ray.

The active energy ray that can be used when curing the composition includes infrared ray, visible ray, ultraviolet ray, X-ray, electron beam, $\alpha$-ray, $\beta$-ray, and $\gamma$-ray. From a viewpoint of an equipment cost and productivity, an electron beam or an ultraviolet ray is preferably used. As the light source, an electron beam irradiation apparatus, an ultrahigh pressure mercury lamp, a high pressure mercury lamp, a middle pressure mercury lamp, a low pressure mercury lamp, a metal halide lamp, an Ar laser, a He-Cd laser, a solid-state laser, a xenon lamp, a high frequency induction mercury lamp, and sun light are suitable.

The irradiation dose of the active energy ray may be appropriately selected according to the kind of the active energy ray, and for example, in a case of curing the composition by electron beam irradiation, the irradiation dose is preferably from 1 to 10 Mrad. In the case of ultraviolet ray irradiation, the irradiation dose is preferably from 50 to 1,000 mJ/cm$^2$. The atmosphere during curing may be air or an inert gas such as nitrogen and argon. In addition, the irradiation may also be applied in a closed space between a film or glass and a metal mold.

Although the film thickness of the cured film may be appropriately determined according to the intended use, the lower limit is 1 $\mu$m; 3 $\mu$m is more preferable; and 5 $\mu$m is particularly preferable. It is preferable that the upper limit is 200 $\mu$m; 100 $\mu$m is more preferable; and 50 $\mu$m is particularly preferable. If the film thickness is 1 $\mu$m or more, the design properties and functionality after three-dimensional processing are satisfactorily developed, and on the other hand, if the film thickness is 200 $\mu$m or less, the internal curability and three-dimensional processing suitability are satisfactory, which is preferable. At the time of use in industry, it is preferable that the lower limit is 1 $\mu$m while it is preferable that the upper limit is 100 $\mu$m; 50 $\mu$m is more preferable; 20 $\mu$m is particularly preferable; and 10 $\mu$m is most preferable.

A laminate having, on a base material, a layer composed of the aforementioned cured film can be obtained.

The laminate is not particularly limited as long as the laminate has a layer composed of the cured film, and the laminate may have a layer other than the base material and the cured film between the base material and the cured film, or on the outside thereof. In addition, the laminate may have a plurality of base materials or cured film layers.

As the method for obtaining a laminate having a plurality of cured film layers, a well-known method can be applied, for example, a method in which all layers are laminated in the uncured state and then cured with an active energy ray, a method in which after a lower layer is cured or semi-cured with an active energy ray, an upper layer is coated thereon and the laminate is again cured with an active energy ray, or a method in which each layer is coated on a release film or a base film and then the layers are attached to each other in the uncured or semi-cured state. From a viewpoint of increasing the adherence between layers, a method of laminating layers in the uncured state and then curing the laminate with an active energy ray is preferable. As the method for laminating layers in the uncured state, a well-known method, such as sequential coating of applying a lower layer and then overlaying the lower layer by applying an upper layer, and simultaneous multilayer coating of simultaneously applying two or more layers from a multi-slit to overlay one with another, can be applied, but the present invention is not limited thereto.

Examples of the base material include articles having various shapes such as a plate, formed of a metal or various plastics, for example, polyester such as polyethylene terephthalate and polybutylene terephthalate, polyolefin such as polypropylene and polyethylene, nylon, polycarbonate, and a (meth)acrylic resin.

The cured film can be a film excellent in the contamination resistance to general home contamination, such as ink and ethanol, and hardness, and the laminate using the cured film as a coat on various base materials can be a laminate excellent in the design properties and surface protective properties.

The active energy ray-curable polymer composition of the present invention, if the calculated network molecular weight between crosslinking points is taken into consideration, can provide a cured film satisfying the flexibility for following deformation during three-dimensional processing, the elongation at break, the mechanical strength, the contamination resistance, and the hardness, all at the same time.

The active energy ray-curable polymer composition of the present invention is expected to enable a thin-film resin sheet to be simply produced by one-layer coating.

As for the elongation at break of the cured film, the value measured by cutting the cured film into a width of 10 mm and performing a tensile test by the use of a tensilon tensile tester (manufactured by Orientec, Co. Ltd., Tensilon UTM-III-100) under the conditions of a temperature of 23°C, it is preferable that a tensile speed of 50 mm/min and a chuck-to-chuck distance of 50 mm, 50% or more; 75% or more is more preferable; 100% or more is still more preferable; and 120% or more is particularly preferable.

The cured film and the laminate can be used as a film substituting for coating application and can be effectively applied to, for example, a construction decorative material for interior and exterior decoration, and various members of automobiles and home appliances.

[Examples]

Hereinafter, although the present invention will be specifically described using Examples and Comparative Examples, the present invention is not limited to these examples as long as the examples do not exceed the gist of the present invention.

The evaluation methods of respective physical values are as follows.

[Evaluation method: Polycarbonate diol]

<Quantitative Determination of Phenoxy Group Amount, Dihydroxy Compound Content and Phenol Content>

Polycarbonate diol was dissolved in CDCl$_3$, and 400 MHz $^1$H-NMR (AL-400, manufactured by JEOL Ltd.) was measured, and a phenoxy group, a dihydroxy compound and phenol were identified based on signal positions of respective components and the content of each component was calculated from the integral value. At this time, the detection limit is 100 ppm for the weight of phenol with respect to the weight of the entire samples and 0.1% by weight for a dihydroxy compound such as a dihydroxy compound 1 and a dihydroxy compound 2 in Tables 1 and 2 described below which were used as a dihydroxy compound as a raw material. The proportion of phenoxy group is determined from the ratio between an integral value for one proton portion of the phenoxy group and an integral value for one proton portion of the entire terminals, and the detection limit for the phenoxy group is 0.05% with respect to the entire terminals.

<Hydroxyl Value>

The hydroxyl value of the polycarbonate diol was measured by the method using an acetylation reagent in conformity with JIS K1557-1 (2007).

<Measurement of APHA Value>

The APHA value was measured by the comparison with a standard solution prepared by putting the polycarbonate diol in a colorimetric tube, in conformity with JIS K0071-1 (1998). Color Standard Solution 1000° (1 mgPt/mL) (manufactured by Kishida Chemical Co., Ltd.) was used as the reagent.

<Measurement of Melt Viscosity>

Polycarbonate diol was heated at 80°C and then melted and thereafter, the melt viscosity was measured at 80°C by using an E-type viscometer (DV-II+Pro, manufactured by BROOKFIELD, cone: CPE-52).

<Measurement of Glass Transition Temperature (Tg), Melting Peak Temperature and Melting Heat Quantity>

About 10 mg of polycarbonate diol was sealed in an aluminum pan, and an operation of raising and lowering the temperature from 30°C to 150°C at a rate of 20°C/min, from 150°C to -120°C at a rate of 40°C/min, and from -120°C to 120°C at a rate of 20°C/min was performed in a nitrogen atmosphere by using EXSTAR DSC6200 (manufactured by Seiko Instrument, Inc.). The glass transition temperature (Tg) was obtained from the inflection point at the time of second temperature rise, and the melting peak temperature and melting heat quantity were determined from the melting peak.

<Molar Ratio of Dihydroxy Compound after Hydrolysis and Average Carbon Number>

About 0.5 g of polycarbonate diol was precisely weighed, put in a 100 mL conical flask and dissolved by adding 5 mL of tetrahydrofuran. Next, 45 mL of methanol and 5 mL of an aqueous 25% by weight sodium hydroxide solution was added thereto. A condenser was set in a 100 mL conical flack, and hydrolysis was performed under heating for 30 minutes in a water bath at 75°C to 80°C. After allowing to be cooled at room temperature, sodium hydroxide was neutralized by adding 5 mL of 6 N hydrochloric acid to make the pH be 2 to 4. The entire amount was moved to a 100 mL measuring flask, the inside of the conical flask was washed twice with an appropriate amount of methanol, and the washed solution was also moved to the 100 mL measuring flask. An appropriate amount of methanol was added to make 100 mL, and the solution was mixed in the measuring flask. The supernatant was sampled, filtered through a filter, and analyzed by GC. As for the concentration of each dihydroxy compound, a calibration curve was previously prepared from each known dihydroxy compound as a standard substance, and % by weight was calculated from the area ratio obtained by GC. The molar ratio of each dihydroxy compound was calculated from % by weight obtained by GC and the molecular weight of the dihydroxy compound. Also, the average carbon number was calculated from the carbon number and molar ratio of each dihydroxy compound.

(Analysis Conditions)

Apparatus: Agilent 6850 (manufactured by Agilent Technologies Japan Ltd.)
Column: Agilent J&W GC column DB-WAX
Inner diameter: 0.25 mm, length: 60 m, and film thickness: 0.25 μm
Detector: Hydrogen flame ionization detector (FID)
Programmed temperature rise: 150°C (2 minutes), from 150°C to 245°C (5°C/min, 19 minutes), 245°C (2 minutes)

<Ratio of Ether group to Carbonate Group>

Hydrolysis of polycarbonate diol was performed in the same manner as the molar ratio of the hydrolyzed dihydroxy compound analyzed by GC (Gas Chromatography). The compound having an unclear structure was identified by GC-MS. A calibration curve was previously prepared from diethylene glycol and the concentration of the hydrolyzed dihydroxy compound including an ether group was calculated by % by weight from an area ratio obtained from GC. The molar ratio of each dihydroxy compound was calculated from the % by weight obtained from GC and the molecular weight of the dihydroxy compound. The ratio of containing an ether group to a carbonate group was calculated from the molar ratio of each dihydroxy compound, the molar ratio of the dihydroxy compound including an ether group, and the molecular weight of polycarbonate diol calculated from the hydroxyl value.

(Analysis Conditions)

Apparatus: Agilent 7890B (manufactured by Agilent Technologies Japan Ltd.)
Column: Agilent J&W GC column DB-WAXETR
Inner diameter: 0.25 mm, length: 30 m, and film thickness: 0.25 $\mu$m
Detector: Hydrogen flame ionization detector (FID)
Programmed temperature rise: from 100°C to 250°C (5°C/min)

<THF Residual Amount>

A solution obtained by adding 250 mg of monochloro benzene in 500 mL of N-methylpyrrolidone is used as an internal standard solution. 0.50 g of polycarbonate diol was precisely weighed and dissolved in 5 mL of the aforementioned internal standard solution weighed by a volumetric pipette. The obtained solution was analyzed by GC (Gas Chromatography). As for the concentration of THF, a calibration curve was previously prepared as a standard substance by well-known THF, and % by weight was calculated from an area ratio obtained by GC (Gas Chromatography).

(Analysis Conditions)

Apparatus: Agilent 6850 (manufactured by Agilent Technologies Japan Ltd.)
Column: Agilent J&W GC column DB-WAX
Inner diameter: 0.25 mm, length: 60 m, and film thickness: 0.25 mm Detector: Hydrogen flame ionization detector (FID)
Programmed temperature rise: from 150°C to 190°C (5 minutes), from 190°C to 245°C (40 minutes)
Injection amount: 1 $\mu$L
Injection port temperature: 200°C
Detector temperature: 245°C (FID detector)

<Moisture Amount>

About 3.0 g of polycarbonate diol was precisely weighed in equipment with low humidity such as a glove box and put in a 20 mL screw bottle, and next 12 g of dehydrated chloroform was added thereto and polycarbonate diol was dissolved with a lid of the screw bottle closed. Together with the above, as a blank, 15 g of dehydrated chloroform was put in a 20 mL screw bottle and the lid was closed. Thereafter, moisture was measured under the following analysis conditions by taking about 1.0 g from each blank and the sample with polycarbonate diol therein using a syringe.

(Analysis Conditions)

Moisture was analyzed by a coulometric titration method.

Apparatus: CA-200 (manufactured by Mitsubishi Chemical Analytech Co., Ltd.)
Anolyte: Aquamicron (AX) + dehydrated chloroform (20 vol%/Aquamicron (AX))
Catholyte: Aquamicron (CXU)

The moisture amount of polycarbonate diol was calculated from the weight of the used polycarbonate diol, the weight of chloroform, and the weight of the sample used for the moisture measurement.

<1> Moisture amount of chloroform in which a sample is dissolved (μg): Result A = Moisture of Blank [ppm] x Weight of Blank [g] x Chloroform weight of Sample [g] / Total weight of Sample [g]

<2> Moisture amount of polycarbonate diol [ppm] = (Moisture Amount of Sample [μg]- Result A[μg]) / (Weight of Sample [g]- Weight of Sample [g] x Chloroform Weight of Sample [g] / Total Weight of Sample [g])

[Evaluation method: Polyurethane]

<Measurement of Isocyanate Group Concentration>

After diluting 20 mL of a di-n-butylamine/toluene (weight ratio: 2/25) mixed solution with 90 mL of acetone, the resultant was titrated with an aqueous 0.5 N hydrochloric acid solution, and the amount of the aqueous hydrochloric acid solution required for neutralization was measured and taken as a blank value. Thereafter, from 1 to 2 g of the reaction solution was extracted, 20 mL of a di-n-butylamine/toluene mixed solution was added thereto, followed by stirring at room temperature for 30 minutes, the resultant was diluted with 90 mL of acetone, in the same manner to the blank measurement, and titrated with an aqueous 0.5 N hydrochloric acid solution, the amount of the aqueous hydrochloric acid solution required for neutralization was measured, and the amount of the remaining amine was quantitatively determined. From the volume of the aqueous hydrochloric acid solution required for neutralization, the isocyanate group concentration was determined according to the following formula.

$$\text{Isocyanate Group Concentration (\% by weight)} = A \times 42.02 / D$$

A: Isocyanate group contained in the sample used for this measurement (mol)

$$A = (B\text{-}C) \times 0.5 / 1000 \times f$$

B: Amount of aqueous 0.5 N hydrochloric acid solution required for blank measurement (mL)
C: Amount of aqueous 0.5 N hydrochloric acid solution required for this measurement (mL)
f: Titer of aqueous hydrochloric acid solution
D: Sample used for this measurement (g)

<Measurement of Solution Viscosity>

Polyurethane was dissolved in dimethylformamide to obtain a solution (concentration: 30% by weight), and the solution viscosity of the polyurethane solution was measured at 25°C by means of VISCOMETER TV-22 (manufactured by Toki Sangyo Co., Ltd.) provided with a rotor of 3° × R14.

<Measurement of Molecular Weight>

As for the molecular weight of polyurethane, a dimethylacetamide solution was prepared such that a polyurethane concentration becomes 0.14% by weight, and the number average molecular weight (Mn) and weight average molecular weight (Mw), in terms of standard polystyrene, were measured using a GPC apparatus [manufactured by Tosoh Corporation, product name: "HLC-8220" (column: TskgelGMH-XL X 2)].

<Evaluation Method of Oleic Acid Resistance of Polyurethane>

A polyurethane solution was coated on a fluororesin sheet (fluorine tape NITOFLON 900, produced by Nitto Denko Corp., thickness: 0.1 mm) by a 9.5-mil applicator, dried at 60°C for 1 hour and subsequently at 100°C for 0.5 hours, further dried at 100°C for 0.5 hours in a vacuum state and at 80°C for 15 hours, and then left standing still at a constant temperature and a constant humidity of 23°C and 55% RH for 12 hours or more, and a specimen of 3 cm × 3 cm was cut out from the obtained film, put into a glass vial having a volume of 250 ml and containing 50 ml of a test solvent, and left standing still in a constant temperature bath at 80°C in a nitrogen atmosphere for 16 hours. After the test, the front and back of the specimen was lightly wiped with a paper wiper and by performing a weight measurement, the percentage of a weight increase from before test was calculated. A weight change ratio closer to 0% indicates that the oleic acid resistance is better.

<Evaluation Method of Ethanol Resistance of Polyurethane>

A urethane film was prepared by the same method as described in <Evaluation Method of Oleic Acid Resistance of Polyurethane> above, the urethane film was cut out into a specimen of 3 cm × 3 cm. After measuring the weight of the specimen by a precision balance, the specimen was put into a glass-made schale having an inner diameter of 10 cm$\phi$ and containing 50 ml of a test solvent and immersed in the solvent at room temperature of about 23°C for 1 hour. After the test, the specimen was taken out and lightly wiped with a paper wiper and by performing a weight measurement, the percentage of a weight increase from before test was calculated. A weight change ratio closer to 0% indicates that the ethanol resistance is better.

<Evaluation Method of Ethyl Acetate Resistance of Polyurethane>

A urethane film was prepared by the same method as described in <Evaluation Method of Oleic Acid Resistance of Polyurethane> above, the urethane film was cut out into a specimen of 3 cm × 3 cm. After measuring the weight of the specimen by a precision balance, the specimen was put into a glass-made schale having an inner diameter of 10 cm$\phi$ and containing 50 ml of ethyl acetate as a test solvent and immersed in the solvent at room temperature of about 23°C for 20 minutes. After the test, the specimen was taken out and lightly wiped with a paper wiper and by performing a weight measurement, the percentage of a weight increase from before test (increase ratio) was calculated. A weight change ratio closer to 0% indicates that the ethyl acetate resistance is better.

<Measurement Method of Glass Transition Temperature (Tg)>

About 5 mg of a polyurethane film piece prepared in the same manner as in the evaluation of oleic acid resistance was sealed in an aluminum pan, and an operation of raising and lowering the temperature from -100°C to 250°C, from 250°C to -100°C, and from -100°C to 250°C, at a rate of 10°C/min, was performed in a nitrogen atmosphere by using EXSTAR DSC6200 (manufactured by Seiko Instrument, Inc.). The inflection point at the time of second temperature rise was taken as the glass transition temperature (Tg).

<Room-Temperature Tensile Test Method>

In conformity with JIS K6301 (2010), a polyurethane specimen in a strip shape having a width of 10 mm, a length of 100 mm and a thickness of about 50 $\mu$m was subjected to a tensile test by using a tensile tester [manufactured by Orientec, Co. Ltd., product name: "Tensilon UTM-III-100"] under the conditions of a chuck-to-chuck distance of 50 mm, a tensile speed of 500 mm/min and a temperature of 23°C (relative humidity: 55%), and the stress when the specimen was elongated by 100% was measured.

<Low-Temperature Tensile Test Method>

In conformity with JIS K6301 (2010), a polyurethane specimen in a strip shape having a width of 10 mm, a length of 100 mm and a thickness of about 50 $\mu$m was placed with a chuck-to-chuck distance of 50 mm in a constant temperature bath [manufactured by Shimadzu Corporation, product name: "THERMOSTATIC CHAMBER TCR2W-200T"] set to -10°C by using a tensile tester [manufactured by Shimadzu Corporation, product name: "Autograph AG-X 5 kN"]. Subsequently, the specimen was left standing still at -10°C for 3 minutes, and then subjected to a tensile test at a tensile speed of 500 mm/min. The stress when the specimen was elongated by 100% was measured. The Young's modulus was defined as a gradient of the stress value at the initial elongation, and specifically, as a stress value at an elongation of 1%.

<Evaluation of Heat Resistance>

A polyurethane film prepared in the same manner as in the evaluation of oleic acid resistance was formed into a strip shape having a width of 100 mm, a length of 100 mm and a thickness of about 50 $\mu$m and heated in a gear oven at a temperature of 120°C for 400 hours, and the weight average molecular weight (Mw) of the heated sample was measured by the method described in <Measurement of Molecular Weight> and the stress when the specimen was elongated by 100% at 23°C was measured by the method described in <Room-Temperature Tensile Test Method>. The weight average molecular weight (Mw) before heating and the change ratio (increase and decrease ratio) with respect to the stress when specimen was elongated by 100% at 23°C were calculated according to the following formula.

$$\text{Mw change ratio (\%)} = \text{Mw (after heating)} / \text{Mw (before heating)} \times 100\text{-}100$$

$$\text{Stress change ratio (\%)} = \text{stress (after heating)} / \text{stress (before heating)} \times 100\text{-}100$$

[Evaluation of Synthetic Leather]

<KES test>

A synthetic leather sample was cut into 8 cm $\times$ 20 cm and placed in KES surface tester (KES-FB4, manufactured by KATO TECH CO., LTD.) provided with a silicone rubber sensor (angle of 5 mm) under the environment of a temperature of 20°C and a humidity of 50%. The sensor was placed on the sample and caused to move on the sample by a load of 50 gf at a speed of 1 mm/sec to detect a dynamic friction coefficient (MID) and standard deviation (MMD) of the dynamic friction coefficient. In addition, a MID/MMD value was calculated by dividing a MID value by a MMD value. If the MID is large and the MID/MMD value is large, wetness and sliminess are satisfactory.

<Touch Feeling Test>

The touch feeling when fingers are made to slide on synthetic leather is evaluated as follows.

4 points: Heavy feeling such as being wet
3 points: Feeling such as slightly being wet
2 points: Slightly dried feeling
1 point: Feeling that is dried and easy to slide

<Oleic Acid Resistance Test>

A specimen in which a synthetic leather sample was cut into 2 cm $\times$ 2 cm was put into a 250 ml glass vial containing 50 ml of oleic acid and left standing still at 80°C for 72 hours with the lid closed. The specimen was taken out from the glass vial and oleic acid attached on the specimen is lightly pushed by a paper towel (Nepia stimulation absorbing kitchen towel, manufactured by Oji Nepia Co., Ltd.) to absorb the acid, the surface of the specimen was observed at this time, and the specimen having a coating film surface floated thereon is defined to have 1 point.
The specimen visually having no change in the coating surface was rubbed with the aforementioned paper towel using a constant force, and an evaluation was performed giving the following points depending on the number of floating or peeling of the coating film surface.

(Number of rubbing where peeling of the coating film surface is recognized)

5 points: 50 times or more (no peeling)
4 points: From 40 times to less than 50 times
3 points: From 30 times to less than 40 times
2 points: From 1 time to less than 30 times
1 point: 0 times

<Rubbing Resistance>

In conformity with JIS L1096-1972, two pieces of specimens having a size of 3 cm $\times$ 12 cm were cut out respectively from synthetic leather in a longitudinal direction and a horizontal direction. The obtained specimens were fixed between two grippers with an interval of 20 mm of a Scott type tester (Scott type crease-flex abrasion tester, manufactured by TOYO SEIKI SEISAKU-SHO, LTD.) in a state where the surfaces of the synthetic leather are met each other, and rubbing was carried out reciprocally by a load of 9.81 N, 1,000 times and a distance of 40 mm. As a result, the appearance change of the surfaces of the obtained specimens was evaluated as follows.

5 points: No change
4 points: Floating of the skin is slightly recognized on the leather surface.
3 points: Floating of the skin is clearly recognized on the leather surface.
2 points: Floating and a crack of the skin are generated from the leather surface.
1 point: The skin is torn and peeled off from the leather surface.

<Used Raw Materials>

The raw materials used for producing polycarbonate diol of the present Examples are as follows.

1,4-butanediol (hereinafter, may be abbreviated as 1,4BD): manufactured by Mitsubishi Chemical Corporation
1,10-decanediol (hereinafter, may be abbreviated as 1,10DD): manufactured by HOKOKU Co., Ltd.
1,6-hexanediol (hereinafter, may be abbreviated as 1,6HD): manufactured by BASF Japan Ltd.
Isosorbide (hereinafter, may be abbreviated as ISB): manufactured by ROCKET INC.
Neopentyl glycol (hereinafter, may be abbreviated as NPG): manufactured by MITSUBISHI GAS CHEMICAL COMPANY, INC.
Diphenyl carbonate (hereinafter, may be abbreviated as DPC): manufactured by Mitsubishi Chemical Corporation
Ethylene carbonate (hereinafter, may be abbreviated as EC): manufactured by Mitsubishi Chemical Corporation
Magnesium acetate tetrahydrate: manufactured by Wako Pure Chemical Industries, Ltd.
Tetrabutyl orthotitanate: manufactured by Tokyo Chemical Industry Co., Ltd.

[Production Examples 1, 2, and 5]

<Production and Evaluation of Polycarbonate Diol>

Into a 5 L glass separable flask equipped with a stirrer, a distillation trap and a pressure adjusting device, 1,4BD, 1,1 0DD, DPC, and an aqueous magnesium acetate tetrahydrate solution (concentration: 8.4 g/L) were put as raw materials respectively in the amount shown in the following Table 1. The air amount within the flask was set to 1 ppm or less by nitrogen gas substitution. The contents were heated and dissolved under stirring by raising the internal temperature to 160°C. Thereafter, the pressure was reduced to 24 kPa over 2 minutes, and then the reaction was allowed to proceed for 90 minutes while removing phenol outside the system. The reaction was continued by reducing the pressure to 9.3 kPa over 90 minutes and further to 0.7 kPa over 30 minutes, and then, the reaction was allowed to proceed for 90 minutes by raising the temperature to 170°C while removing phenol and unreacted dihydroxy compounds outside the system, thereby obtaining polycarbonate diol.

The obtained polycarbonate diol was fed to a thin-film distillation apparatus under nitrogen atmosphere at a flow rate of 20 g/min, and thin-film distillation (temperature: from 180°C to 190°C, pressure: from 40 to 67 Pa) was performed. After distillation, the pressure was recovered by nitrogen such that the air amount within the thin-film distillation apparatus is 10 ppm or less, and polycarbonate diol was previously stored in a container with nitrogen flowed therein. As the thin-film distillation apparatus, a molecular distillation apparatus MS-300 specific type manufactured by Sibata Scientific Technology Ltd. and equipped with an internal condenser having a diameter of 50 mm, a height of 200 mm, and an area of 0.0314 $m^2$ and a jacket, was used.

The evaluation results of characteristics and physical properties of the polycarbonate diol obtained by thin-film distillation are shown in Table 1 (Production Examples 1, 2, and 5).

[Example 1]

<Production and Evaluation of Polycarbonate Diol>

Into a 5 L glass separable flask equipped with a stirrer, a distillation trap and a pressure adjusting device, polycarbonate diol obtained in Production Example 1: 360 g and polycarbonate diol obtained in Production Example 2: 640 g were put, and the air amount within the flask was set to 1 ppm or less by nitrogen gas substitution. After the internal temperature was raised up to 120°C, polycarbonate diol were mixed to each other for 30 minutes by stirring under nitrogen current.

The evaluation results of characteristics and physical properties of the obtained polycarbonate diol are shown in Table 1.

<Production and Evaluation of Polyurethane>

Specific polyurethane was produced according to the following operation using polycarbonate diol obtained by the aforementioned methods.

(Prepolymer Forming Reaction)

Into a separable flask provided with a thermocouple and a cooling tube, 90.94 g of the aforementioned polycarbonate diol (hereinafter, may be abbreviated as "PCD") previously heated to 80°C and described in Example 1 was put. After immersing the flask in an oil bath at 60°C, 18.59 g of 4,4'-dicyclohexylmethane diisocyanate (hereinafter, may be abbreviated as "H12MDI", manufactured by Tokyo Chemical Industry Co., Ltd.) and 0.324 g of triisooctyl phosphite (hereinafter, may be abbreviated as "TiOP", manufactured by Tokyo Chemical Industry Co., Ltd.) as a reaction retarder were added, and the temperature was raised to 80°C over about 1 hour while stirring the contents in the flask at 60 rpm in a nitrogen atmosphere. After raising the temperature to 80°C, 5.1 mg (46.6 wt ppm with respect to the total weight of polycarbonate diol and isocyanate) of NEOSTANN U-830 (hereinafter, may be referred to as "U-830", manufactured by Nitto Kasei Co., Ltd.) was added as un urethane forming catalyst, and after heat generation was settled, the temperature of the oil bath was raised to 100°C, followed by stirring for about another 2 hours. The concentration of the isocyanate group was analyzed, and it was confirmed that the theoretical amount of isocyanate group was consumed.

(Chain Extension Reaction)

102.61 g of the obtained prepolymer (hereinafter, may be abbreviated as "PP") is diluted with 10.72 g of dehydrated toluene (manufactured by Wako Pure Chemical Industries, Ltd.). Subsequently, 221.1 g of dehydrated N,N-dimethylformamide (hereinafter, may be abbreviated as "DMF", manufactured by Wako Pure Chemical Industries, Ltd.) was added thereto, and the flask was immersed in an oil bath at 55°C, and the prepolymer was dissolved under stirring at about 200 rpm. The concentration of the isocyanate group in the prepolymer solution was analyzed, and then the flask was immersed in an oil bath set to 35°C, and 4.82 g of isophoronediamine (hereinafter, may be abbreviated as "IPDA", manufactured by Tokyo Chemical Industry Co., Ltd.), which is the necessary amount calculated from the remaining isocyanate, was partially added under stirring at 150 rpm. After stirring for about 1 hour, 0.398 g of morpholine (manufactured by Tokyo Chemical Industry Co., Ltd.) as a chain terminator was added thereto, and the resultant was further stirred for 1 hour to obtain a polyurethane solution having a viscosity of 167.3 Pa·s and a weight average molecular weight of 164,000. The evaluation results of characteristics and physical properties of this polyurethane are shown in Table 3.

[Production Example 3]

<Production and Evaluation of Polycarbonate Diol>

Into a 5 L glass separable flask equipped with a stirrer, a distillation trap and a pressure adjusting device, 1,4BD, 1,10DD, EC, and tetrabutyl orthotitanate were put as raw materials respectively in the amount shown in the following Table 1. The air amount within the flask was set to 1 ppm or less by nitrogen gas substitution. The contents were heated and dissolved under stirring by raising the internal temperature to 130°C. Thereafter, the pressure was reduced to 4.7 kPa over 2 minutes, and the reaction was allowed to proceed while reducing the pressure down to 3.3 kPa over 900 minutes. Next, ethylene carbonate: 379.7 g was added thereto, and then the reaction was allowed to proceed for 480 minutes after the temperature was changed to 180°C and the pressure was changed to 16.7 kPa. Further, after the temperature was changed to 190°C and the pressure was changed to 24.0 kPa, the pressure was reduced down to 0.7 kPa over 240 minutes, and the reaction was allowed to proceed at 0.7 kPa over 150 minutes, thereby obtaining polycarbonate diol.

The thin-film distillation was performed in the same manner as Production Example 1.

The evaluation results of characteristics and physical properties of the polycarbonate diol obtained by thin-film distillation are shown in Table 1.

[Production Example 4]

<Production and Evaluation of Polycarbonate Diol>

Into a 5 L glass separable flask equipped with a stirrer, a distillation trap and a pressure adjusting device, 1,4BD, 1,10DD, EC, and tetrabutyl orthotitanate were put as raw materials respectively in the amount shown in the following Table 1. The air amount within the flask was set to 1 ppm or less by nitrogen gas substitution. The contents were heated and dissolved under stirring by raising the internal temperature to 160°C. Thereafter, the pressure was reduced to 12.0 kPa over 2 minutes, and then the reaction was allowed to proceed for 760 minutes. Next, after ethylene carbonate: 396.0 g was added thereto, the temperature was changed to 180°C and the pressure was changed to 12.0 kPa, and then the pressure was reduced to 3.3 kPa over 380 minutes, and further the reaction was allowed to proceed at 0.7 kPa over 270 minutes, thereby obtaining polycarbonate diol.
The thin-film distillation was performed in the same manner as Production Example 1.
The evaluation results of characteristics and physical properties of the polycarbonate diol obtained by thin-film distillation are shown in Table 1.

[Comparative Example 1]

<Production and Evaluation of Polycarbonate Diol>

Into a 5 L glass separable flask equipped with a stirrer, a distillation trap and a pressure adjusting device, polycarbonate diol obtained in Production Example 3: 127 g and polycarbonate diol obtained in Production Example 4: 451 g were put, and the air amount within the flask was set to 1 ppm or less by nitrogen gas substitution. After the internal temperature was raised up to 120°C, polycarbonate diol were mixed to each other for 30 minutes by stirring under nitrogen current.
The evaluation results of characteristics and physical properties of the obtained polycarbonate diol are shown in Table 1.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 1 and the input amount of each raw material was changed to the input amount shown in Table 3 respectively. The characteristics and physical properties of this polyurethane are shown in Table 3.

[Comparative Example 2]

<Production and Evaluation of Polycarbonate Diol>

Into a 5 L glass separable flask equipped with a stirrer, a distillation trap and a pressure adjusting device, 1,6HD, ISB, DPC, and an aqueous magnesium acetate tetrahydrate solution (concentration: 8.4 g/L) were put as raw materials respectively in the amount shown in the following Table 1. The air amount within the flask was set to 1 ppm or less by nitrogen gas substitution. The contents were heated and dissolved under stirring by raising the internal temperature to 160°C. Thereafter, the pressure was reduced to 23 kPa over 5 minutes, and the reaction was allowed to proceed for 90 minutes while removing phenol by distillation. After the pressure was reduced down to 9.3 kPa over 90 minutes and further reduced down to 0.7 kPa over 30 minutes, the reaction was allowed to proceed for 60 minutes by raising the temperature to 171°C over 60 minutes while removing phenol and unreacted diol by distillation, thereby obtaining polycarbonate diol.
The thin-film distillation was performed in the same manner as Production Example 1.
The evaluation results of characteristics and physical properties of the polycarbonate diol obtained by thin-film distillation are shown in Table 1.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 2 and the input amount of each raw material was changed to the input amount shown in Table 3 respectively. The characteristics and physical properties of this polyurethane are shown in Table 3.

[Comparative Example 3]

<Production and Evaluation of Polycarbonate Diol>

Into a 5 L glass separable flask equipped with a stirrer, a distillation trap and a pressure adjusting device, 1,4BD, NPG, DPC, and an aqueous magnesium acetate tetrahydrate solution (concentration: 8.4 g/L) were put as raw materials respectively in the amount shown in the following Table 1. The air amount within the flask was set to 1 ppm or less by nitrogen gas substitution. The contents were heated and dissolved under stirring by raising the internal temperature to 160°C. Thereafter, the pressure was reduced to 27 kPa over 5 minutes, and the reaction was allowed to proceed for 120 minutes while removing phenol by distillation. Next, the pressure was reduced down to 0.7 kPa over 150 minutes. Thereafter, the reaction was allowed to proceed for 30 minutes under the pressure of 0.7 kPa as it is by raising the temperature to 167°C over 30 minutes, while removing phenol and unreacted diol by distillation, thereby obtaining polycarbonate diol.
The thin-film distillation was performed in the same manner as Production Example 1.
The evaluation results of characteristics and physical properties of the polycarbonate diol obtained by thin-film distillation are shown in Table 1.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 3 and the input amount of each raw material was changed to the input amount shown in Table 3 respectively. The characteristics and physical properties of this polyurethane are shown in Table 3.

[Comparative Example 4]

<Evaluation of Polycarbonate Diol>

Polycarbonate diol produced using 1,4BD and 1,6HD as raw materials ("Duranol (registered trademark)" grade: T-4672, manufactured by Asahi Kasei Chemicals Corporation) was used as polycarbonate diol.
The evaluation results of characteristics and physical properties of each polycarbonate diol are shown in Table 1.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 4 and the input amount of each raw material was changed to the input amount shown in Table 3 respectively. The characteristics and physical properties of this polyurethane are shown in Table 3.

[Production Example 6]

<Production and Evaluation of Polycarbonate Diol>

Into a 5 L glass separable flask equipped with a stirrer, a distillation trap and a pressure adjusting device, 1,4BD, 1,10DD, EC, and an aqueous magnesium acetate tetrahydrate solution (concentration: 8.4 g/L) were put as raw materials respectively in the amount shown in the following Table 2. The air amount within the flask was set to 1 ppm or less by nitrogen gas substitution. The contents were heated and dissolved under stirring by raising the internal temperature to 170°C. Thereafter, the pressure was reduced to 24 kPa over 2 minutes, and then the reaction was allowed to proceed for 300 minutes. Next, the pressure was reduced down to 17.3 kPa over 480 minutes. Thereafter, DPC: 3289.9 g was added thereto, and then the reaction was allowed to proceed for 90 minutes after the temperature was changed to 170°C and the pressure was changed to 24 kPa. Subsequently, the reaction was allowed to proceed at 0.7 kPa for 240 minutes after reducing the pressure down to 9.3 kPa over 90 minutes and further reducing the pressure down to 0.7 kPa over 30 minutes, thereby obtaining polycarbonate diol.
The thin-film distillation was performed in the same manner as Production Example 1. The evaluation results of characteristics and physical properties of the polycarbonate diol obtained by thin-film distillation are shown in Table 2.

[Example 2]

<Production and Evaluation of Polycarbonate Diol>

Into a 5 L glass separable flask equipped with a stirrer, a distillation trap and a pressure adjusting device, 1,4BD, 1,10DD, DPC, and an aqueous magnesium acetate tetrahydrate solution (concentration: 8.4 g/L) were put as raw materials respectively in the amount shown in the following Table 2. The air amount within the flask was set to 1 ppm or less by nitrogen gas substitution. The contents were heated and dissolved under stirring by raising the internal temperature to 160°C. Thereafter, the pressure was reduced to 24 kPa over 2 minutes, and then the reaction was allowed to proceed for 90 minutes while removing phenol outside the system. The reaction was continued by reducing the pressure to 9.3 kPa over 90 minutes and further to 0.7 kPa over 30 minutes, and then, the reaction was allowed to proceed for 90 minutes by raising the temperature to 170°C while removing phenol and unreacted dihydroxy compounds outside the system, thereby obtaining polycarbonate diol. The thin-film distillation was performed in the same manner as Production Example 1. The evaluation results of characteristics and physical properties of the polycarbonate diol obtained by thin-film distillation are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Example 2 and the input amount of each raw material was changed to the input amount shown in Table 3 respectively. The characteristics and physical properties of this polyurethane are shown in Table 3.

[Example 3]

<Production and Evaluation of Polycarbonate Diol>

Into a 5 L glass separable flask equipped with a stirrer, a distillation trap and a pressure adjusting device, polycarbonate diol obtained in Production Example 5: 875 g and polycarbonate diol obtained in Production Example 6: 130 g were put, and the air amount within the flask was set to 1 ppm or less by nitrogen gas substitution. After the internal temperature was raised up to 120°C, polycarbonate diol were mixed to each other for 30 minutes by stirring under nitrogen current.
The evaluation results of characteristics and physical properties of the obtained polycarbonate diol are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Example 3 and the input amount of each raw material was changed to the input amount shown in Table 3 respectively. The characteristics and physical properties of this polyurethane are shown in Table 3.

[Example 4]

<Production and Evaluation of Polycarbonate Diol>

Into a 5 L glass separable flask equipped with a stirrer, a distillation trap and a pressure adjusting device, polycarbonate diol obtained in Production Example 5: 742 g and polycarbonate diol obtained in Production Example 6: 250 g were put, and the air amount within the flask was set to 1 ppm or less by nitrogen gas substitution. After the internal temperature was raised up to 120°C, polycarbonate diol were mixed to each other for 30 minutes by stirring under nitrogen current.
The evaluation results of characteristics and physical properties of the obtained polycarbonate diol are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Example 4 and the input amount of each raw material was changed to the input amount shown in Table 3 respectively. The characteristics and physical properties of this polyurethane are shown in Table 3.

[Comparative Example 5]

<Production and Evaluation of Polycarbonate Diol>

Into a 5 L glass separable flask equipped with a stirrer, a distillation trap and a pressure adjusting device, polycarbonate diol obtained in Production Example 5: 241 g and polycarbonate diol obtained in Production Example 6: 362 g were put, and the air amount within the flask was set to 1 ppm or less by nitrogen gas substitution. After the internal temperature was raised up to 120°C, polycarbonate diol were mixed to each other for 30 minutes by stirring under nitrogen current.

The evaluation results of characteristics and physical properties of the obtained polycarbonate diol are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 5 and the input amount of each raw material was changed to the input amount shown in Table 3 respectively. The characteristics and physical properties of this polyurethane are shown in Table 3.

[Example 5]

<Production and Evaluation of Polycarbonate Diol>

Into a 5 L glass separable flask equipped with a stirrer, a distillation trap and a pressure adjusting device, 1,4BD, DPC, and an aqueous magnesium acetate tetrahydrate solution (concentration: 8.4 g/L) were put as raw materials respectively in the amount shown in the following Table 2. The air amount within the flask was set to 1 ppm or less by nitrogen gas substitution. The contents were heated and dissolved under stirring by raising the internal temperature to 160°C. Thereafter, the pressure was reduced to 24 kPa over 2 minutes, and then the reaction was allowed to proceed for 90 minutes while removing phenol outside the system. Next, after the pressure was reduced down to 9.3 kPa over 90 minutes and further down to 0.7 kPa over 30 minutes, the reaction was allowed to proceed for 90 minutes by raising the temperature to 170°C while removing phenol and unreacted dihydroxy compounds outside the system, thereby obtaining polycarbonate diol.

The thin-film distillation was performed in the same manner as Production Example 1. The evaluation results of characteristics and physical properties of the polycarbonate diol obtained by thin-film distillation are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Example 5 and the input amount of each raw material was changed to the input amount shown in Table 3 respectively. The characteristics and physical properties of this polyurethane are shown in Table 3.

[Production Example 7]

<Production and Evaluation of Polycarbonate Diol>

Into a 5 L glass separable flask equipped with a stirrer, a distillation trap and a pressure adjusting device, 1,4BD, EC, and an aqueous magnesium acetate tetrahydrate solution (concentration: 8.4 g/L) were put as raw materials respectively in the amount shown in the following Table 2. The air amount within the flask was set to 1 ppm or less by nitrogen gas substitution. The contents were heated and dissolved under stirring by raising the internal temperature to 170°C. Thereafter, the pressure was reduced to 24 kPa over 2 minutes, and then the reaction was allowed to proceed for 300 minutes. Next, the pressure was reduced down to 17.3 kPa over 480 minutes. Thereafter, DPC: 1177.7 g was added thereto, and then the reaction was allowed to proceed for 90 minutes after the temperature was changed to 170°C and the pressure was changed to 24 kPa. Next, after the pressure was reduced down to 9.3 kPa over 90 minutes and further reduced down to 0.7 kPa over 30 minutes, the reaction was allowed to proceed at 0.7 kPa over 240 minutes, thereby obtaining polycarbonate diol.

The thin-film distillation was performed in the same manner as Production Example 1. The evaluation results of characteristics and physical properties of the polycarbonate diol obtained by thin-film distillation are shown in Table 2.

[Comparative Example 6]

<Production and Evaluation of Polycarbonate Diol>

Into a 5 L glass separable flask equipped with a stirrer, a distillation trap and a pressure adjusting device, polycarbonate diol obtained in Example 5: 490 g and polycarbonate diol obtained in Production Example 7: 122 g were put, and the air amount within the flask was set to 1 ppm or less by nitrogen gas substitution. After the internal temperature was raised up to 120°C, polycarbonate diol were mixed to each other for 30 minutes by stirring under nitrogen current.

The evaluation results of characteristics and physical properties of the obtained polycarbonate diol are shown in Table 2.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Comparative Example 6 and the input amount of each raw material was changed to the input amount shown in Table 3 respectively. The characteristics and physical properties of this polyurethane are shown in Table 3.

[Table 1]

| | | Production Example 1 | Production Example 2 | Example 1 | Production Example 3 | Production Example 4 | Comparative Example 1 | Comparative Example 2 | Comparative Example3 | Comparative Example 4 | Production Example 5 |
|---|---|---|---|---|---|---|---|---|---|---|---|
| Input amount of raw materials for PCD polymerization | 1,4BD[g] | 1121.7 | 1159.9 | | 1378.5 | 1821.8 | | | 607.1 | | 1058.7 |
| | 1,10DD[g] | 277.7 | 195.0 | | 585.2 | | | | | | 279.2 |
| | 1,6HD[g] | | | | | | | 905.3 | | | |
| | 11 ISB[g] | | | | | | | 373.2 | | | |
| | NPG[g] | | | | | | | | 701.6 | | |
| | DPC[g] | 2802.5 | 2845.1 | | | | | 1971.5 | 2691.4 | | 2662.1 |
| | EC[g] | | | | 1963.7 | 1980.0 | | | | | |
| | Aqueous Mg catalyst solution [mL] | 7.2 | 7.1 | | | | | 13.0 | 6.9 | | 6.8 |
| | Ti catalyst [mg] | | | | 159.0 | 345.0 | | | | | |
| Appearance | | White solid | White solid | White solid | White solid | White solid | White solid | White solid | Transparent and viscous liquid | Transparent and viscous liquid | White solid |
| Structural unit (type) | Dihydroxy compound 1 | 1,4BD | 1,4BD | 1,4BD | 1,4BD | 1,4BD | 1,4BD | 1,6HD | 1,4BD | 1,4BD | 1,4BD |
| | Dihydroxy compound 2 | 1,10DD | 1,10DD | 1,10DD | 1,10DD | | 1,10DD | ISB | NPG | 1,6HD | 1,10DD |
| Ratio of dihydroxy compound 1 to dihydroxy compound 2 (molar ratio) | | 88:12 | 92:8 | 90:10 | 66:34 | | 89:11 | 78:22 | 55:45 | 70:30 | 88:12 |
| Average carbon number of dihydroxy compound after hydrolysis | | 4.7 | 4.5 | 4.6 | 6.0 | 4,0 | 4.7 | 6.0 | 4.5 | 4.6 | 4.7 |
| Phenoxy group terminal | | Undetected | Undetected | Undetected | Undetected | | Undetected | Undetected | Undetected | Undetected | Undetected |

(continued)

| | | Production Example 1 | Production Example 2 | Example 1 | Production Example 3 | Production Example 4 | Comparative Example 1 | Comparative Example 2 | Comparative Example3 | Comparative Example 4 | Production Example 5 |
|---|---|---|---|---|---|---|---|---|---|---|---|
| Hydroxyl value [mg-KOH/g] | | | | 43.1 | | | 43.1 | 53.2 | 53.9 | 55.0 | |
| APHA | | | | 40 | | | 40 | 40 | 40 | 40 | |
| Melt viscosity [mPa.s/80°C] | | | | 5960 | | | 6800 | 10100 | 6210 | 3760 | |
| Ratio of ether group to carbonate group (mol%) | | | | 0.1 | | | 6.8 | Undetected | Undetected | 2.6 | |
| Moisture amount [ppm] | | | | 70 | | | 70 | 60 | 70 | - | |
| Residual THF amount | [wt%] | | | 0.005 | | | 0.011 | - | 0.013 | 0.018 | |
| DSC | Glass transition temperature [°C] | | | -47 | | | -48 | -27 | -26 | -50 | |
| | Melting peak temperature [°C] | | | 49 | | | 46 | Undetected | Undetected | Undetected | |
| | Melting heat quantity [J/g] | | | 8.2 | | | 41.4 | Undetected | Undetected | Undetected | |
| Molecular weight and molecular weight distribution | Mn | | | 4163 | | | 4587 | 2654 | 2896 | 3521 | |
| | Mw | | | 9470 | | | 9822 | 6034 | 5473 | 7108 | |
| | Mw/Mn | | | 2.28 | | | 2.14 | 2.27 | 1.89 | 2.02 | |

EP 3 689 941 B1

44

[Table 2]

| | | Production Example 6 | Example 2 | Example 3 | Example 4 | Comparative Example 5 | Example 5 | Production Example 7 | Comparative Example 6 |
|---|---|---|---|---|---|---|---|---|---|
| Input amount of raw materials for PCD polymerization | 1,4BD[g] | 2353.2 | 1061.7 | | | | 1240.0 | 1542.8 | |
| | 1,10DD[g] | 344.7 | 280.0 | | | | | | |
| | 1,6HD[g] | | | | | | | | |
| | ISB[g] | | | | | | | | |
| | NPG[g] | | | | | | | | |
| | DPC[g] | 3289.9 | 2658.3 | | | | 2760.0 | 1177.7 | |
| | EC[g] | 805.1 | | | | | | 753.8 | |
| | Aqueous Mg catalyst solution [mL] | 9.3 | 6.8 | | | | 7.0 | 8.7 | |
| | Ti catalyst [mg] | | | | | | | | |
| Appearance | | White solid | White solid | White solid | White solid | White solid | White solid | White solid | White solid |
| Structural unit (type) | Dihydroxy compound 1 | 1,4BD | 1,4BD | 1,4BD | 1,4BD | 1,4BD | 1,4BD | 1,4BD | 1,4BD |
| | Dihydroxy compound 2 | 1.10DD | 1,10DD | 1,10DD | 1,10DD | 1,10DD | | | |
| Ratio of dihydroxy compound 1 to dihydroxy compound 2 (molar ratio) | | 87:13 | 87:13 | 87:13 | 87:13 | 87:13 | | | |
| Average carbon number of dihydroxy compound after hydrolysis | | 4.8 | 4.8 | 4.8 | 4.8 | 4.8 | 4.0 | 4.0 | 4.0 |
| Phenoxy group terminal | | Undetected | Undetected | Undetected | Undetected | Undetected | Undetected | Undetected | Undetected |
| Hydroxyl value [mg-KOH/g] | | | 55.1 | 53.4 | 51.9 | 49.3 | 55.7 | | 54.7 |
| APHA | | | 30 | 40 | 40 | 40 | 30 | | 50 |
| Melt viscosity [mPa.s/80°C] | | | 2310 | 2850 | 3300 | 3870 | 3130 | | 3180 |
| Ratio of ether group to carbonate group (mol%) | | | 0.1 | 0.4 | 0.6 | 1.0 | 0.1 | | 0.9 |

EP 3 689 941 B1

(continued)

| | | Production Example 6 | Example 2 | Example 3 | Example 4 | Comparative Example 5 | Example 5 | Production Example 7 | Comparative Example 6 |
|---|---|---|---|---|---|---|---|---|---|
| Moisture amount [ppm] | | | 40 | 70 | 90 | 70 | 80 | | 80 |
| Residual THF amount [wt%] | | | 0.004 | 0.005 | 0.004 | 0.004 | 0.019 | | 0.005 |
| DSC | Glass transition temperature [°C] | | -51 | - | -49 | -51 | -44 | | -44 |
| | Melting peak temperature [°C] | | 46 | - | 46 | 45 | 62 | | 61 |
| | Melting heat quantity [J/g] | | 4.1 | - | 3.0 | 3.0 | 39.2 | | 4.2 |
| Molecular weight and molecular weight distribution | Mn | | 3218 | - | 3453 | 3643 | 3204 | | 3040 |
| | Mw | | 6148 | - | 6986 | 7250 | 5966 | | 6153 |
| | Mw/Mn | | 1.91 | - | 2.02 | 1.99 | 1.86 | | 2.02 |

[Table 3]

| PCD | Used PCD | Example 1 | Comparative Example 1 | Comparative Example 2 | Comparative Example 3 | Comparative Example 4 | Example 2 | Example 3 | Example 4 | Comparative Example 5 | Example 5 | Comparative Example 6 |
|---|---|---|---|---|---|---|---|---|---|---|---|---|
| PCD | PCD molecular weight after thin-film distillation | 2604 | 2604 | 2109 | 2082 | 2040 | 2036 | 2101 | 2162 | 2276 | 2014 | 2053 |
| | Ether bond content [mol%] | 0.1 | 6.8 | Undetected | Undetected | 2.6 | 0.1 | 0.4 | 0.6 | 1.0 | 0.1 | 0.9 |
| Prepolymer forming reaction | PCD[g] | 90.9 | 90.1 | 91.9 | 91.8 | 90.0 | 94.0 | 76.2 | 91.8 | 90.7 | 94.0 | 89.9 |
| | H12MDI[g] | 18.6 | 18.3 | 23.1 | 23.4 | 23.3 | 22.9 | 19.4 | 22.5 | 21.2 | 23.3 | 23.3 |
| | TiOP[g] | 0.32 | 0.32 | 0.35 | 0.35 | 0.34 | 0.36 | 0.30 | 0.35 | 0.35 | 0.38 | 0.35 |
| | U-830 [g] | 0.0051 | 0.0073 | 0.0058 | 0.0076 | 0.0047 | 0.0050 | 0.0112 | 0.0760 | 0.0065 | 0.0124 | 0.0087 |
| Chain extension reaction | Prepolymer [g] | 102.6 | 97.2 | 107.4 | 109.5 | 100.8 | 105.9 | 85.8 | 100.8 | 97.6 | 109.1 | 102.3 |
| | IPDA[g] | 4.8 | 4.6 | 6.1 | 0.4 | 6.1 | 6.0 | 5.0 | 5.7 | 97.6 5.2 | 6.3 | 6.2 |
| | Toluene [g] | 10.7 | 10.6 | 11.8 | 11.2 | 10.2 | 12.2 | 10.0 | 12.5 | 11.7 | 12.4 | 12.6 |
| | DMF[g] | 221.1 | 216.3 | 238.8 | 244.4 | 224.6 | 243.8 | 198.9 | 231.4 | 224.2 | 249.6 | 235.1 |
| | Morpholine [g] | 0.40 | 0.48 | 0.67 | 0.30 | 0.79 | 0.41 | 0.41 | 0.45 | 0.39 | 0.40 | 0.40 |
| Polyurethane solution | Melt viscosity [Pa.s/25°C] | 167.3 | 200.7 | - | 111.0 | 162.0 | 155.5 | 147.5 | 158.4 | 183.4 | 188.8 | 191.7 |
| | Weight average molecular weight in terms of polystyrene | 164,000 | 183,000 | 126,000 | 201,000 | 138,000 | 173,000 | 166,000 | 170,000 | 183,000 | 168,000 | 183,000 |
| | Glass transition temperature [°C] | -34 | -35 | - | -15 | -34 | -33 | -33 | -33 | -33 | -28 | -29 |

47

| | Used PCD | Example 1 | Comparative Example 1 | Comparative Example 2 | Comparative Example 3 | Comparative Example 4 | Example 2 | Example 3 | Example 4 | Comparative Example 5 | Example 5 | Comparative Example 6 |
|---|---|---|---|---|---|---|---|---|---|---|---|---|
| Physical properties etc. of polyurethane | 100% modulus at 23°C [MPa] | 4.3 | 4.0 | 18.4 | 10.4 | 7.1 | 5.3 | 5.8 | 5.6 | 5.3 | 5.8 | 5.8 |
| | 100% modulus at -10°C [Mpa] | 8.3 | 8.0 | - | 35.5 | 13.0 | 10.5 | 12.4 | 10.9 | 10.9 | 15.3 | 16.1 |
| | Weight change ratio of oleic acid resistance at 80°C [%] | 27 | 33 | 34 | 41 | 32 | 30 | 32 | 34 | 36 | 25 | 24 |
| | Weight change ratio of ethanol resistance at room temperature [%] | 17 | 19 | 18 | 30 | 20 | 22 | 23 | 22 | 21 | 18 | 20 |
| | Weight change ratio of ethyl acetate resistance at room temperature [%] | 127 | 149 | 63 | 111 | - | 115 | 119 | 132 | 144 | 110 | 111 |
| | Change ratio of weight average molecular weight in terms of polystyrene after heat resistance test [%] | 93 | 174 | - | - | 129 | - | - | - | - | - | - |

(continued)

| Used PCD | Example 1 | Comparative Example 1 | Comparative Example 2 | Comparative Example 3 | Comparative Example 4 | Example 2 | Example 3 | Example 4 | Comparative Example 5 | Example 5 | Comparative Example 6 |
|---|---|---|---|---|---|---|---|---|---|---|---|
| Retention ratio of 100% modulus after heat resistance (23°C) test [%] | +5% | +13% | - | - | - | -1% | -2% | -2% | -7% | - | +16% |

According to comparisons between Example 1 and Comparative Example 1 in Table 3, and comparison between Examples 2, 3, and 4 and Comparative Example 5, it is understood that while flexibility of urethane using the polycarbonate diol in which the ratio of an ether group with respect to a carbonate group is 0.1 mol% to 0.7 mol% is maintained, the urethane has excellent ethyl acetate resistance or oleic acid resistance and maintains 100% modulus in a heat resistance test as well. In addition, the polycarbonate diol in which dihydroxy compounds are only composed of 1,4-butanediol and which is used in Example 5 and Comparative Example 6 imparts high chemical resistance to polyurethane, but it is understood that 100% modulus of the polyurethane of Comparative Example 2 having a large amount of ether groups is greatly changed after the heat resistance test. Further, it is understood that flexibility of the PCD using dihydroxy compounds other than linear dihydroxy compounds is decreased at room temperature and low temperature by Comparative Examples 2 and 3 in Table 3.

[Example 6]

<Production of Polycarbonate Diol using Polyurethane for Synthetic Leather and Evaluation of Synthetic Leather>

Into a 5 L glass separable flask equipped with a stirrer, a distillation trap and a pressure adjusting device, 1,4BD: 975.8 g, 1,10DD: 414.2 g, DPC: 2709.9 g, and an aqueous magnesium acetate tetrahydrate solution (concentration: 8.4 g/L, and magnesium acetate tetrahydrate: 55 mg) (hereinafter, referred to as "aqueous catalyst solution"): 6.7 mL were put as raw materials respectively. The air amount within the flask was set to 1 ppm or less by nitrogen gas substitution. The contents were heated and dissolved under stirring by raising the internal temperature to 160°C. Thereafter, the pressure was reduced to 24 kPa over 2 minutes, and then the reaction was allowed to proceed for 90 minutes while removing phenol outside the system. Next, the reaction was continued by reducing the pressure to 9.3 kPa over 90 minutes and further to 0.7 kPa over 30 minutes, and then, the reaction was allowed to proceed for 60 minutes by raising the temperature to 170°C while removing phenol and unreacted dihydroxy compounds outside the system, thereby obtaining a polycarbonate diol-containing composition.

The obtained polycarbonate diol-containing composition was fed to a thin-film distillation apparatus under nitrogen atmosphere at a flow rate of 20 g/min, and thin-film distillation (temperature: from 180°C to 190°C, pressure: from 40 to 67 Pa) was performed. After distillation, the pressure of the thin-film distillation apparatus was recovered by nitrogen and then polycarbonate diol was previously stored in a container with nitrogen flowed therein. As the thin-film distillation apparatus, a molecular distillation apparatus MS-300 specific type manufactured by Sibata Scientific Technology Ltd., and equipped with an internal condenser having a diameter of 50 mm, a height of 200 mm and an area of 0.0314 m$^2$ and a jacket, was used. The same procedure was carried out in the following examples and comparative examples.

The evaluation results of characteristics and physical properties of the polycarbonate diol obtained by thin-film distillation are shown in Table 4.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Example 6 and the input amount of each raw material was changed to the input amount shown in Table 5 respectively. The characteristics and physical properties of this polyurethane are shown in Table 5.

<Production and Evaluation of Synthetic Leather>

Synthetic leather was produced according to the following operation using polycarbonate diol obtained by the aforementioned methods.

After 20 parts by weight of methyl ethyl ketone was added to the 100 parts by weight of polyurethane solution obtained by the aforementioned methods to obtain an uniform solution, the solution was coated on a released paper (manufactured by Dai Nippon Printing co., Ltd. DNTP.APT.DE-3) using a 6 mil applicator. After the paper was dried for 2 minutes by a drier at 100°C, a urethane resin solution for an adhesive <a mixture of 100 parts by weight of a urethane resin for an adhesive, 20 parts by weight of a black pigment (carbon black manufactured by DIC Corporation), 30 parts by weight of methyl ethyl ketone (MEK), and 10 parts by weight of DMF described below> was coated on the dried coating film using a 6 mil applicator, and the dried coating film was dried for 1 minutes by a drier at 100°C. A urethane layer side of a wet base described below was laid on the adhesive so that air is not incorporated and pressed by a rolling pin, and then dried for 2 minutes by a drier at 100°C and further dried for 15 minutes by a drier at 80°C. Thereafter, the resultant was allowed to be cooled at room temperature to release the released paper, thereby obtaining synthetic leather. The evaluation result of the obtained synthetic leather is shown in Table 6.

In addition, the raw materials used for preparing synthetic leather are as follows.

(Urethane resin for an adhesive)
Urethane solution having a solid content of 30% by weight
Solvent composition: MEK / DMF = Weight ratio of 40 / 60
Urethane composition: Ratio of PC-2000 / 1,4BDG / MDI = 0.9 / 1.1 / 2.0 mol

PC-2000: Polycarbonate diol molecular weight 2000
14BG: 1,4-butanediol
MDI: 4,4'-diphenylmethane diisocyanate

(Wet base)

One prepared by coagulating polycarbonate diol and a polyurethane resin including polytetramethylene glycol and MDI on a woven and knitted fabric in a wet manner.

[Examples 7 and 8]

<Production and Evaluation of Polycarbonate Diol>

A polycarbonate diol-containing composition was obtained by performing the reaction under entirely the same conditions and method as in the production of polycarbonate diol (PDC) of Example 6 except that the type and the input amount of each raw material for PCD polymerization were changed to the type and the input amount of the raw materials shown in Table 4.
The thin-film distillation was performed with respect to the obtained polycarbonate diol-containing composition in the same manner as Example 6. The evaluation results of the characteristics and physical properties of the polycarbonate diol obtained by the thin-film distillation are shown in Table 4.

<Production and Evaluation of Polyurethane>

Polyurethane was obtained by performing the reaction under entirely the same conditions and method as in the production of polyurethane of Example 1 except that the used polycarbonate diol (PCD) was changed to PCD produced in Examples and the input amount of each raw material was changed to the input amount shown in Table 5 respectively. The characteristics and physical properties of this polyurethane are shown in Table 5.

<Production and Evaluation of Synthetic Leather>

Synthetic leather was obtained by performing the reaction under entirely the same conditions and method as in the production of synthetic leather of Example 6 except that the used polyurethane was changed to polyurethane produced in respective Examples. The evaluation results of synthetic leather are shown in Table 6.

[Comparative Example 7]

<Evaluation of Polycarbonate Diol>

Polycarbonate diol produced using 1,6HD as a raw material ("Duranol (registered trademark)" grade: T-6002, manufactured by Asahi Kasei Chemicals Corporation) was used as polycarbonate diol.
The evaluation results of characteristics and physical properties of each polycarbonate diol are shown in Table 4.

<Production and Evaluation of Polyurethane>

Polyurethane was obtained by using the aforementioned polycarbonate diol as PCD, which is a production raw material of polyurethane.
Polyurethane was obtained by performing the reaction under entirely the same conditions and method as in the production of polyurethane of Example 6 except that the used polycarbonate diol as a raw material and the input amount of the raw materials were changed to the type of the raw materials and the respective input amounts thereof shown in Table 5. The evaluation results of the characteristics and physical properties of this polyurethane are shown in Table 5.

<Production and Evaluation of Synthetic Leather>

Synthetic leather was obtained by performing the reaction under entirely the same conditions and method as in the production of synthetic leather of Example 6 except that the used polyurethane was changed to polyurethane produced in respective Comparative Examples. The evaluation results of synthetic leather are shown in Table 6.

[Table 4]

| | | Example 6 | Example 7 | Example 8 | Comparative Example 7 |
|---|---|---|---|---|---|
| Input amount of raw materials for PCD polymerization | l,4BD[g] | 975.8 | 993.8 | 1120.2 | |
| | 1,10DD[g] | 414.2 | 421.9 | 277.4 | |
| | DPC[g] | 2709.9 | 2684.4 | 2802.5 | |
| | EC[g] | - | - | - | |
| | Aqueous catalyst solution [mL] | 6.7 | 6.9 | 7.2 | |
| Appearance | | White solid | White solid | White solid | White solid |
| Structural unit (type) | Dihydroxy compound 1 | 1,4BD | 1,4BD | 1,4BD | - |
| | Dihydroxy compound 2 | 1,10DD | 1,10DD | 1,10DD | 1,6HD |
| Ratio of dihydroxy compound 1 to dihydroxy compound 2 (molar ratio) | | 80:20 | 80:20 | 88:12 | - |
| Average carbon number of dihydroxy compound after hydrolysis | | 5.1 | 5.2 | 4.7 | 6 |
| Phenoxy group terminal | | Undetected | Undetected | Undetected | Undetected |
| Hydroxyl value [mg-KOH/g] | | 37.4 | 52.1 | 51.5 | 56.1 |
| Average molecular weight in terms of hydroxyl value (Mn(OHV)) | | 3001 | 2154 | 2179 | 2000 |
| APHA | | 30 | 30 | 40 | - |
| Melt viscosity [mPa·s/80°C] | | 7670 | 2590 | 2920 | 1800 |
| Ratio of ether group to carbonate group (%) | | 0.1 | 0.1 | 0.1 | - |
| DSC | Glass transition temperature [°C] | -46 | -47 | -47 | -57 |
| | Melting peak temperature [°C] | 39 | 37 | 46 | 47 |
| | Melting heat quantity [J/g] | 2.08 | 7.32 | 4.13 | 45 |
| Molecular weight and molecular weight distribution | Mn | 4863 | 3341 | 3303 | 3310 |
| | Mw | 9780 | 6539 | 7226 | 7185 |
| | Mw/Mn | 2.01 | 1.96 | 2.19 | 2.17 |

[Table 5]

| PCD | Used PCD | Example 6 | Example 7 | Example 8 | Comparative Example 7 |
|---|---|---|---|---|---|
| Prepolymer forming reaction | PCD[g] | 90.00 | 82.11 | 90.30 | 94.07 |
| | H12MDI[g] | 16.50 | 20.40 | 22.06 | 25.77 |
| | TiOP[g] | 0.320 | 0.392 | 0.338 | 0.363 |
| | U-830[g] | 0.0050 | 0.0091 | 0.0093 | 0.0055 |
| Chain extension reaction | Prepolymer [g] | 103.59 | 94.53 | 103.59 | 109.60 |
| | IPDA[g] | 4.77 | 5.53 | 5.80 | 6.91 |
| | Toluene [g] | 9.62 | 10.35 | 10.78 | 12.38 |
| | DMF[g] | 231.86 | 213.00 | 230.93 | 243.01 |
| | Morpholine [g] | 0.597 | 0.466 | 0.561 | 0.757 |
| Polyurethane solution | Melt viscosity [Pa·s/25°C] | 181 | 125 | 122 | 203 |
| | Weight average molecular weight in terms of polystyrene | 134,000 | 151,000 | 153,000 | 142,000 |
| Physical properties etc. of polyurethane | Glass transition temperature [°C] | -40 | -36 | -34 | -41 |
| | 100% modulus at 23°C [MPa] | 3.1 | 5.3 | 6.0 | 6.1 |
| | 100% modulus at -10°C [Mpa] | 4.6 | 9.5 | 8.7 | 14.4 |
| | Weight change ratio of oleic acid resistance at 80°C [%] | 35 | 34 | - | 61 |
| | Weight change ratio of ethanol resistance at room temperature [%] | 16 | 20 | - | 26 |
| | Weight change ratio of ethyl acetate resistance at room temperature [%] | - | 58 | - | 82 |
| | Change ratio of weight average molecular weight in terms of polystyrene after heat resistance test [%] | - | 45 | - | 55 |

[Table 6]

| PCD | Used PCD | Example 6 | Example 7 | Example 8 | Comparative Example 7 |
|---|---|---|---|---|---|
| KES test | MIU | 2.15 | 2.02 | 2.43 | 1.56 |
| | MMD | 0.026 | 0.030 | 0.035 | 0.018 |
| | MIU/MMD | 84.1 | 67.8 | 69.7 | 89.0 |
| Touch feeling | Less than 4 points | 4 | 2 | 2 | 1 |
| Oleic acid resistance | Less than 5 points | 4 | 5 | 5 | 1 |
| Rubbing resistance | Less than 5 points | 4 | 4 | 4 | 3~4 |

According to the "KES test" in Table 6, it is understood that the MID value is 2.02 or more, the MID/MMD is 67.8 or more, and wetness or sliminess is satisfactory in Examples compared to Comparative Examples. Furthermore, it is understood that by the "oleic acid resistance", oleic acid resistance is apparently satisfactory in Examples compared to Comparative Examples.

The invention has been described in detail with reference to specific embodiments, it is apparent for those skilled in the art that various changes or modifications can be made without departing from the scope of the invention.

**Claims**

1. Polycarbonate diol having a hydroxyl value of 20 mg-KOH/g to 450 mg-KOH/g,

   wherein the hydroxyl value of the polycarbonate diol is measured by a method using an acetylation reagent in conformity with JIS K1557-1 (2007);
   wherein a ratio of an ether group to a carbonate group of the polycarbonate diol is 0.1 mol% to 0.7 mol%, wherein the ratio of an ether group to a carbonate group is calculated as set out in the specification, from % by weight obtained by analyzing the structure of dihydroxy compounds obtained by hydrolyzing the polycarbonate diol using GC-MS analysis and performing GC analysis of a dihydroxy compound including an ether group and the entire dihydroxy compounds; and a molecular weight of the dihydroxy compounds;
   the amount of a linear dihydroxy compound having no substituent among dihydroxy compounds obtained by hydrolyzing the polycarbonate diol is 95 mol% or more of the entire dihydroxy compounds, wherein the amount of the linear dihydroxy compound having no substituent is determined as set out in the specification;
   the average carbon number of the dihydroxy compounds is 3.5 to 5.5, wherein the average carbon number of the dihydroxy compounds is determined as set out in the specification; two or more types of the linear dihydroxy compound having no substituent are included; and
   the dihydroxy compound includes 1,3-propanediol or 1,4-butanediol.

2. The polycarbonate diol according to claim 1,
   wherein the dihydroxy compound includes 1,4-butanediol.

3. The polycarbonate diol according to claim 1 or 2,
   wherein the polycarbonate diol is produced by transesterification reaction in the presence of the dihydroxy compounds, diphenyl carbonate, and a transesterification catalyst.

4. The polycarbonate diol according to any one of claims 1 to 3,
   wherein a moisture amount contained in the polycarbonate diol is 10 wt ppm to 600 wt ppm.

5. The polycarbonate diol according to any one of claims 1 to 4,
   wherein the dihydroxy compounds include 1,4-butanediol and an amount of tetrahydrofuran contained in the polycarbonate diol is 200 wt ppm or less.

6. Polyurethane obtainable by using the polycarbonate diol according to any one of claims 1 to 5.

7. Polyurethane for synthetic leather obtainable by reacting the polycarbonate diol according to any one of claims 1 to 5, a compound containing two or more isocyanate groups in one molecule, and a chain extender.

8. Artificial leather or synthetic leather obtainable by using the polyurethane according to claim 6 or 7.

9. A coating material or coating agent obtainable by using the polyurethane according to claim 6.

10. An elastic fiber obtainable by using the polyurethane according to claim 6.

11. An aqueous polyurethane coating material obtainable by using the polyurethane according to claim 6.

12. A pressure sensitive adhesive or an adhesive obtainable by using the polyurethane according to claim 6.

13. An active energy ray curable-polymer composition obtainable by using the polycarbonate diol according to any one of claims 1 to 5.


**Patentansprüche**

1. Polycarbonatdiol mit einem Hydroxylwert von 20 mg KOH/g bis 450 mg KOH/g, wobei der Hydroxylwert des Polycarbonatdiols durch ein Verfahren gemessen wird, bei dem ein Acetylierungsreagens gemäß JIS K1557-1 (2007) verwendet wird;

wobei ein Verhältnis einer Ethergruppe zu einer Carbonatgruppe des Polycarbonatdiols 0,1 Mol% bis 0,7 Mol% beträgt, wobei das Verhältnis einer Ethergruppe zu einer Carbonatgruppe wie in der Beschreibung festgelegt berechnet wird, von dem Gew.-%, erhalten durch Analysieren der Struktur von Dihydroxyverbindungen, die durch Hydrolysieren des Polycarbonatdiols unter Verwendung einer GC-MS-Analyse und Durchführen einer GC-Analyse einer Dihydroxyverbindung, die eine Ethergruppe enthält und der gesamten Dihydroxyverbindungen, erhalten werden; und einem molekularen Gewicht der Dihydroxyverbindungen;

wobei die Menge einer linearen Dihydroxyverbindung, die keinen Substituenten unter Dihydroxyverbindungen, die durch Hydrolysieren des Polycarbonatdiols erhalten wurden, aufweist, 95 Mol% oder mehr der gesamten Dihydroxyverbindungen beträgt, wobei die Menge der linearen Dihydroxyverbindung, die keinen Substituenten aufweist, wie in der Beschreibung festgelegt bestimmt wird;

die durchschnittliche Kohlenstoffzahl der Dihydroxyverbindungen 3,5 bis 5,5 beträgt, wobei die durchschnittliche Kohlenstoffzahl der Dihydroxyverbindungen wie in der Beschreibung festgelegt bestimmt wird;

zwei oder mehr Arten der linearen Dihydroxyverbindung, die keinen Substituenten aufweisen, enthalten sind; und

die Dihydroxyverbindung 1,3-Propandiol oder 1,4-Butandiol enthält.

2. Das Polycarbonatdiol nach Anspruch 1,
   wobei die Dihydroxyverbindung 1,4-Butandiol enthält.

3. Das Polycarbonatdiol nach Anspruch 1 oder 2,
   wobei das Polycarbonatdiol durch Umesterungsreaktion in Gegenwart der Dihydroxyverbindungen, des Diphenylcarbonats und eines Umesterungskatalysators hergestellt wird.

4. Das Polycarbonatdiol nach einem der Ansprüche 1 bis 3,
   wobei eine Feuchtigkeitsmenge, die in dem Polycarbonatdiol enthalten ist, 10 Gew.-ppm bis 600 Gew.-ppm beträgt.

5. Das Polycarbonatdiol nach einem der Ansprüche 1 bis 4,
   wobei die Dihydroxyverbindungen 1,4-Butandiol enthalten und eine Menge an Tetrahydrofuran, die in dem Polycarbonatdiol enthalten ist, 200 Gew.-ppm oder weniger beträgt.

6. Polyurethan, erhältlich unter Verwendung des Polycarbonatdiols nach einem der Ansprüche 1 bis 5.

7. Polyurethan für synthetisches Leder, erhältlich durch Umsetzen des Polycarbonatdiols nach einem der Ansprüche 1 bis 5, einer Verbindung, die zwei oder mehrere Isocyanatgruppen in einem Molekül enthält und eines Kettenverlängerers.

8. Kunstleder oder synthetisches Leder, erhältlich unter Verwendung des Polyurethans nach Anspruch 6 oder 7.

9. Ein Beschichtungsmaterial oder Beschichtungsmittel, erhältlich unter Verwendung des Polyurethans nach Anspruch 6.

10. Eine elastische Faser, erhältlich unter Verwendung des Polyurethans nach Anspruch 6.

11. Ein wässriges Polyurethan-Beschichtungsmaterial, erhältlich unter Verwendung des Polyurethans nach Anspruch 6.

12. Ein Haftklebstoff oder ein Klebstoff, erhältlich unter Verwendung des Polyurethans nach Anspruch 6.

13. Eine durch aktive Energiestrahlung härtbare Polymerzusammensetzung, erhältlich unter Verwendung des Polycarbonatdiols nach einem der Ansprüche 1 bis 5.

**Revendications**

1. Polycarbonate diol ayant un indice d'hydroxyle de 20 mg KOH/g à 450 mg KOH/g, dans lequel l'indice d'hydroxyle du polycarbonate diol est mesuré par une méthode utilisant un réactif d'acétylation conformément à la norme JIS K1557-1 (2007) ;

   dans lequel le rapport d'un groupe éther à un groupe carbonate du polycarbonate diol est de 0,1 % en moles à 0,7 % en moles, dans lequel le rapport d'un groupe éther à un groupe carbonate est calculé comme indiqué dans la description à partir du pourcentage en poids obtenu par analyse de la structure de composés dihydroxy obtenus par hydrolyse du polycarbonate diol utilisant une analyse GC-MS et mise en œuvre d'une analyse GC d'un composé dihydroxy comprenant un groupe éther et des composés dihydroxy totaux ; et de la masse moléculaire des composés dihydroxy ;

la quantité de composé dihydroxy linéaire ne portant pas de substituant parmi les composés dihydroxy obtenus par hydrolyse du polycarbonate diol est de 95 % en moles ou plus des composés dihydroxy totaux, la quantité du composé dihydroxy linéaire ne portant pas de substituant étant déterminée comme indiqué dans la description ;

le nombre moyen de carbones des composés dihydroxy est de 3,5 à 5,5, dans lequel le nombre moyen de carbones des composés dihydroxy est déterminé comme indiqué dans la description ;

deux ou plus de deux types du composé dihydroxy linéaire ne portant pas de substituant sont compris ; et

le composé dihydroxy comprend le 1,3-propanediol ou le 1,4-butanediol.

2. Polycarbonate diol selon la revendication 1,
dans lequel le composé dihydroxy comprend le 1,4-butanediol.

3. Polycarbonate diol selon la revendication 1 ou 2,
dans lequel le polycarbonate diol est produit par une réaction de trans-estérification en présence des composés dihydroxy, de carbonate de diphényle, et d'un catalyseur de trans-estérification.

4. Polycarbonate diol selon l'une quelconque des revendications 1 à 3,
dans lequel la quantité d'humidité contenue dans le polycarbonate diol est de 10 ppm en poids à 600 ppm en poids.

5. Polycarbonate diol selon l'une quelconque des revendications 1 à 4,
dans lequel les composés dihydroxy comprennent le 1,4-butanediol et une quantité de tétrahydrofurane contenu dans le polycarbonate diol est de 200 ppm en poids ou moins.

6. Polyuréthane pouvant être obtenu par utilisation du polycarbonate diol selon l'une quelconque des revendications 1 à 5.

7. Polyuréthane pour cuir synthétique pouvant être obtenu par réaction du polycarbonate diol selon l'une quelconque des revendications 1 à 5, d'un composé contenant deux ou plus de deux groupes isocyanate par molécule, et d'un agent d'allongement de chaîne.

8. Cuir artificiel ou cuir synthétique pouvant être obtenu par utilisation du polyuréthane selon la revendication 6 ou 7.

9. Matériau de revêtement ou agent de revêtement pouvant être obtenu par utilisation du polyuréthane selon la revendication 6.

10. Fibre élastique pouvant être obtenue par utilisation du polyuréthane selon la revendication 6.

11. Matériau de revêtement en polyuréthane aqueux pouvant être obtenu par utilisation du polyuréthane selon la revendication 6.

12. Adhésif sensible à la pression ou adhésif pouvant être obtenu par utilisation du polyuréthane selon la revendication 6.

13. Composition de polymère durcissable par un rayonnement énergétique actif pouvant être obtenue par utilisation du polycarbonate diol selon l'une quelconque des revendications 1 à 5.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014080590 A
- JP 2012077280 A
- JP 5051428 A
- JP 2289616 A
- JP 2002070584 A
- JP 7027749 A
- JP 2013249455 A
- JP 2012184382 A
- JP 2002179758 A
- JP 2013166852 A

**Non-patent literature cited in the description**

- **MATSUNAGA KATSUJI.** Fundamentals and Applications in Polyurethanes. CMC Publishing CO., LTD, November 2006, 96-106